(19) **Europäisches Patentamt / European Patent Office / Office européen des brevets**

(11) **EP 4 783 116 A1**

(12) **EUROPEAN PATENT APPLICATION**
published in accordance with Art. 153(4) EPC

(43) Date of publication:
29.07.2026 Bulletin 2026/31

(21) Application number: 24868211.4

(22) Date of filing: 13.09.2024

(51) International Patent Classification (IPC):
*G06T 9/00* (2006.01)

(52) Cooperative Patent Classification (CPC):
G06T 9/00

(86) International application number:
PCT/JP2024/032796

(87) International publication number:
WO 2025/063134 (27.03.2025 Gazette 2025/13)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.09.2023 US 202363539674 P

(71) Applicant: **Panasonic Intellectual Property
Corporation
of America
Torrance, CA 90504 (US)**

(72) Inventors:
• **NISHI, Takahiro
Kadoma-shi, Osaka 571-0057 (JP)**
• **SUGIO, Toshiyasu
Kadoma-shi, Osaka 571-0057 (JP)**
• **IGUCHI, Noritaka
Kadoma-shi, Osaka 571-0057 (JP)**
• **ITO, Atsushi
Kadoma-shi, Osaka 571-0057 (JP)**
• **LIM, Chong Soon
Singapore 469332 (SG)**
• **WU, Zheng
Singapore 469332 (SG)**
• **TEO, Han Boon
Singapore 469332 (SG)**
• **LOI, Keng Liang
Singapore 469332 (SG)**
• **DUMANOV, Farman
Singapore 469332 (SG)**

(74) Representative: **Grünecker Patent- und
Rechtsanwälte
PartG mbB
Leopoldstraße 4
80802 München (DE)**

(54) **ENCODING DEVICE, DECODING DEVICE, ENCODING METHOD, AND DECODING METHOD**

(57) An encoding device (100) includes memory (152) and a circuit (151) having access to the memory (152). In operation, the circuit (151): for each of faces forming a three-dimensional mesh, encodes a connection type regarding a connection relationship between the face to be processed and a face not yet processed, using arithmetic encoding based on a context (S1410); in encoding a current connection type, selects the context using a first previous connection type (S1411); and selects the context according to a total number of one or more corner types when the first previous connection is a corner type, the one or more corner types being consecutively encoded up to the first previous connection type.

FIG. 48

```
        Start
          │
          ▼                    ─S1410
┌──────────────────────────────┐
│ For each face, encode connection
│  type using arithmetic encoding │
└──────────────────────────────┘
          │
          ▼
         End
```

EP 4 783 116 A1

## Description

[Technical Field]

The present disclosure relates to, for example, an encoding device.

[Background Art]

Patent Literature (PTL) 1 proposes a method and a device for encoding and decoding three-dimensional mesh data. Moreover, Non Patent Literature (NPL) 1 discloses a technique related to encoding and decoding three-dimensional mesh data.

[Citation List]

[Patent Literature]

[PTL 1] Japanese Unexamined Patent Application Publication No. 2006-187015

[Non Patent Literature]

[NPL 1] Jarek Rossignac et al., "3D Compression Made Simple: Edgebreaker on a Corner-Table", [online], [searched on January 27, 2024],<URL:https://www.cs.cmu.edu/~alla/edgebreaker_simple.pdf>

[Summary of Invention]

[Technical Problem]

There are demands for further improvement in processing of encoding three-dimensional data and the like. An object of the present disclosure is to improve processing of encoding three-dimensional data and the like.

[Solution to Problem]

An encoding device according to one aspect of the present disclosure includes: memory; and a circuit having access to the memory, wherein in operation, the circuit: for each of faces forming a three-dimensional mesh, encodes a connection type regarding a connection relationship between the face to be processed and a face not yet processed, using arithmetic encoding based on a context; in encoding a current connection type that is the connection type to be encoded, selects the context to be applied to the arithmetic encoding from a plurality of contexts, using a first previous connection type, the first previous connection type being the connection type encoded before the current connection type; and selects the context according to a total number of one or more corner types when the first previous connection type is a corner type, the one or more corner types being each the corner type and being consecutively encoded up to the first previous connection type, and the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

Note that these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

[Advantageous Effects of Invention]

The present disclosure can contribute toward improving processing of encoding three-dimensional data and the like.

[Brief Description of Drawings]

[FIG. 1]

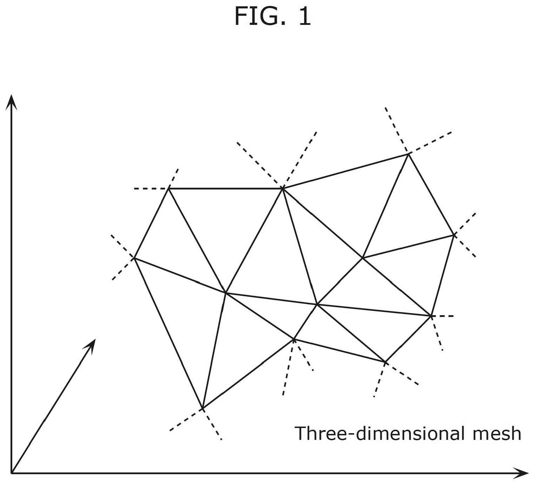

FIG. 1 is a conceptual diagram illustrating a three-dimensional mesh according to an embodiment.
[FIG. 2]

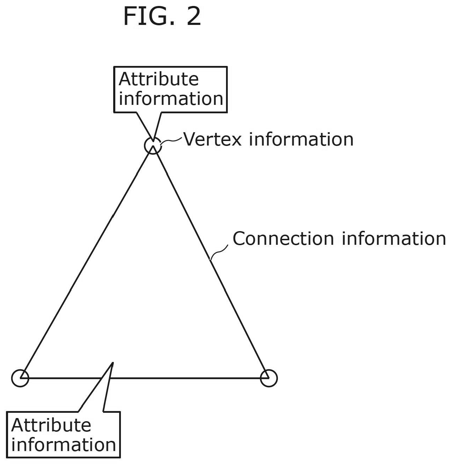

FIG. 2 is a conceptual diagram illustrating basic elements of the three-dimensional mesh according to the embodiment.
[FIG. 3]

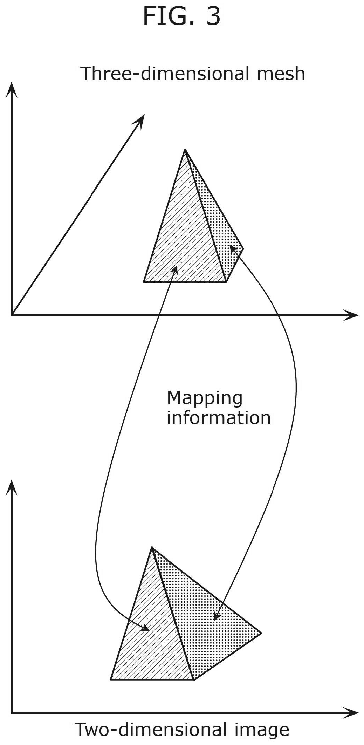

FIG. 3 is a conceptual diagram illustrating mapping according to the embodiment.
[FIG. 4]

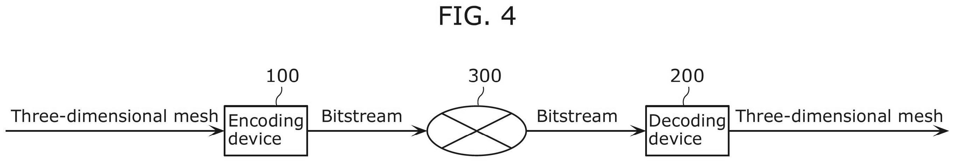

FIG. 4 is a block diagram illustrating a configuration example of an encoding/decoding system according to the embodiment.
[FIG. 5]

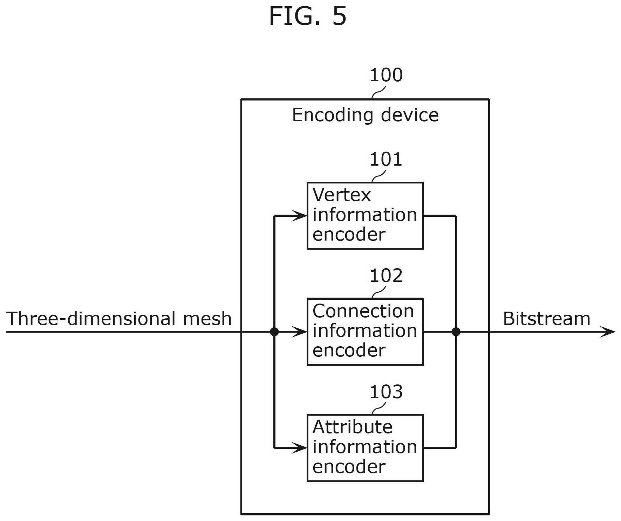

FIG. 5 is a block diagram illustrating a configuration example of an encoding device according to the embodiment.
[FIG. 6]

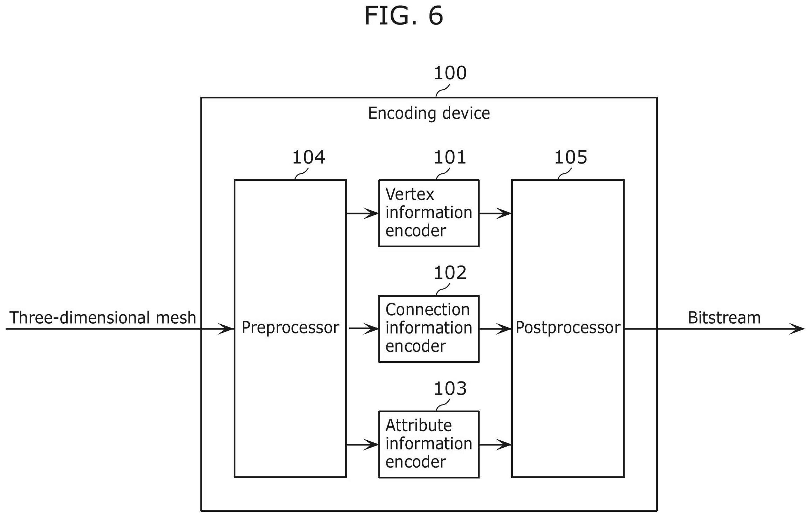

FIG. 6 is a block diagram illustrating another configuration example of the encoding device according to the embodiment.
[FIG. 7]

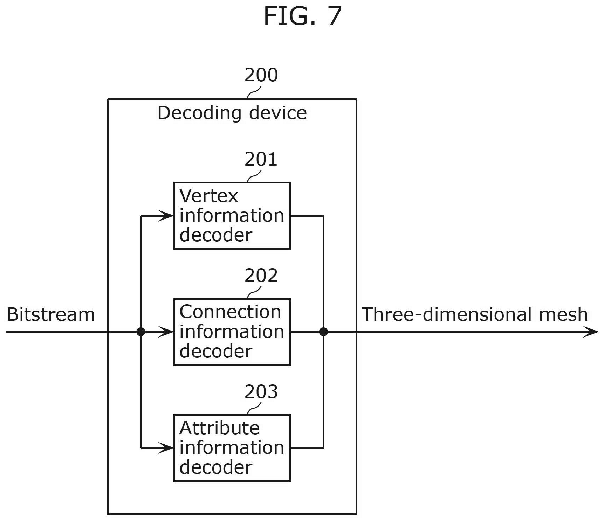

FIG. 7 is a block diagram illustrating a configuration example of a decoding device according to the embodiment.
[FIG. 8]

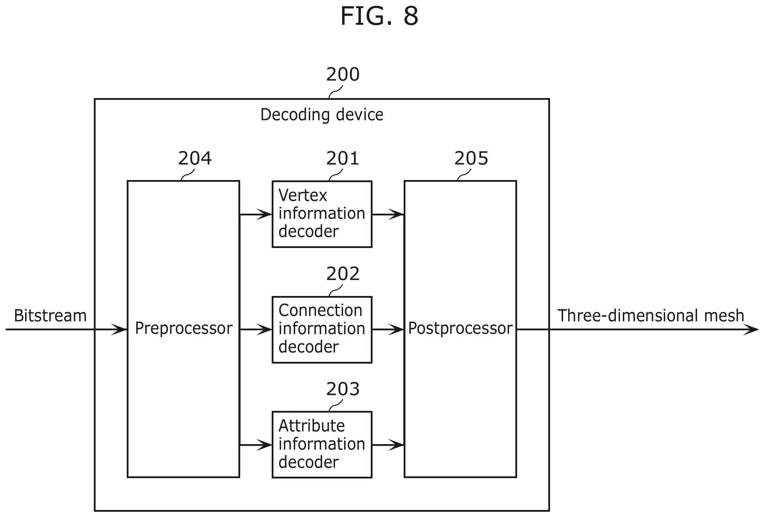

FIG. 8 is a block diagram illustrating another configuration example of the decoding device according to the embodiment.
[FIG. 9]

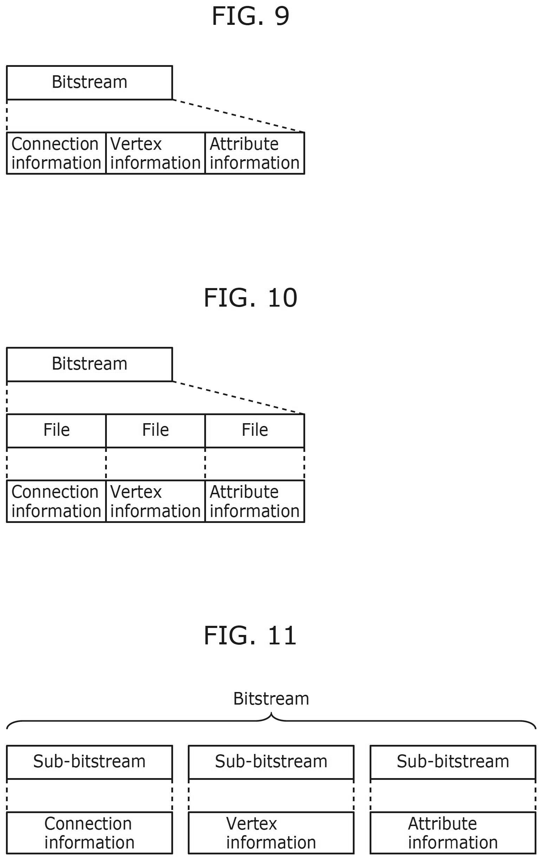

FIG. 9 is a conceptual diagram illustrating a configuration example of a bitstream according to the embodiment.

[FIG. 10]

FIG. 10 is a conceptual diagram illustrating another configuration example of the bitstream according to the embodiment.

[FIG. 11]

FIG. 11 is a conceptual diagram illustrating yet another configuration example of the bitstream according to the embodiment.

[FIG. 12]

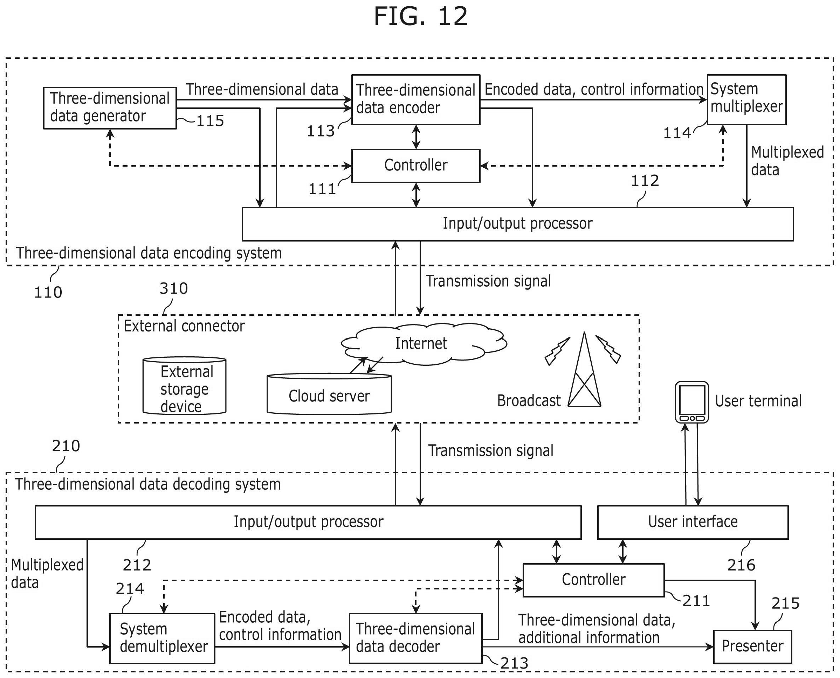

FIG. 12 is a block diagram illustrating a specific example of the encoding/decoding system according to the embodiment.

[FIG. 13]

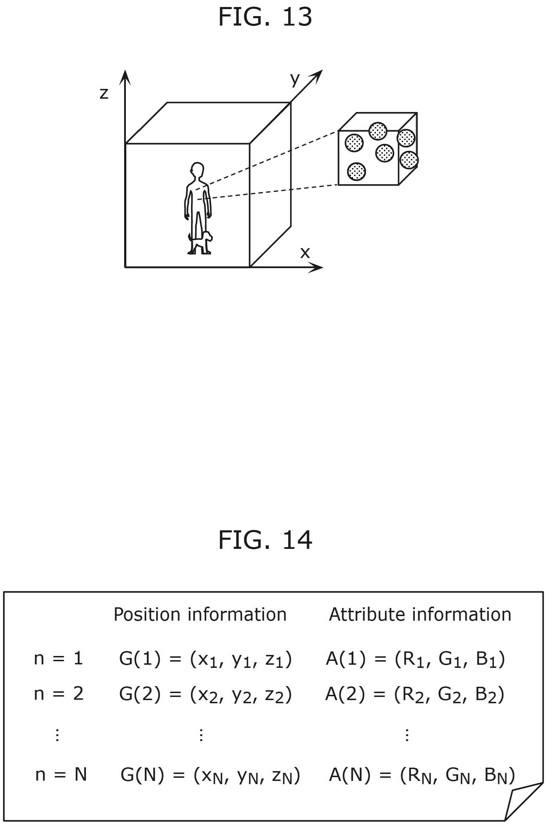

FIG. 13 is a conceptual diagram illustrating a configuration example of point cloud data according to the embodiment.

[FIG. 14]

FIG. 14 is a conceptual diagram illustrating a data file example of the point cloud data according to the embodiment.

[FIG. 15]

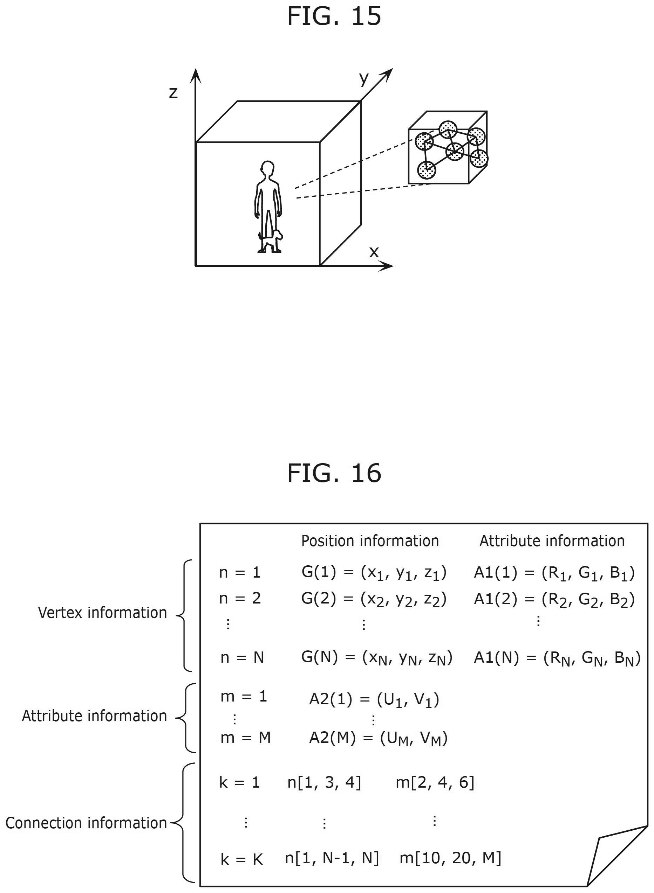

FIG. 15 is a conceptual diagram illustrating a configuration example of mesh data according to the embodiment.

[FIG. 16]

FIG. 16 is a conceptual diagram illustrating a data file example of the mesh data according to the embodiment.

[FIG. 17]

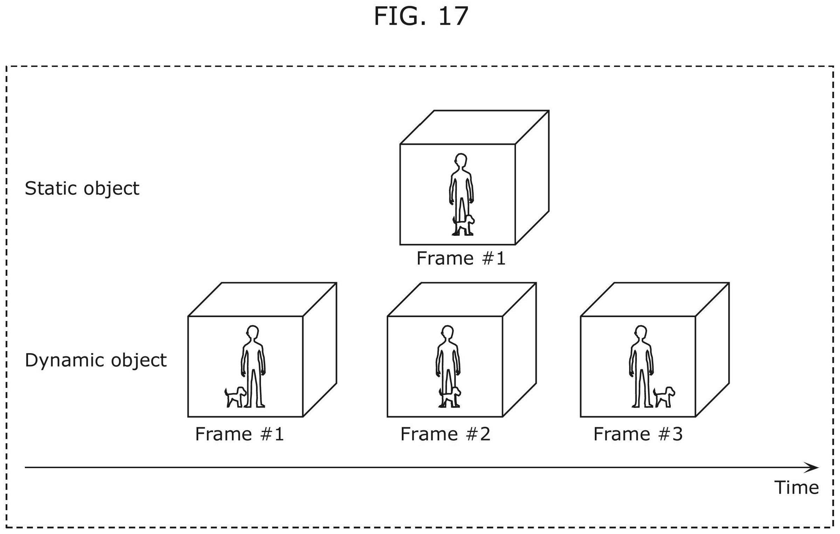

FIG. 17 is a conceptual diagram illustrating a type of three-dimensional data according to the embodiment.

[FIG. 18]

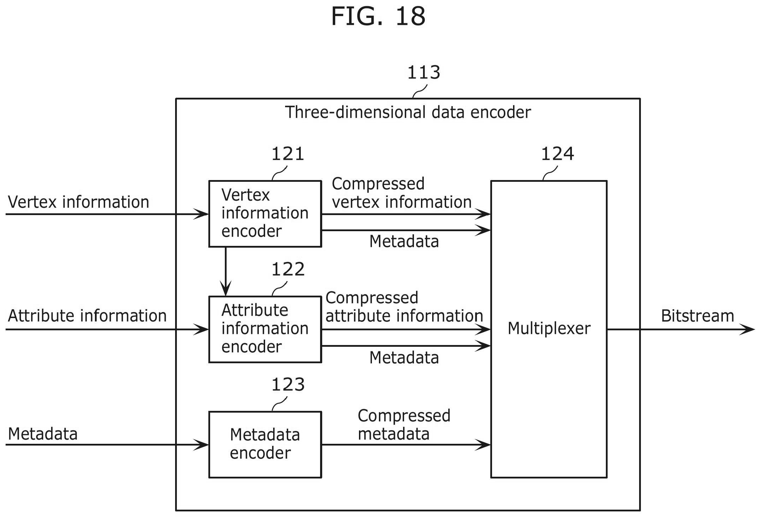

FIG. 18 is a block diagram illustrating a configuration example of a three-dimensional data encoder according to the embodiment.

[FIG. 19]

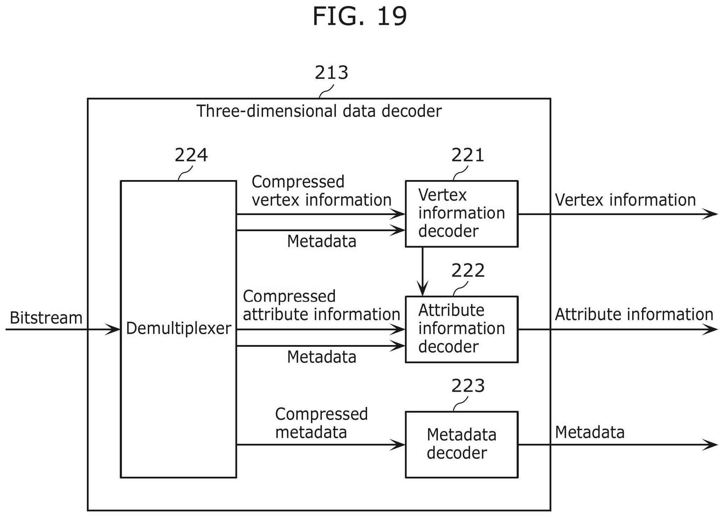

FIG. 19 is a block diagram illustrating a configuration example of a three-dimensional data decoder according to the embodiment.

[FIG. 20]

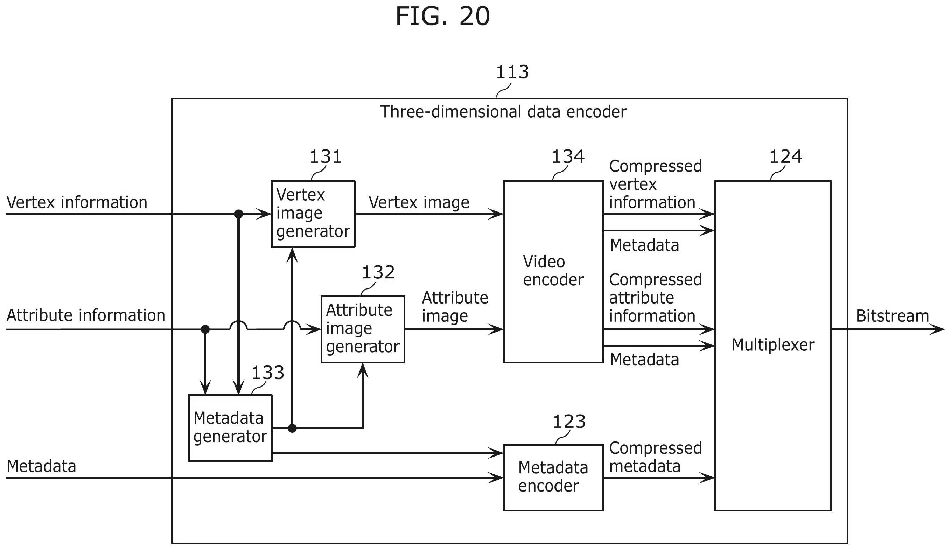

FIG. 20 is a block diagram illustrating another configuration example of the three-dimensional data encoder according to the embodiment.

[FIG. 21]

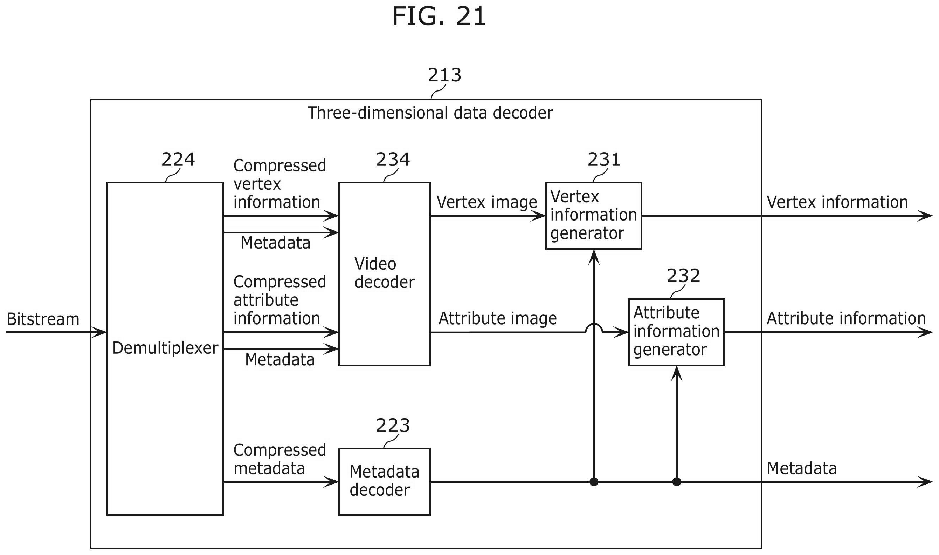

FIG. 21 is a block diagram illustrating another configuration example of the three-dimensional data decoder according to the embodiment.

[FIG. 22]

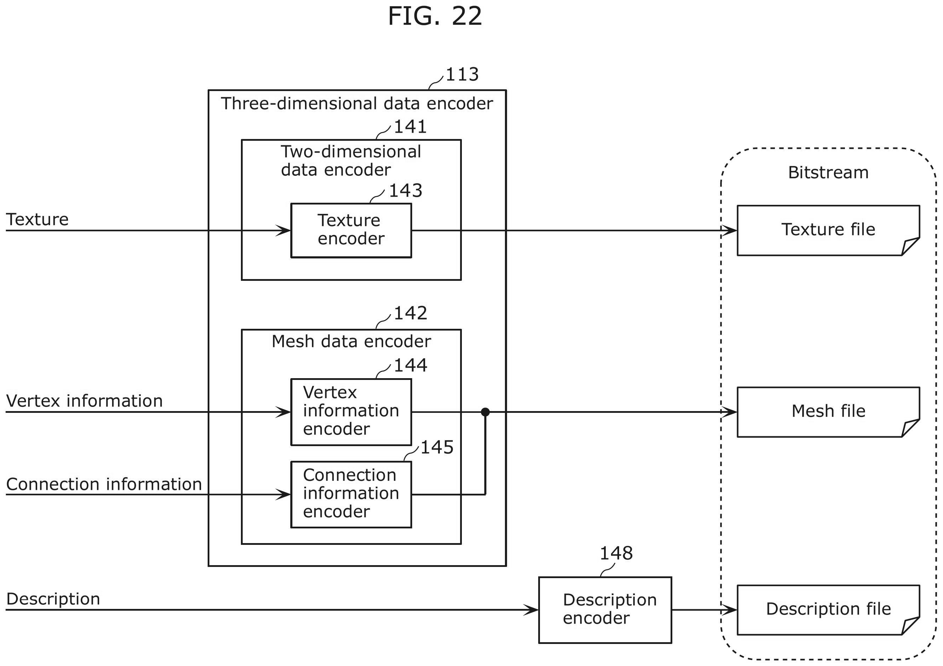

FIG. 22 is a conceptual diagram illustrating a specific example of encoding processing according to the embodiment.

[FIG. 23]

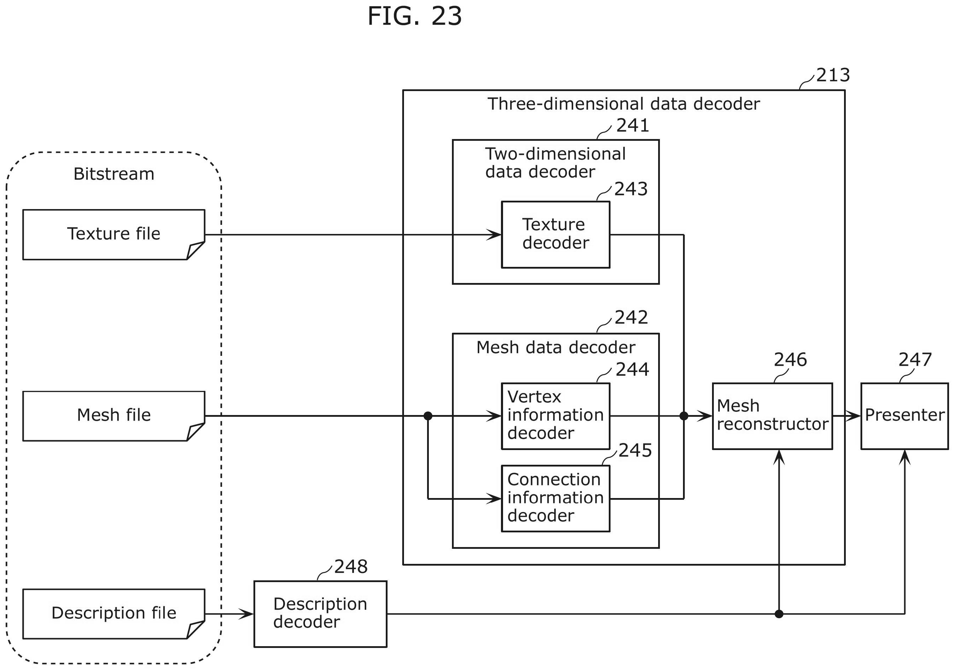

FIG. 23 is a conceptual diagram illustrating a specific example of decoding processing according to the embodiment.

[FIG. 24]

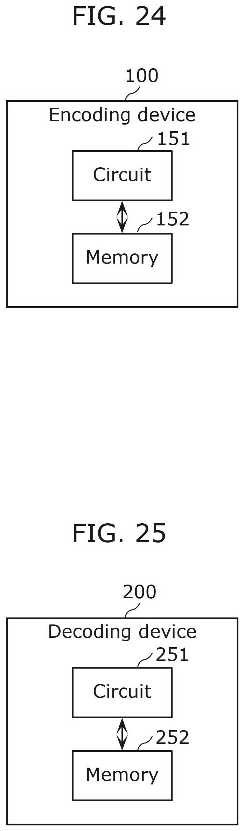

FIG. 24 is a block diagram illustrating an implementation example of the encoding device according to the embodiment.

[FIG. 25]

FIG. 25 is a block diagram illustrating an implementation example of the decoding device according to the embodiment.

[FIG. 26]

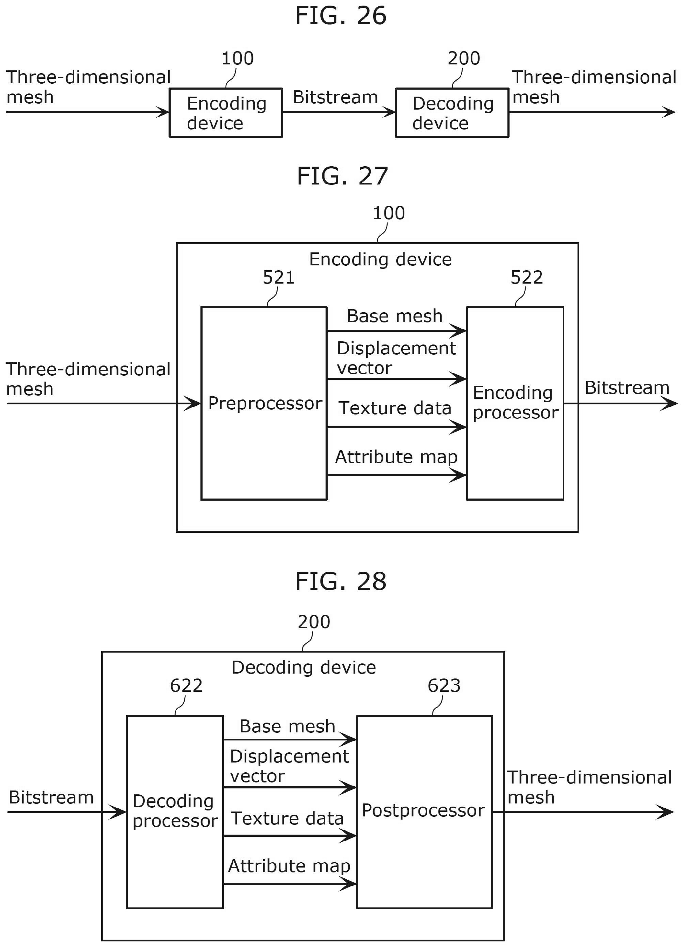

FIG. 26 is a block diagram illustrating another configuration example of the encoding/decoding system according to the embodiment.

[FIG. 27]

FIG. 27 is a block diagram illustrating another configuration example of the encoding device according to the embodiment.

[FIG. 28]

FIG. 28 is a block diagram illustrating another configuration example of the decoding device according to the embodiment.

[FIG. 29]

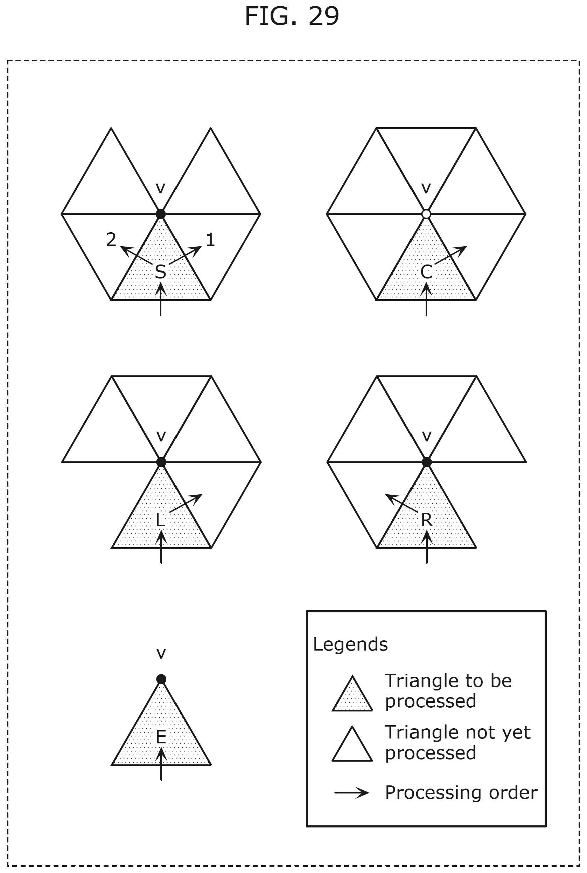

FIG. 29 is a conceptual diagram illustrating five connection types according to the embodiment.

[FIG. 30]

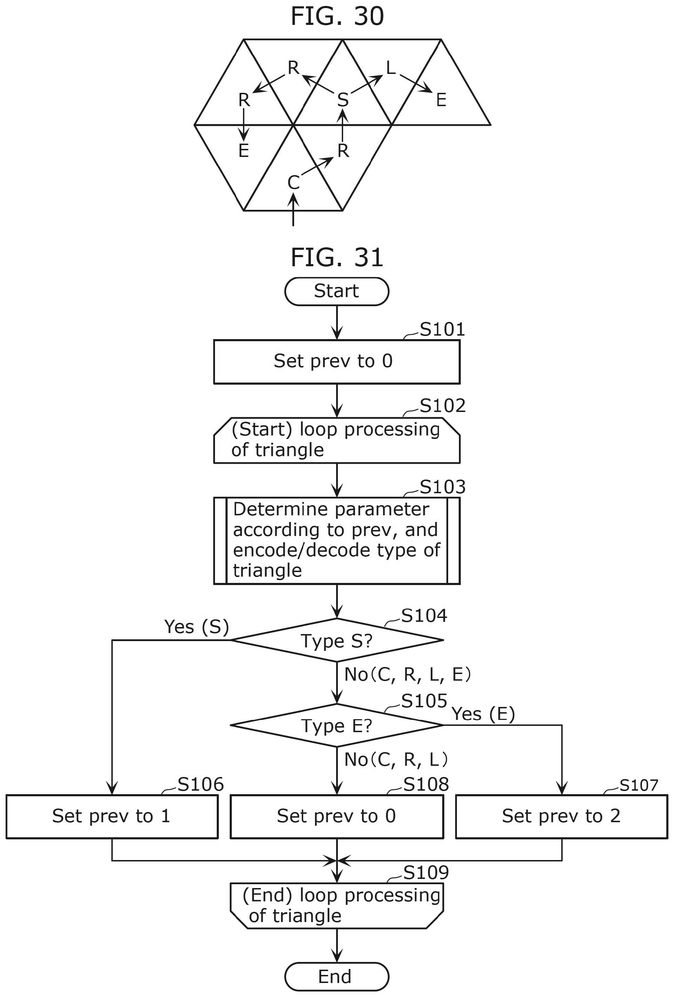

FIG. 30 is a conceptual diagram illustrating an example of connection types sequentially determined according to the embodiment.

[FIG. 31]

FIG. 31 is a flowchart illustrating encoding processing and decoding processing for a connection type according to the embodiment.

[FIG. 32]

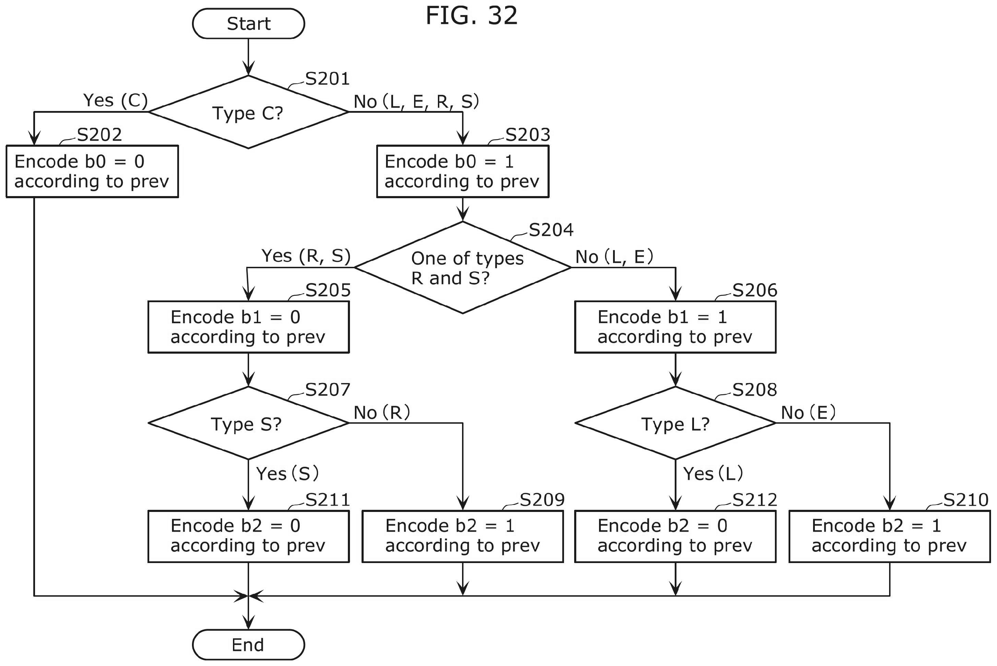

FIG. 32 is a flowchart illustrating a first specific example of the encoding of the connection type according to the embodiment.

[FIG. 33]

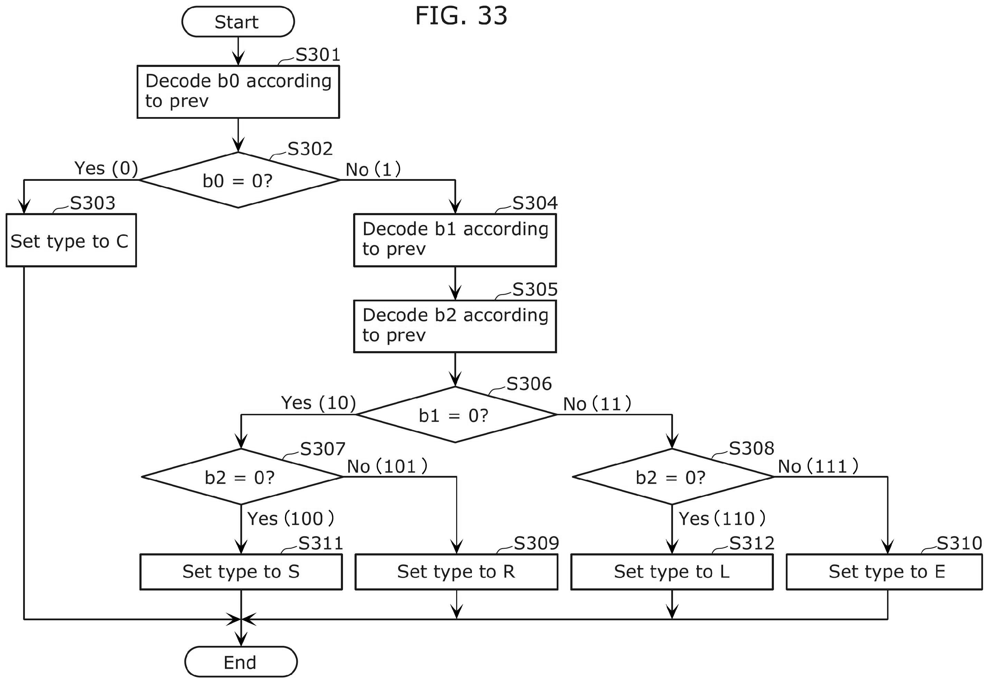

FIG. 33 is a flowchart illustrating a first specific example of decoding of the connection type according to the embodiment.

[FIG. 34]

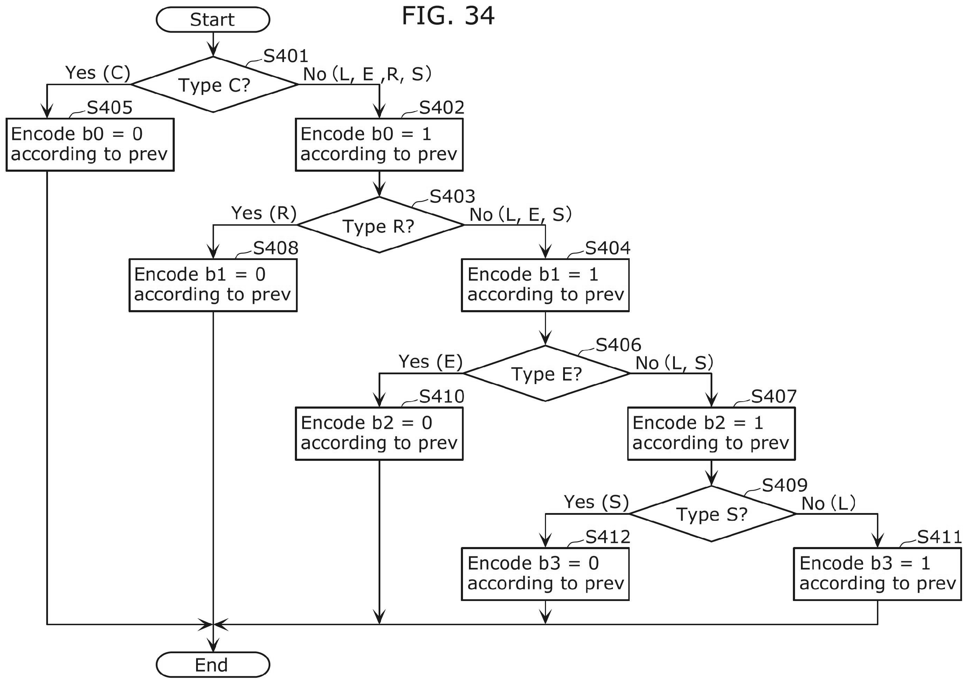

FIG. 34 is a flowchart illustrating a second specific example of the encoding of the connection type according to the embodiment.

[FIG. 35]

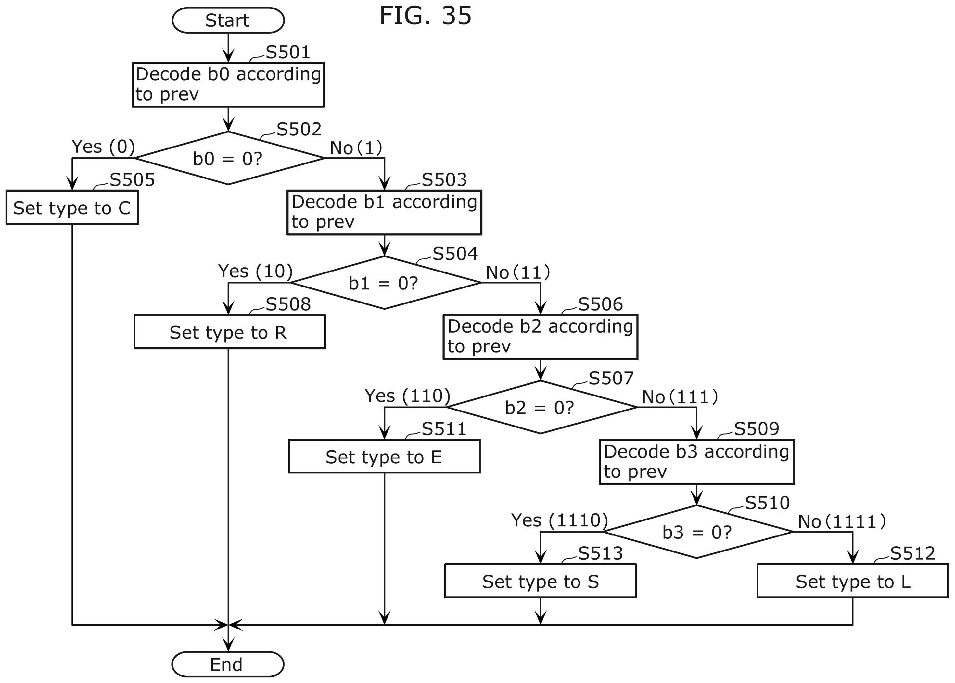

FIG. 35 is a flowchart illustrating a second specific example of the decoding of the connection type according to the embodiment.

[FIG. 36]

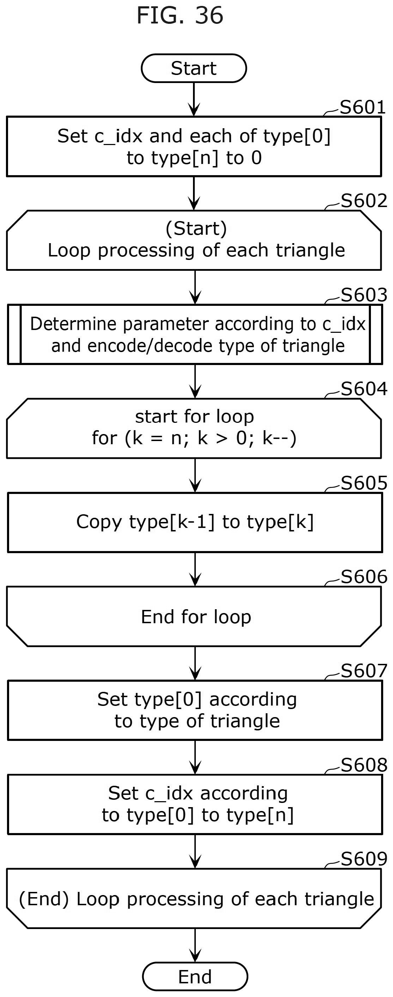

FIG. 36 is a flowchart illustrating another example of encoding processing and decoding processing for a connection type according to the embodiment.

[FIG. 37]

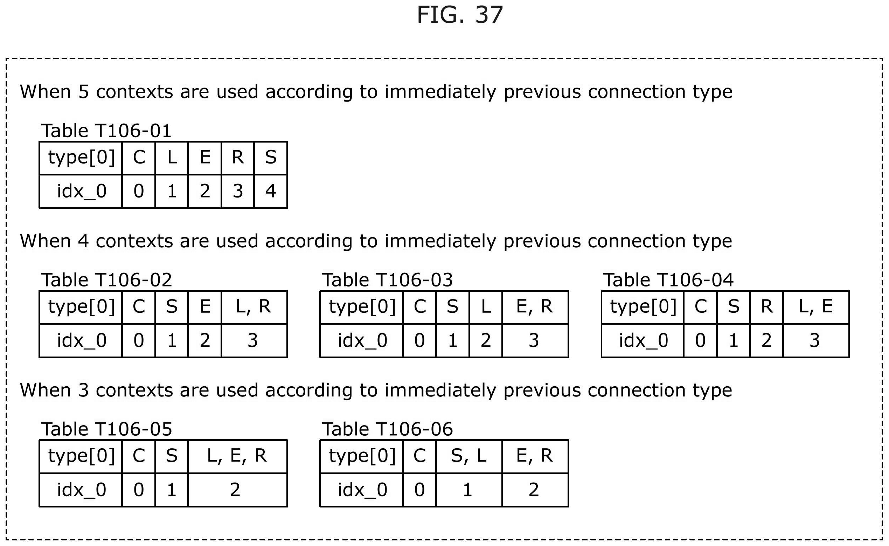

FIG. 37 is a relationship diagram illustrating an example of a correspondence between an immediately previous connection type and values used to determine a context according to the embodiment.

[FIG. 38]

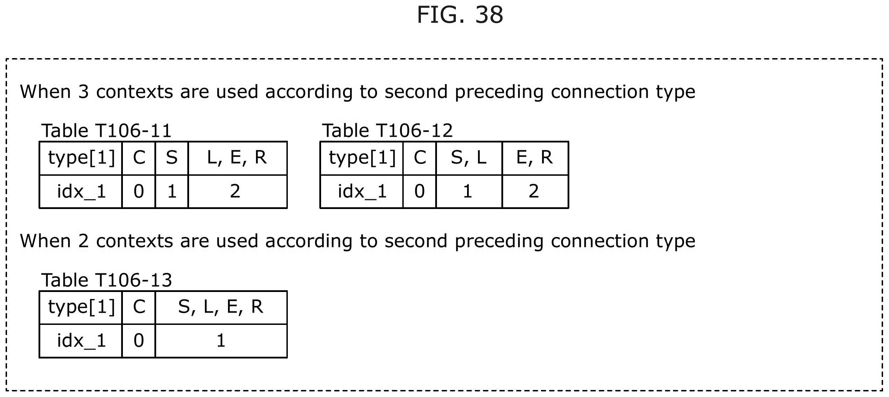

FIG. 38 is a relationship diagram illustrating an example of a correspondence between a second previous connection type and values used to determine a context according to the embodiment.
[FIG. 39]

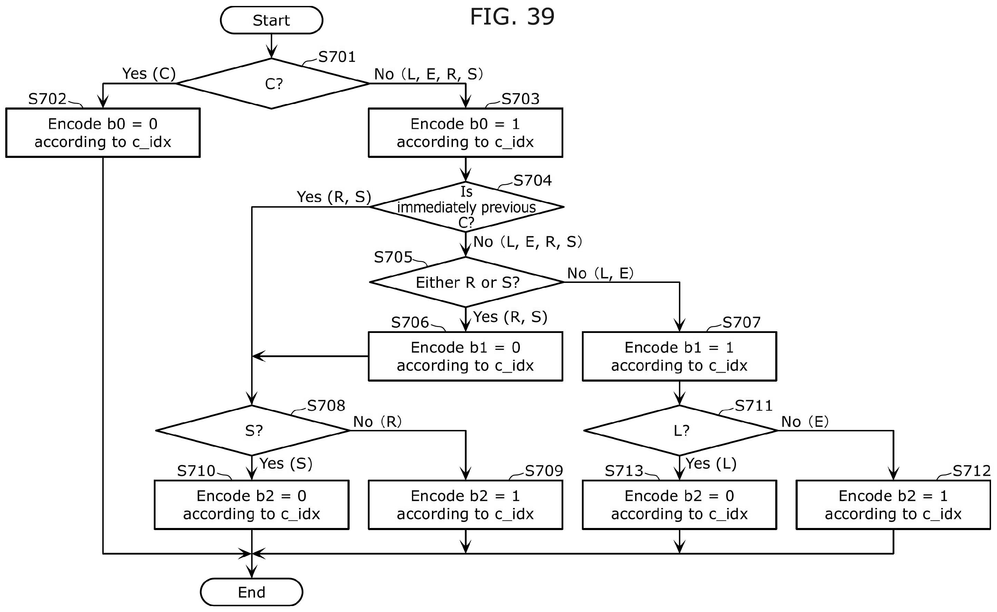

FIG. 39 is a flowchart illustrating a third specific example of encoding of the connection type according to the embodiment.
[FIG. 40]

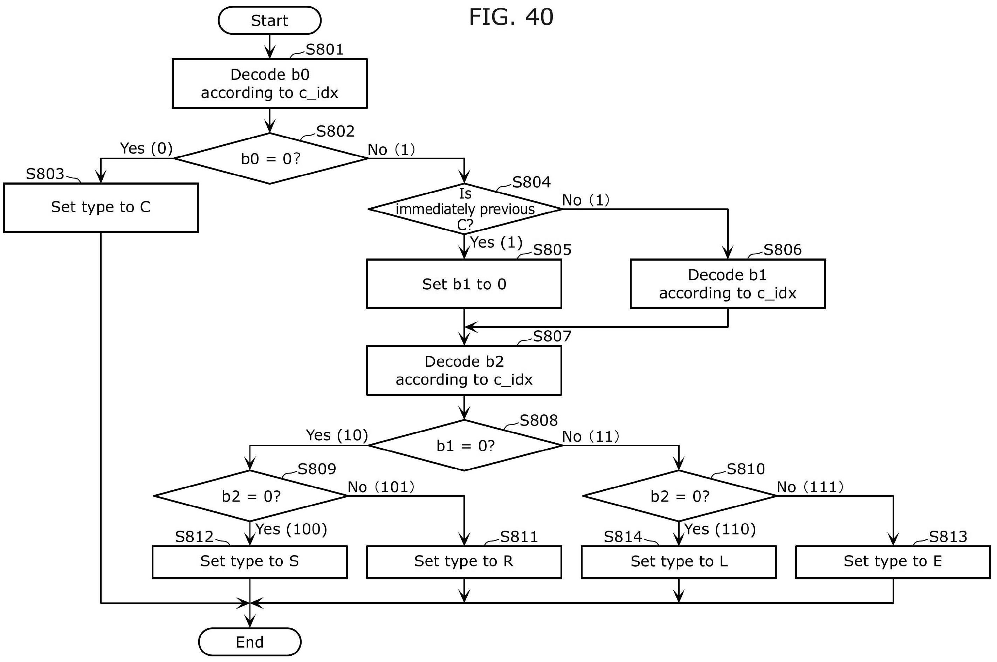

FIG. 40 is a flowchart illustrating a third specific example of decoding of the connection type according to the embodiment.
[FIG. 41]

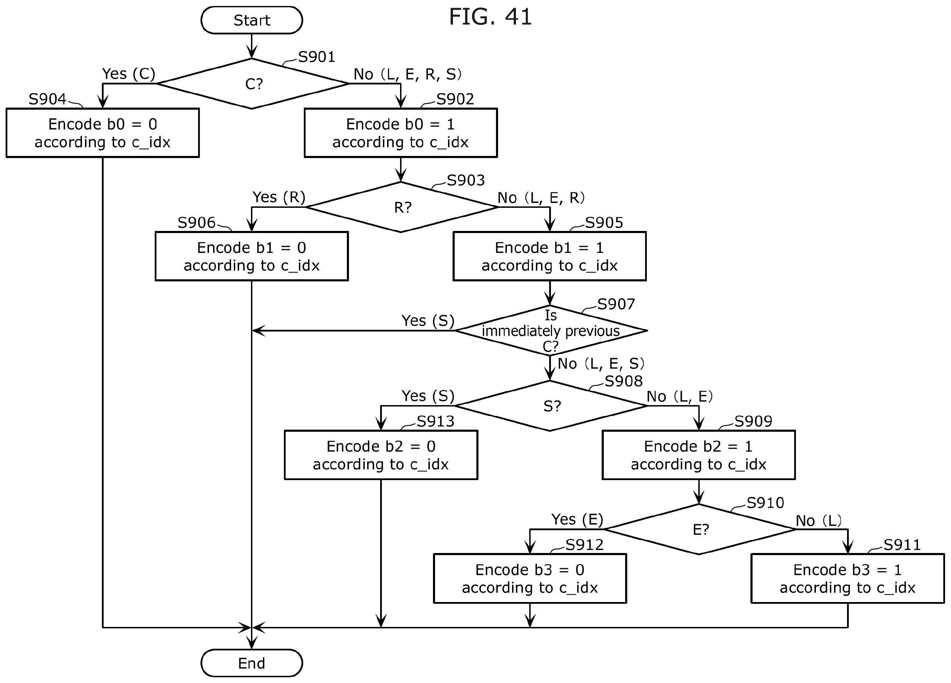

FIG. 41 is a flowchart illustrating a fourth specific example of encoding of the connection type according to the embodiment.
[FIG. 42]

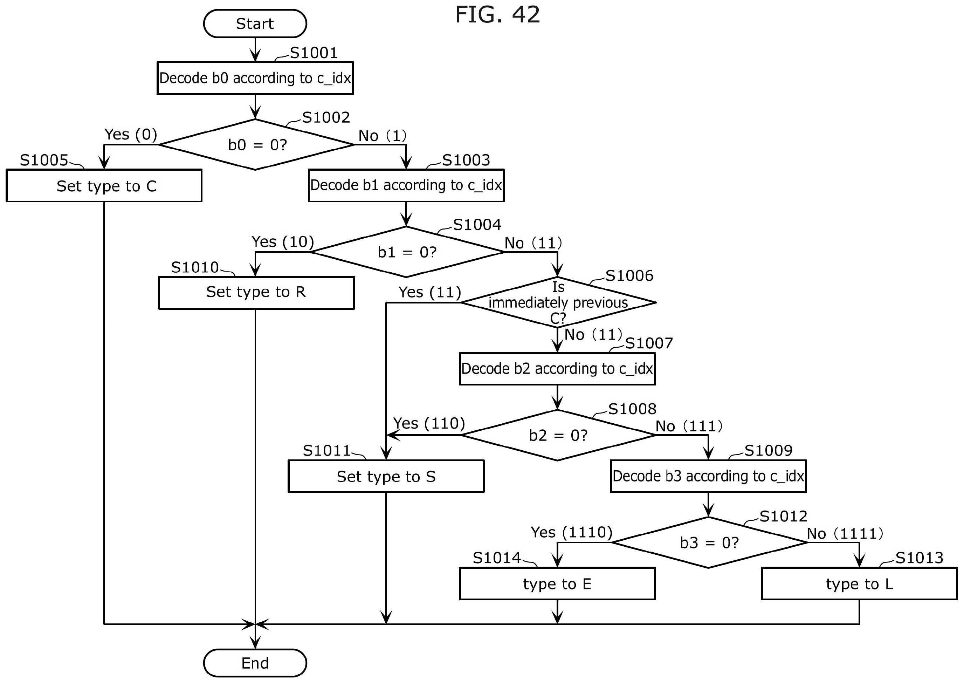

FIG. 42 is a flowchart illustrating a fourth specific example of decoding of the connection type according to the embodiment.
[FIG. 43]

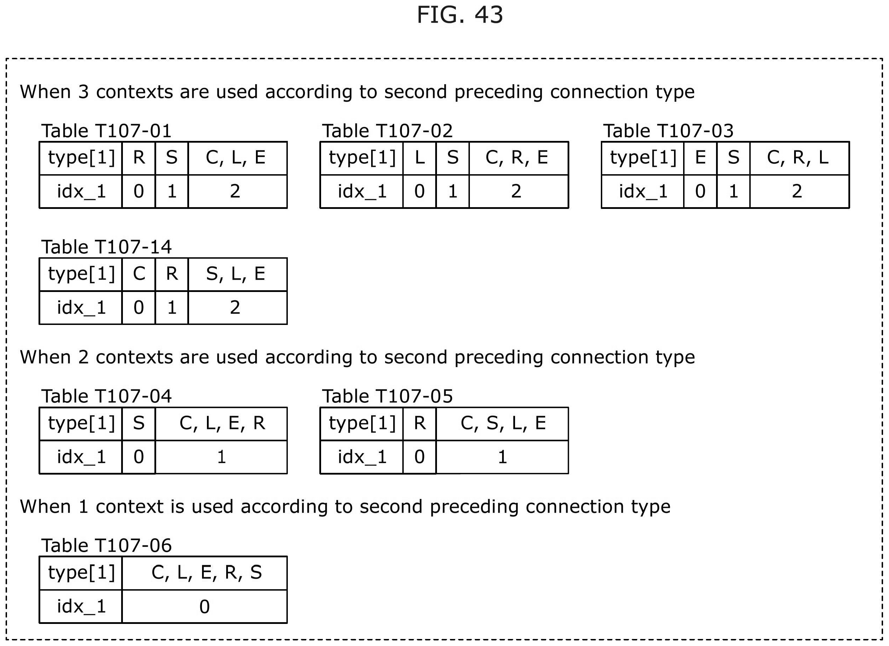

FIG. 43 is a relationship diagram illustrating another example of the correspondence between a second previous connection type and values used to determine a context according to the embodiment.
[FIG. 44]

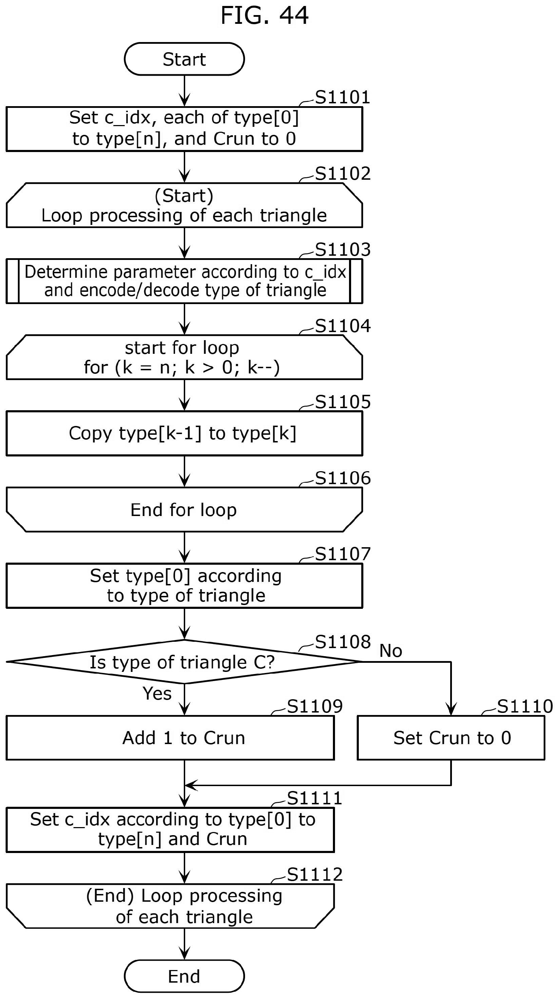

FIG. 44 is a flowchart illustrating yet another example of encoding processing and decoding processing for a connection type according to the embodiment.
[FIG. 45]

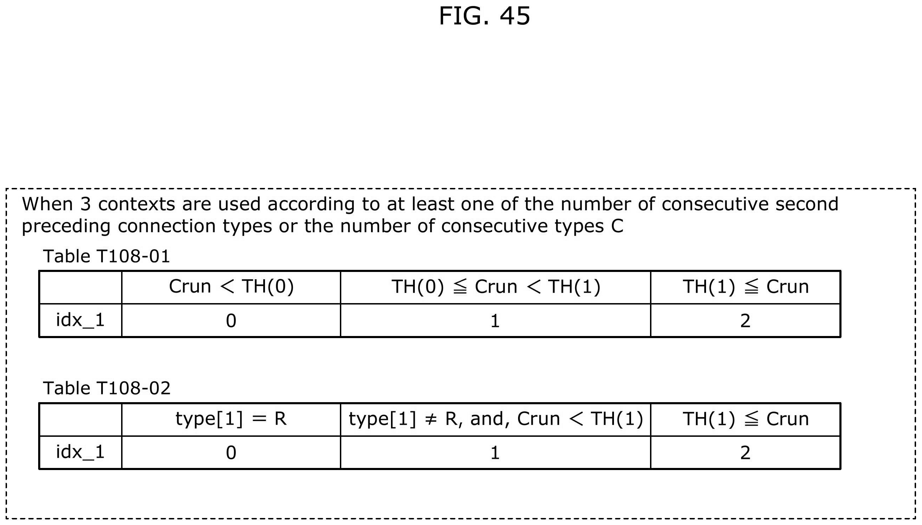

FIG. 45 is a relationship diagram illustrating an example of a correspondence between values used to determine a context and at least one of the number of consecutive second preceding connection types or the number of consecutive types C according to the embodiment.
[FIG. 46]

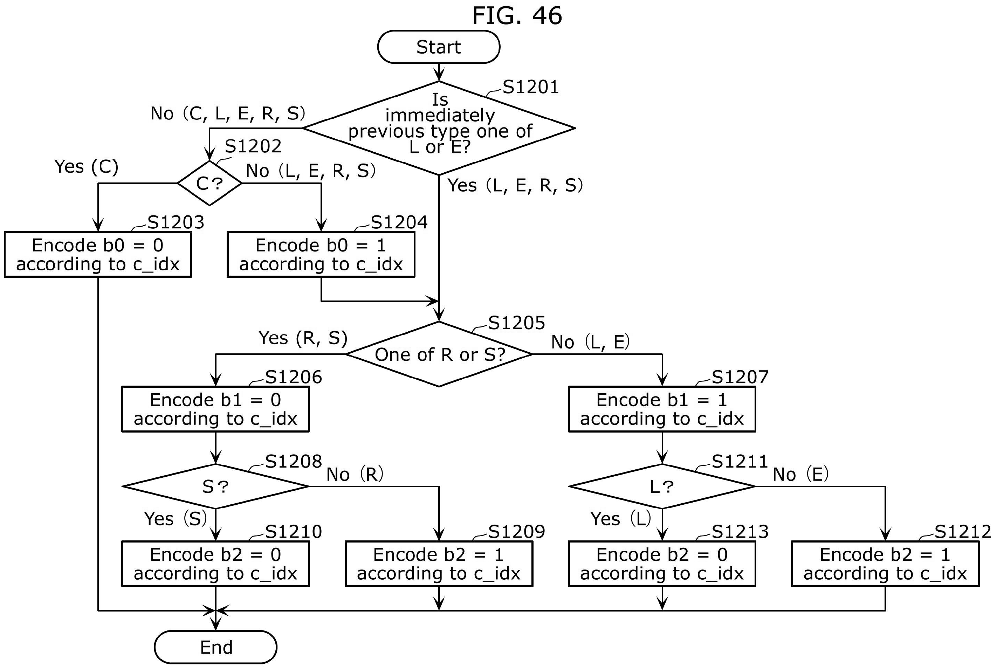

FIG. 46 is a flowchart illustrating a fifth specific example of encoding of the connection type according to the embodiment.
[FIG. 47]

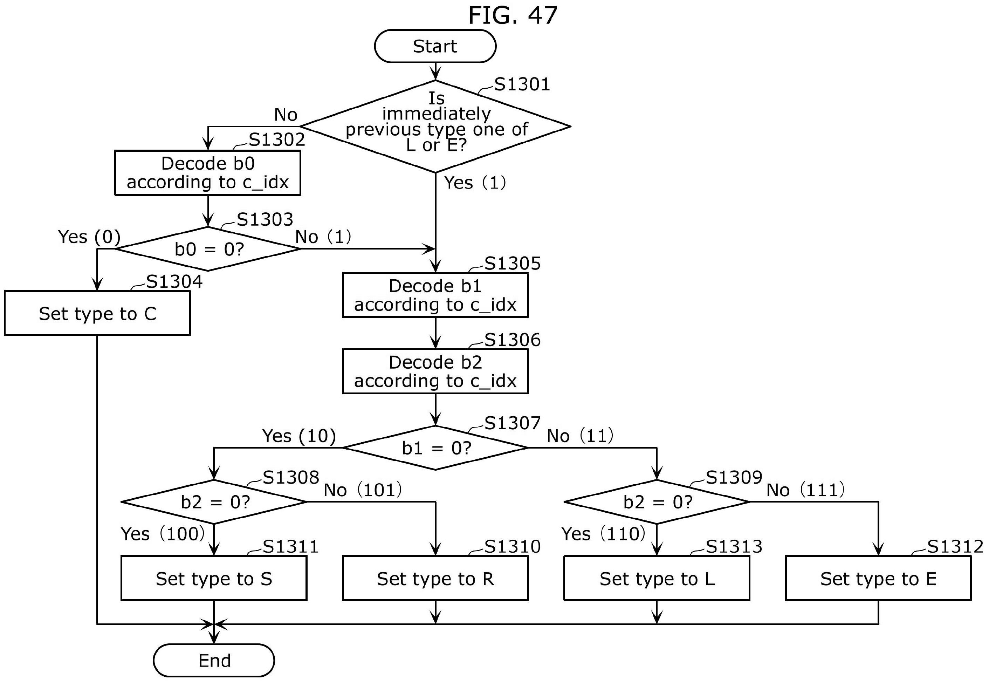

FIG. 47 is a flowchart illustrating a fifth specific example of decoding of the connection type according to the embodiment.
[FIG. 48]

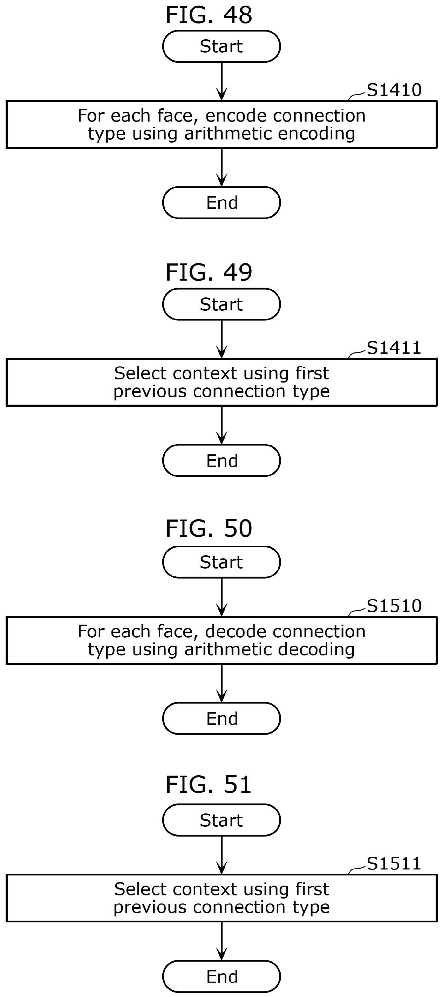

FIG. 48 is a flowchart illustrating an example of basic first encoding processing according to the embodiment.
[FIG. 49]
FIG. 49 is a flowchart illustrating an example of a process included in the basic first encoding processing according to the embodiment.
[FIG. 50]
FIG. 50 is a flowchart illustrating an example of basic first decoding processing according to the embodiment.
[FIG. 51]
FIG. 51 is a flowchart illustrating an example of a process included in the basic first decoding processing according to the embodiment.
[FIG. 52]

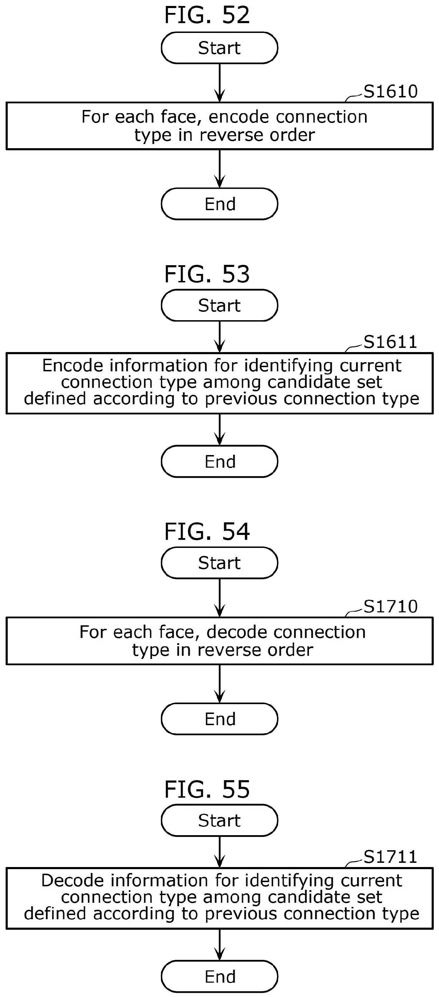

FIG. 52 is a flowchart illustrating an example of basic second encoding processing according to the embodiment.
[FIG. 53]
FIG. 53 is a flowchart illustrating an example of a process included in the basic second encoding processing according to the embodiment.
[FIG. 54]
FIG. 54 is a flowchart illustrating an example of basic second decoding processing according to the embodiment.
[FIG. 55]
FIG. 55 is a flowchart illustrating an example of a process included in the basic second decoding processing according to the embodiment.

[Description of Embodiments]

<Introduction>

A three-dimensional (3D) mesh is used for a computer graphics video, for example. For example, the computer graphics video is formed by a plurality of frames that temporally differs from each other, and each frame may be represented by a three-dimensional mesh.

In addition, the three-dimensional mesh is formed by vertex information that indicates a position of each of a plurality of vertexes in a three-dimensional space, connection information that indicates a connection relationship between the plurality of vertexes, and attribute information that indicates an attribute of each vertex or each face. Each face is constructed according to a connection relationship between a plurality of vertexes. Such a three-dimensional mesh can represent various computer graphics videos.

Furthermore, for transmission and storage of a three-dimensional mesh, a three-dimensional mesh is encoded. In encoding a three-dimensional mesh, for each of faces forming the three-dimensional mesh, a connection type regarding a connection relationship between the face to be processed and a face not yet processed may be encoded. A connection type of each face is effective as information for expressing a relationship with another face and is also effective as information for sequentially processing a plurality of faces.

However, if connection types are not encoded efficiently, a coding amount may increase.

For example, arithmetic encoding and arithmetic decoding may be used to encode and decode a three-dimensional mesh efficiently. In the arithmetic encoding, information is compressed using a probability of occurrence of a value included in the information. Here, the arithmetic encoding may be performed using a probability of occurrence indicated by a context corresponding to, for example, surrounding circumstances of information to be encoded. For this reason, the compression rate of information regarding a three-dimensional mesh is likely to improve.

On the other hand, in arithmetic encoding based on a context, when a context suitable for the characteristics of information about a three-dimensional mesh is not applied, it is difficult to improve a compression rate. In other words, even when arithmetic encoding and arithmetic decoding are used, the compression rate does not always improve because of the characteristics of the information about the three-dimensional mesh.

In view of the above, an encoding device according to Example 1 includes: memory; and a circuit having access to the memory, in which in operation, the circuit: for each of faces forming a three-dimensional mesh, encodes a connection type regarding a connection relationship between the face to be processed and a face not yet processed, using arithmetic encoding based on a context; in encoding a current connection type that is the connection type to be encoded, selects the context to be applied to the arithmetic encoding from a plurality of contexts, using a first previous connection type, the first previous connection type being the connection type encoded before the current connection type; and selects the context according to a total number of one or more corner types when the first previous connection type is a corner type, the one or more corner types being each the corner type and being consecutively encoded up to the first previous connection type, and the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

As a result, it may be possible to select a context for arithmetic encoding of a current connection type that can have a probability distribution that varies depending on the number of consecutive corner types, according to the number of the consecutive corner types. Accordingly, it may be possible to improve a compression rate based on the characteristics of information about a three-dimensional mesh. Therefore, it may be possible to efficiently encode the connection type and to reduce the coding amount.

It should be noted that a plurality of examples of the connection type regarding the connection relationship between the face to be processed and the face not yet processed may include a type in which the face to be processed is not connected to the face not yet processed (for example, type E described below).

Moreover, an encoding device according to Example 2 is the encoding device according to Example 1, in which the circuit: determines which category, among a plurality of categories, the total number of the one or more corner types belongs to, using the total number of the one or more corner types and one or more threshold values; and selects the context according to the category to which the total number of the one or more corner types belongs.

Consequently, it is possible to appropriately determine a category corresponding to the number of the consecutive corner types. Accordingly, it is possible to appropriately select a context according to the category appropriately determined. Therefore, it may be possible to efficiently encode the connection type and to reduce the coding amount.

Furthermore, an encoding device according to Example 3 is the encoding device according to Example 2, in which the one or more threshold values include a first threshold value and a second threshold value, and the plurality of categories include a first category, a second category, and a third category.

As a result, it is possible to appropriately determine a category corresponding to the number of the consecutive corner types from the three categories using the two threshold values. Accordingly, it is possible to appropriately select a context according to the category appropriately determined.

Moreover, an encoding device according to Example 4 is the encoding device according to Example 3, in which the circuit: determines that the total number of the one or more corner types belongs to the first category when the total number of the one or more corner types is less than the first threshold value; determines that the total number of the one or more corner types belongs to the second category when the total number of the one or more corner types is greater than or equal to the first threshold value and is less than the second threshold value; and determines that the total number of the one or more corner types belongs to the third category when the total number of the one or more corner types is greater than or equal to the second threshold value.

Consequently, it is possible to appropriately determine a category corresponding to the number of the consecutive corner types from the three categories by comparing the number of the consecutive corner types and the two threshold values. Accordingly, it is possible to appropriately select a context according to the category appropriately determined.

Furthermore, an encoding device according to Example 5 is the encoding device according to any one of Example 1 to Example 4, in which the connection type is one of the corner type, a split type, a right type, a left type, or an end type, the split type is a type in which, along the path to the face to be processed in the processing order, two faces not yet processed are connected to both the left side and the right side of the face to be processed, the split type being different from the corner type, the right type is a type in which, along the path to the face to be processed in the processing order, a face not yet processed is not connected to the right side of the face to be processed, and a face not yet processed is connected to the left side of the face to be processed, the left type is a type in which, along the path to the face to be processed in the processing order, a face not yet processed is not connected to the left side of the face to be processed, and a face not yet processed is connected to the right side of the face to be processed, the end type is a type in which, along the path to the face to be processed in the processing order, a face not yet processed is connected to neither the left side nor the right side of the face to be processed, and the circuit: when the first previous connection type is the right type, selects the context according to whether a second previous connection type is (i) the corner type, (ii) right type, or (iii) neither the corner type nor the right type, the second previous connection type being the connection type encoded before the first previous connection type; and when the first previous connection type is one of the split type, the left type, or the end type, selects the context according to whether the first previous connection type is the split type, the left type, or the end type.

As a result, it may be possible to appropriately select a context for arithmetic encoding of a current connection type, according to whether the first previous connection type is one of the corner type, the split type, the right type, the left type, or the end type.

In addition, when the first previous connection type is the corner type, it may be possible to appropriately select a context according to the number of the consecutive corner types. Additionally, when the first previous connection type is the right type, it may be possible to appropriately select a context according to whether the second previous connection type is the right type or another type.

Accordingly, it may be possible to select a context for arithmetic encoding of a current connection type that can have a probability distribution that varies depending on the characteristics of one or more connection types encoded before the current connection type.

Moreover, an encoding device according to Example 6 is the encoding device according to Example 5, in which the connection type is a type defined by Edgebreaker, the corner type is type C defined by Edgebreaker, the split type is type S defined by Edgebreaker, the right type is type R defined by Edgebreaker, the left type is type L defined by Edgebreaker, and the end type is type E defined by Edgebreaker.

Consequently, it may be possible to efficiently encode the connection type defined by Edgebreaker. Accordingly, it may be possible to reduce the coding amount of the connection type defined by Edgebreaker.

An encoding device according to Example 7 includes: memory; and a circuit having access to the memory, in which in operation, the circuit: for each of faces forming a three-dimensional mesh, encodes a connection type regarding a connection relationship between the face to be processed and a face not yet processed, in reverse order of processing order in which the connection type is defined; and in encoding a current connection type that is the connection type to be encoded, encodes, as the current connection type, information for identifying the current connection type among a candidate set defined according to a previous connection type, the previous connection type being the connection type encoded before the current connection type, when the previous connection type is a left type or an end type, the candidate set does not include a corner type, when the previous connection type is neither the left type nor the end type, the candidate set includes the corner type, the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed, the left type is a type in which, along the path to the face to be processed in the processing order, a face not yet processed is not connected to the left side of the face to be processed, and a face not yet processed is connected to the right side of the face to be processed, and the end type is a type in which, along the path to the face to be processed in the processing order, a face not yet processed is connected to neither the left side nor the right side of the face to be processed.

As a result, it may be possible to control whether to include the corner type in the candidate set of the current connection type, according to whether the previous connection type is one of the left type or the end type. Accordingly, it may be possible to narrow down the candidate set of the current connection type according to the previous connection type. For this reason, it may be possible to reduce the amount of information for identifying the current connection type. Therefore, it may be possible to efficiently encode the connection type and to reduce the coding amount.

Moreover, an encoding device according to Example 8 is the encoding device according to Example 7, in which the connection type is a type defined by Edgebreaker, the corner type is type C defined by Edgebreaker, the left type is type L defined by Edgebreaker, and the end type is type E defined by Edgebreaker.

Consequently, it may be possible to efficiently encode the connection type defined by Edgebreaker. Accordingly, it may be possible to reduce the coding amount of the connection type defined by Edgebreaker.

A decoding device according to Example 9 includes: memory; and a circuit having access to the memory, in which for each of faces forming a three-dimensional mesh, decodes a connection type regarding a connection relationship between the face to be processed and a face not yet processed, using arithmetic decoding based on a context; in decoding a current connection type that is the connection type to be decoded, selects the context to be applied to the arithmetic decoding from a plurality of contexts, using a first previous connection type, the first previous connection type being the connection type decoded before the current connection type; and selects the context according to a total number of one or more corner types when the first previous connection type is a corner type, the one or more corner types being each the corner type and being consecutively decoded up to the first previous connection type, and the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

As a result, it may be possible to select a context for arithmetic decoding of a current connection type that can have a probability distribution that varies depending on the number of consecutive corner types, according to the number of the consecutive corner types. Accordingly, it may be possible to improve a compression rate based on the characteristics of information about a three-dimensional mesh. Therefore, it may be possible to efficiently decode the connection type and to reduce the coding amount.

It should be noted that a plurality of examples of the connection type regarding the connection relationship between the face to be processed and the face not yet processed may include a type in which the face to be processed is not connected to the face not yet processed (for example, type E described below).

Moreover, a decoding device according to Example 10 is the decoding device according to Example 9, in which the circuit: determines which category, among a plurality of categories, the total number of the one or more corner types belongs to, using the total number of the one or more corner types and one or more threshold values; and selects the context according to the category to which the total number of the one or more corner types belongs.

Consequently, it is possible to appropriately determine a category corresponding to the number of the consecutive corner types. Accordingly, it is possible to appropriately select a context according to the category appropriately determined. Therefore, it may be possible to efficiently decode the connection type and to reduce the coding amount.

Furthermore, a decoding device according to Example 11 is the decoding device according to Example 10, in which the one or more threshold values include a first threshold value and a second threshold value, and the plurality of categories include a first category, a second category, and a third category.

As a result, it is possible to appropriately determine a category corresponding to the number of the consecutive corner types from the three categories using the two threshold values. Accordingly, it is possible to appropriately select a context according to the category appropriately determined.

Moreover, a decoding device according to Example 12 is the decoding device according to Example 11, in which the circuit: determines that the total number of the one or more corner types belongs to the first category when the total number of the one or more corner types is less than the first threshold value; determines that the total number of the one or more corner types belongs to the second category when the total number of the one or more corner types is greater than or equal to the first threshold value and is less than the second threshold value; and determines that the total number of the one or more corner types belongs to the third category when the total number of the one or more corner types is greater than or equal to the second threshold value.

Consequently, it is possible to appropriately determine a category corresponding to the number of the consecutive corner types from the three categories by comparing the number of the consecutive corner types and the two threshold values. Accordingly, it is possible to appropriately select a context according to the category appropriately determined.

Furthermore, a decoding device according to Example 13 is the decoding device according to any one of Example 9 to Example 12, in which the connection type is one of the corner type, a split type, a right type, a left type, or an end type, the split type is a type in which, along the path to the face to be processed in the processing order, two faces not yet processed are connected to both the left side and the right side of the face to be processed, the split type being different from the corner type, the right type is a type in which, along the path to the face to be processed in the processing order, a face not yet processed is not connected to the right side of the face to be processed, and a face not yet processed is connected to the left side of the face to be processed, the left type is a type in which, along the path to the face to be processed in the processing order, a face not yet processed is not connected to the left side of the face to be processed, and a face not yet processed is connected to the right side of the face to be processed, the end type is a type in which, along the path to the face to be processed in the processing order, a face not yet processed is connected to neither the left side nor the right side of the face to be processed, and the circuit: when the first previous connection type is the right type, selects the context according to whether a second previous connection type is (i) the corner type, (ii) the right type, or (iii) neither the corner type nor the right type, the second previous connection type being the connection type decoded before the first previous connection type; and when the first previous connection type is one of the split type, the left type, or the end type, selects the context according to whether the first previous connection type is the split type, the left type, or the end type.

As a result, it may be possible to appropriately select a context for arithmetic decoding of a current connection type, according to whether the first previous connection type is one of the corner type, the split type, the right type, the left type, or the end type.

In addition, when the first previous connection type is the corner type, it may be possible to appropriately select a context according to the number of the consecutive corner types. Additionally, when the first previous connection type is the right type, it may be possible to appropriately select a context according to whether the second previous connection type is the right type or another type.

Accordingly, it may be possible to select a context for arithmetic decoding of a current connection type that can have a probability distribution that varies depending on the characteristics of one or more connection types decoded before the current connection type.

Moreover, a decoding device according to Example 14 is the decoding device according to Example 13, in which the connection type is a type defined by Edgebreaker, the corner type is type C defined by Edgebreaker, the split type is type S defined by Edgebreaker, the right type is type R defined by Edgebreaker, the left type is type L defined by Edgebreaker, and the end type is type E defined by Edgebreaker.

Accordingly, it may be possible to efficiently decode the connection type defined by Edgebreaker. Accordingly, it may be possible to reduce the coding amount of the connection type defined by Edgebreaker.

A decoding device according to Example 15 includes: memory; and a circuit having access to the memory, in which in operation, the circuit: for each of faces forming a three-dimensional mesh, decodes a connection type regarding a connection relationship between the face to be processed and a face not yet processed, in reverse order of processing order in which the connection type is defined; and in decoding a current connection type that is the connection type to be decoded, decodes, as the current connection type, information for identifying the current connection type among a candidate set defined according to a previous connection type, the previous connection type being the connection type decoded before the current connection type, when the previous connection type is a left type or an end type, the candidate set does not include a corner type, when the previous connection type is neither the left type nor the end type, the candidate set includes the corner type, the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed, the left type is a type in which, along the path to the face to be processed in the processing order, a face not yet processed is not connected to the left side of the face to be processed, and a face not yet processed is connected to the right side of the face to be processed, and the end type is a type in which, along the path to the face to be processed in the processing order, a face not yet processed is connected to neither the left side nor the right side of the face to be processed.

As a result, it may be possible to control whether to include the corner type in the candidate set of the current connection type, according to whether the previous connection type is one of the left type or the end type. Accordingly, it may be possible to narrow down the candidate set of the current connection type according to the previous connection type. For this reason, it may be possible to reduce the amount of information for identifying the current connection type. Therefore, it may be possible to efficiently decode the connection type and to reduce the coding amount.

Moreover, a decoding device according to Example 16 is the decoding device according to Example 15, in which the connection type is a type defined by Edgebreaker, the corner type is type C defined by Edgebreaker, the left type is type L defined by Edgebreaker, and the end type is type E defined by Edgebreaker.

Accordingly, it may be possible to efficiently decode the connection type defined by Edgebreaker. Accordingly, it may be possible to reduce the coding amount of the connection type defined by Edgebreaker.

An encoding method according to Example 17 includes: for each of faces forming a three-dimensional mesh, encoding a connection type regarding a connection relationship between the face to be processed and a face not yet processed, using arithmetic encoding based on a context; in encoding a current connection type that is the connection type to be encoded, selecting the context to be applied to the arithmetic encoding from a plurality of contexts, using a first previous connection type, the first previous connection type being the connection type encoded before the current connection type; and selecting the context according to a total number of one or more corner types when the first previous connection type is a corner type, the one or more corner types being each the corner type and being consecutively encoded up to the first previous connection type, in which the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

As a result, it may be possible to select a context for arithmetic encoding of a current connection type that can have a probability distribution that varies depending on the number of consecutive corner types, according to the number of the consecutive corner types. Accordingly, it may be possible to improve a compression rate based on the characteristics of information about a three-dimensional mesh. Therefore, it may be possible to efficiently encode the connection type and to reduce the coding amount.

An encoding method according to Example 18 includes: for each of faces forming a three-dimensional mesh, encoding a connection type regarding a connection relationship between the face to be processed and a face not yet processed, in reverse order of processing order in which the connection type is defined; and in encoding a current connection type that is the connection type to be encoded, encoding, as the current connection type, information for identifying the current connection type among a candidate set defined according to a previous connection type, the previous connection type being the connection type encoded before the current connection type, in which when the previous connection type is a left type or an end type, the candidate set does not include a corner type, when the previous connection type is neither the left type nor the end type, the candidate set includes the corner type, the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed, the left type is a type in which, along the path to the face to be processed in the processing order, a face not yet processed is not connected to the left side of the face to be processed, and a face not yet processed is connected to the right side of the face to be processed, and the end type is a type in which, along the path to the face to be processed in the processing order, a face not yet processed is connected to neither the left side nor the right side of the face to be processed.

As a result, it may be possible to control whether to include the corner type in the candidate set of the current connection type, according to whether the previous connection type is one of the left type or the end type. Accordingly, it may be possible to narrow down the candidate set of the current connection type according to the previous connection type. For this reason, it may be possible to reduce the amount of information for identifying the current connection type. Therefore, it may be possible to efficiently encode the connection type and to reduce the coding amount.

A decoding method according to Example 19 includes: for each of faces forming a three-dimensional mesh, decoding a connection type regarding a connection relationship between the face to be processed and a face not yet processed, using arithmetic decoding based on a context; in decoding a current connection type that is the connection type to be decoded, selecting the context to be applied to the arithmetic decoding from a plurality of contexts, using a first previous connection type, the first previous connection type being the connection type decoded before the current connection type; and selecting the context according to a total number of one or more corner types when the first previous connection type is a corner type, the one or more corner types being each the corner type and being consecutively decoded up to the first previous connection type, in which the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

As a result, it may be possible to select a context for arithmetic decoding of a current connection type that can have a probability distribution that varies depending on the number of consecutive corner types, according to the number of the consecutive corner types. Accordingly, it may be possible to improve a compression rate based on the characteristics of information about a three-dimensional mesh. Therefore, it may be possible to efficiently decode the connection type and to reduce the coding amount.

A decoding method according to Example 20 includes: for each of faces forming a three-dimensional mesh, decoding a connection type regarding a connection relationship between the face to be processed and a face not yet processed, in reverse order of processing order in which the connection type is defined; and in decoding a current connection type that is the connection type to be decoded, decoding, as the current connection type, information for identifying the current connection type among a candidate set defined according to a previous connection type, the previous connection type being the connection type decoded before the current connection type, in which when the previous connection type is a left type or an end type, the candidate set does not include a corner type, when the previous connection type is neither the left type nor the end type, the candidate set includes the corner type, the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed, the left type is a type in which, along the path to the face to be processed in the processing order, a face not yet processed is not connected to the left side of the face to be processed, and a face not yet processed is connected to the right side of the face to be processed, and the end type is a type in which, along the path to the face to be processed in the processing order, a face not yet processed is connected to neither the left side nor the right side of the face to be processed.

As a result, it may be possible to control whether to include the corner type in the candidate set of the current connection type, according to whether the previous connection type is one of the left type or the end type. Accordingly, it may be possible to narrow down the candidate set of the current connection type according to the previous connection type. For this reason, it may be possible to reduce the amount of information for identifying the current connection type. Therefore, it may be possible to efficiently decode the connection type and to reduce the coding amount.

Moreover, these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

<Expressions and terms>

The following expressions and terms will be used herein.

(1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

(2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

(3) Connection information

Connection information is information indicating a connection between vertexes. For example, connection information indicates a connection for constructing a face or an edge of a three-dimensional mesh. Connection information may be expressed as "connectivity". In addition, connection information may also be expressed as face information.

(4) Attribute information

Attribute information is information indicating an attribute of a vertex or a face. For example, attribute information indicates an attribute such as a color, an image, a normal vector, and the like associated with a vertex or a face. Attribute information may be expressed as "texture".

(5) Face

A face is an element that constitutes a three-dimensional mesh. Specifically, a face is a polygon on a plane in a three-dimensional space. For example, a face can be determined as a triangle in the three-dimensional space.

(6) Plane

A plane is a two-dimensional plane in a three-dimensional space. For example, a polygon is formed on a plane and a plurality of polygons are formed on a plurality of planes.

(7) Bitstream

A bitstream corresponds to encoded information. A bitstream can also be expressed as a stream, an encoded bitstream, a compressed bitstream, or an encoded signal.

(8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.
In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

(9) Ordinal numbers

**[0073]** In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

<Three-dimensional mesh>

FIG. 1 is a conceptual diagram illustrating a three-dimensional mesh according to the present embodiment. The three-dimensional mesh is constituted of a plurality of faces. For example, each face is a triangle. Vertexes of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertexes. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertexes of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

<System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

<Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be more finely segmentalized into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

<Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be more finely segmentalized into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

<Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the pieces of information may be sequentially stored such as a first portion of connection information, a first portion of vertex information, a first portion of attribute information, a second portion of connection information, a second portion of vertex information, a second portion of attribute information, .... The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the pieces of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image coding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these pieces of information may be stored in a bitstream.

Furthermore, each of connection information, vertex information, and attribute information may be divided into a plurality of data items, and the plurality of data items may be stored in a bitstream in a periodic order or in a random order.

<Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertexes or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Wi-Fi, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertexes. Each face corresponds to an area enclosed by three or more edges.

In addition, a three-dimensional mesh has position information indicating three-dimensional coordinate positions of vertexes. The position information is also expressed as vertex information or geometry. Furthermore, a three-dimensional mesh has connection information indicating a relationship among a plurality of vertexes constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertexes which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertexes. n [1, 3, 4] indicates a face of a triangle constituted of three vertexes n = 1, n = 3, and n = 4. In addition, m [2, 4, 6] indicates that pieces of attribute information m = 2, m = 4, and m = 6 respectively correspond to the three vertexes.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. Accordingly, sizes of circuits and software programs can be suppressed.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as glTF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called V-DMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

<Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

<Entropy Encoding and Entropy Decoding>

A three-dimensional model digitally represents an object in such a manner that a user can three-dimensionally search the model through zooming, panning, and rotation while temporarily rendering the model. One method of constructing such a representation is to construct a three-dimensional mesh with polygons. The model stores positions of vertexes of polygons, connectivity of the vertexes, and attributes associated with the vertexes (such as normal and UV patches). The polygons are triangles or rectangles, for example.

To store all of these items of information in an uncompressed manner, a vast storage area is needed, and therefore, a vast bandwidth is needed for transmission. Polygons forming a mesh, in particular, polygons in temporal or spatial proximity to each other, often have repetitive patterns and similar attributes. Such a repetition can be used for planning encoding and decoding methods efficient for storage and transmission.

FIG. 26 is a block diagram illustrating another configuration example of the encoding/decoding system according to the embodiment. As illustrated in FIG. 26, the encoding/decoding system includes a pair of encoding device 100 and decoding device 200. The encoding/-decoding system receives a three-dimensional mesh frame that is input in forms of vertex three-dimensional coordinates (vertex information), connectivity (connection information) and associated attributes (attribute information).

Encoding device 100 encodes all associated information into a bitstream (compressed bitstream).

The bitstream may be formed by a plurality of bitstreams. The bitstream is transmitted to decoding device 200 through a transmission path. Decoding device 200 decodes the bitstream and generates a three-dimensional model (three-dimensional mesh) from the decoded vertex three-dimensional coordinates, connectivity and associated attributes.

FIG. 27 is a block diagram illustrating another configuration example of encoding device 100 according to the embodiment. In this example, encoding device 100 includes preprocessor 521 and encoding processor 522.

Preprocessor 521 reads a three-dimensional mesh, processes the three-dimensional mesh, extracts a base mesh, a displacement vector, texture data and an attribute map, and passes the base mesh, the displacement vector, the texture data, and the attribute map to encoding processor 522. Encoding processor 522 separately compresses the base mesh, the displacement vector, the texture data, and the attribute map, and combines them to generate a bitstream.

FIG. 28 is a block diagram illustrating another configuration example of decoding device 200 according to the embodiment. In this example, decoding device 200 includes decoding processor 622 and postprocessor 623.

Decoding processor 622 reads a bitstream, separates a base mesh, a displacement vector, texture data, and an attribute map from the bitstream, separately decodes them, and passes them to postprocessor 623. Postprocessor 623 processes the base mesh according to the displacement vector and the attribute map to generate a three-dimensional mesh.

In the encoding method, for example, the original three-dimensional mesh is first decimated to obtain a base mesh that includes less vertexes. In the base mesh, a vertex need not be located at the original position, and connectivity of vertexes may change as a result of the decimation.

After that, a plurality of new vertexes are repeatedly added between connected existing vertexes in the base mesh to segmentalize the base mesh. Then, a displacement vector between the segmentalized three-dimensional mesh and the input three-dimensional mesh is calculated. The displacement vector is used in decoding device 200 so that segmentalized vertexes are located at predicted positions.

This information is transformed into a wavelet coefficient through wavelet transformation and encoded using a video codec by mapping a coefficient onto a plane of a video frame. A texture of the three-dimensional mesh and a map for combining all information for reconstruction are separately encoded and then combined into one bitstream.

Decoding device 200 first decodes a base mesh. A plurality of new vertexes are repeatedly added between connected existing vertexes in the base mesh to segmentalize the base mesh. Then, all vertexes and connectivity are obtained. The vertexes may be located at different positions than the corresponding vertexes in the input three-dimensional mesh.

Then, a wavelet coefficient is decoded by a video decoder, and an inverse wavelet transformation is applied to reconstruct a displacement vector. Using this information, the vertexes are placed at predicted positions, the texture is mapped onto a plane created based on the vertexes and the connectivity thereof, and thereby the three-dimensional mesh is completely decoded.

Recent developments in obtaining, modeling, and rendering of three-dimensional data are promoting applications concerning three-dimensional contents for various platforms and devices. Three-dimensional media is a very convenient method for highly immersive user experience in applications such as digital entertainment, health care, and robotics.

A three-dimensional mesh is used for rendering immersive media, for example, and is formed of several polygons that represent a boundary face of a volumetric object. Each polygon includes vertexes in a three-dimensional space and connection information that defines a way of connection of the vertexes. Optionally, the three-dimensional mesh may include an attribute, such as color, normal, and material property.

A dynamic mesh is a type of mesh in which at least one of connection information, geometry information, mapping information, a vertex attribute, and an attribute map temporally changes. The dynamic mesh is formed of a vast amount of data that temporally changes, so that a mass storage may be needed. Therefore, to appropriately store and transmit such data, an efficient compression solution is essential.

A method referred to Edgebreaker is a method of encoding a three-dimensional mesh in which individual meshes are triangles. The Edgebreaker can correspond to a method for classifying triangles constituting a three-dimensional mesh. In this method, each triangle forming a three-dimensional mesh is classified into five types C, L, E, R, and S according to the pattern of adjacent triangles, and the three-dimensional mesh is represented by a character string formed by a combination of C, L, E, R, and S.

Here, S means split, E means end, C means corner, and L and R each mean the position of an adjacent triangle to be encoded next. These types are also referred to as type S, type E, type C, type L, and type R. For example, a triangle of type C is not adjacent to an encoded triangle. A triangle adjacent on the right to a triangle of type L is encoded next. A triangle adjacent on the left to a triangle of type R is encoded next.

It should be noted that encoding (or decoding) a triangle can include encoding (or decoding) the connection type of a triangle. Additionally, the connection type of a triangle encoded (or decoded) may mean a connection type encoded (or decoded).

FIG. 29 is a conceptual diagram illustrating the five connection types according to this embodiment. The connection type indicates a connection relationship between a triangle to be processed and a triangle that is not yet processed. Here, "to be processed" corresponds to "to be visited", "already processed" corresponds to "already visited", and "not yet processed" corresponds to "not yet visited". Note that the vertexes of a visited triangle may be regarded as already visited. Furthermore, a space where no triangle exists and a vertex abutting on the space may be regarded as already visited.

In type S, along the path to the triangle to be processed in the processing order, a plurality of triangles not yet processed are separately connected to the triangle to be processed on both sides thereof. In other words, a plurality of triangles not yet processed are connected to the triangle to be processed on both sides thereof in a split manner. For example, in type S, vertex v is already visited. After the triangle of type S is processed, the triangle not yet processed connected to the right side of the triangle of type S is first processed. After that, specifically, after the triangle of type E is processed, the triangle not yet processed connected to the left side of the triangle of type S is processed.

In type C, along the path to the triangle to be processed in the processing order, a plurality of triangles not yet processed are connected to the triangle to be processed on both sides thereof without being separated. In other words, a plurality of triangles not yet processed are connected to the triangle to be processed on both sides thereof in a non-split manner. For example, in type C, vertex v is not yet visited. After the triangle of type C is processed, the triangle not yet processed connected to the right side of the triangle of type C is processed.

In type L, along the path to the triangle to be processed in the processing order, any triangle not yet processed is not connected to the left side of the triangle to be processed, and a triangle not yet processed is connected to the right side of the triangle to be processed. For example, in type L, vertex v is already visited. After the triangle of type L is processed, the triangle not yet processed connected to the right side of the triangle of type L is processed.

In type R, along the path to the triangle to be processed in the processing order, any triangle not yet processed is not connected to the right side of the triangle to be processed, and a triangle not yet processed is connected to the left side of the triangle to be processed. For example, in type R, vertex v is already visited. After the triangle of type R is processed, the triangle not yet processed connected to the left side of the triangle of type R is processed.

In type E, along the path to the triangle to be processed in the processing order, any triangle not yet processed is not connected to the right side and the left side of the triangle to be processed. For example, in type E, vertex v is already visited. After the triangle of type E is processed, for example, a triangle not yet processed connected to the left side of an already processed triangle of type S is processed. Alternatively, after the triangle of type E is processed, the process ends.

For example, type C is a type in which, along the path to the triangle to be processed in the processing order, two triangles not yet processed are connected to the right side and the left side of the triangle to be processed, and all of a plurality of triangles including the two triangles and connected to a vertex of the triangle to be processed are not yet processed. In addition, for example, type S is a type in which, along the path to the triangle to be processed in the processing order, two triangles not yet processed are connected to the right side and the left side of the triangle to be processed, and is different from the corner type.

In particular, in type C, a triangle to be processed and a plurality of triangles not yet processed can form a corner at vertex v on a three-dimensional mesh. Accordingly, type C indicates a corner and can be expressed as a corner type. Other types S, L, R, and E can be expressed as a split type, a left type, a right type, and an end type, respectively. Additionally, a type equivalent to these types may be determined by a method other than the Edgebreaker.

FIG. 30 is a conceptual diagram illustrating an example of the connection types sequentially determined according to this embodiment. As illustrated in FIG. 30, the connection type of each of the plurality of triangles forming the three-dimensional mesh is sequentially determined to be any of the plurality of types illustrated in FIG. 29, and then encoding and decoding are performed. The connection type indicates a connection relationship between a plurality of triangles, and can indicate the processing order of the plurality of triangles. Furthermore, the connection type can be used for reconstruction of the three-dimensional model.

Furthermore, types C, L, E, R, and S may be assigned with bit patterns 0, 110, 111, 101, and 100, respectively. These bit patterns may be encoded. Furthermore, concerning the leading triangle, in addition to type C, L, E, R, or S, information about each vertex of the leading triangle (such as three-dimensional coordinate positions, texture map coordinate positions, and normal vectors) may be encoded. Furthermore, concerning the triangle of type C, information about a new additional vertex may be encoded, for example.

For example, Edgebreaker according to the present disclosure may be used for encoding processing and decoding processing for a three-dimensional mesh, or may be used for encoding processing and decoding processing for a base mesh illustrated in FIGS. 27 and 28. Specifically, the processing according to the present disclosure may be applied to encoding processing and decoding processing for information that indicates a connection relationship between a plurality of faces that are a plurality of polygons forming a three-dimensional mesh.

FIG. 31 is a flowchart illustrating encoding processing and decoding processing for a connection type according to this embodiment. Specifically, FIG. 31 illustrates an example of a method of encoding the type (C, L, E, R, or S) associated with each triangle forming a three-dimensional mesh on a triangle basis. Here, the encoding is entropy encoding, such as arithmetic encoding or Huffman encoding.

In this method, the value of variable prev is set according to the connection type encoded immediately before the current connection type. Then, according to prev, a parameter that controls the entropy encoding of the connection type of the triangle is determined. Then, according to the parameter determined, entropy encoding of the connection type to be encoded is performed.

Specifically, first, prev is set to an initial value (0, for example) (S101). Then, entropy encoding of the connection type of each triangle is repeated (S102 to S109). Here, a parameter for controlling the entropy encoding of the connection type of the triangle is determined according to prev, and entropy encoding of the connection type to be encoded is performed (S103).

For example, when arithmetic encoding is used for entropy encoding, a context used for determining a predicted occurrence probability of information to be encoded is determined from among a plurality of contexts according to prev. Alternatively, when Huffman encoding is used for entropy encoding, a codeword table used for encoding is determined from among a plurality of codeword tables according to prev.

According to the encoded connection type, then, the value of prev used for controlling entropy encoding of the next connection type to be encoded is set (S104 to S107). Specifically, first, whether the encoded connection type is type S or not is determined. When the encoded connection type is type S (Yes in S104), prev is set to 1 (S106).

When the encoded connection type is not type S (No in S104: the encoded connection type is any of C, R, L, and E), whether the encoded connection type is type E or not is determined (S105). When the encoded connection type is type E (Yes in S105), prev is set to 2 (S107). When the encoded connection type is not type E (No in S105: the encoded connection type is any of C, R, and L), prev is set to 0 (S108).

As a result of trials, the inventors have made a new finding that the tendency of the occurrence probability of each type encoded immediately after encoding of type S or E is different from the tendency of the occurrence probability of each type encoded immediately after type C, R, or L. Therefore, by switching the control of the entropy encoding according to the connection type encoded immediately before the current connection type as described above, the encoding efficiency of the entropy encoding may be able to be improved.

Note that FIG. 31 illustrates an example in which the connection type is classified into three groups, a group of type S, a group of type E, and a group of types C, R, and L, for switching the control of the entropy encoding. However, the context may be determined for each of the five types.

Furthermore, in the example in FIG. 31, the determination and setting concerning type E (S105 and S107) may be omitted. In that case, the connection type may be classified into two groups, a group of type S and a group of types C, R, L, and E, for switching the control of the entropy encoding.

In this way, the encoding efficiency may be improved compared with the case where there is only one group, and the memory utilization may be reduced compared with the case where there are three groups.

Furthermore, in FIG. 31, the value of prev is set to any of 0, 1, and 2 according to the encoded connection type. However, another method may be used in which three groups, a group of type S, a group of type E, and a group of types C, R, and L, may be distinguished for switching the control of the entropy encoding.

Furthermore, although the control of the entropy encoding is switched in the above description, "encoding" may be interchanged with "decoding", and the control of entropy decoding may be switched.

Furthermore, in the above description, the context of arithmetic encoding is selected according to the type associated with the triangle processed immediately before the triangle to be processed. However, the selection of the context is not limited to this example. Specifically, the selection of the context is not limited to the selection according to the immediately preceding type, and the parameter for entropy encoding or entropy decoding of the connection information to be processed may be determined according to encoded or decoded connection information (link information).

The encoded or decoded link information may be link information of the polygon encoded or decoded immediately before the current polygon. Furthermore, the entropy encoding or the entropy decoding may be arithmetic encoding or arithmetic decoding, and in that case, the parameter may be the context or a parameter for deriving the context.

In an example of the selection of the context, a first context may be used when the link information of the polygon encoded or decoded immediately before the current polygon is not a type that indicates a split. And when the link information of the polygon encoded or decoded immediately before the current polygon is a type that indicates a split, a second context may be used.

In other words, for the polygon to be processed, the context may be determined based on whether the type of the link information of a processed polygon at a predetermined position is a type that indicates a split. Alternatively, for the polygon to be processed, the context may be determined based on whether the type of the link information of a processed polygon at a predetermined position is a type that indicates an end.

Furthermore, whether to determine the context based on the type of the processed polygon may be switched. Furthermore, the connection type used as a determination criterion may be switched. In that case, a parameter may be encoded that indicates whether the switching is appropriate or not, the context to be selected, or the connection type of the polygon associated with the context, for example.

Furthermore, the sequence of the processing including determinations and settings may be changed, or part of the processing may be omitted. For example, the determination of type S (S104) and the determination of type E (S105) may be interchanged, or one of the determinations may be omitted.

FIG. 32 is a flowchart illustrating a first specific example of the encoding of the connection type according to this embodiment. Specifically, FIG. 32 illustrates an example of the encoding processing (S103) in FIG. 31. In this example, types C, L, E, R, and S are assigned with bit patterns 0, 110, 111, 101, and 100, respectively, and the entropy encoding is performed starting from the most significant bit.

First, whether the connection type of the triangle to be encoded is type C is determined (S201). When the connection type is type C (Yes in S201), 0 is encoded as the value of first bit b0 by entropy encoding according to prev (S202). When the connection type is not type C (No in S201: the connection type is any of L, E, R, and S), 1 is encoded as the value of first bit b0 by entropy encoding according to prev (S203).

Then, whether the connection type of the triangle to be encoded is one of types R and S is determined (S204). When the connection type is one of types R and S (Yes in S204), 0 is encoded as the value of second bit b1 by entropy encoding according to prev (S205).

Then, whether the connection type of the triangle to be encoded is type S is determined (S207). When the connection type is type S (Yes in S207), 0 is encoded as the value of third bit b2 by entropy encoding according to prev (S211). When the connection type is not type S (No in S207: the connection type is R), 1 is encoded as the value of third bit b2 by entropy encoding according to prev (S209).

When the connection type is not one of types R and S (No in S204: the connection type is L or E), 1 is encoded as the value of second bit b1 by entropy encoding according to prev (S206).

Then, whether the connection type of the triangle to be encoded is type L is determined (S208). When the connection type is type L (Yes in S208), 0 is encoded as the value of third bit b2 by entropy encoding according to prev (S212). When the connection type is not type L (No in S208: the connection type is E), 1 is encoded as the value of third bit b2 by entropy encoding according to prev (S210).

Note that when arithmetic encoding is used for the entropy encoding, the context used for determining the predicted occurrence probability of information to be encoded is determined from among a plurality of contexts according to prev. When Huffman encoding is used for the entropy encoding, the codeword table used for encoding is determined from among a plurality of codeword tables according to prev.

Furthermore, in the entropy encoding of the value of third bit b2 (S207 to S212), the context or codeword table may be determined according to the value of second bit b1 in addition to prev.

The tendency of the occurrence probability of each type encoded immediately after type S or E is different from the tendency of the occurrence probability of each type encoded immediately after type C, R, or L. Therefore, as described above, the control of the entropy encoding is switched according to prev determined in the procedure in FIG. 31. In this way, the encoding efficiency of the entropy encoding may be able to be improved.

In addition, the content of the event indicated by the value of third bit b2 depends on the value of second bit b1 (type S or R when b1 = 0, and type L or E when b1 = 1). Therefore, if the context or codeword table is determined according to the value of second bit b1 in addition to prev in the entropy encoding of the value of third bit b2, the encoding efficiency may be able to be further improved.

In the above description, encoding a bit may be inputting a bit to an encoding engine. Furthermore, in the encoding engine, a plurality of bits may be compressed into less bits.

FIG. 33 is a flowchart illustrating a first specific example of the decoding of the connection type according to this embodiment. Specifically, FIG. 33 illustrates an example of the decoding processing (S103) in FIG. 31. In this example, entropy decoding of the bit sequence encoded in the encoding method described above with reference to FIG. 32 is performed, and the connection type of the triangle to be decoded is set to any of types C, L, E, R, and S.

First, the value of first bit b0 is decoded by entropy decoding according to prev (S301). Then, whether the value of first bit b0 is 0 is determined (S302). When the value of first bit b0 is 0 (Yes in S302), the connection type of the triangle to be decoded is set to type C (S303).

When the value of first bit b0 is not 0 (No in S302), the value of second bit b1 is decoded by entropy decoding according to prev (S304). Furthermore, the value of third bit b2 is decoded by entropy decoding according to prev (S305). Then, the bit pattern of second bit b1 and third bit b2 is determined (S306 to S308). Then, according to the determination result, the connection type of the triangle to be decoded is set to any of types L, E, R, and S (S309 to S312).

Specifically, when the value of second bit b1 and the value of third bit b2 are 0 and 0, respectively (Yes in S306 and Yes in S307), the connection type is set to type S (S311). When the value of second bit b1 and the value of third bit b2 are 0 and 1, respectively (Yes in S306 and No in S307), the connection type is set to type R (S309).

When the value of second bit b1 and the value of third bit b2 are 1 and 0, respectively (No in S306 and Yes in S308), the connection type is set to type L (S312). When the value of second bit b1 and the value of third bit b2 are 1 and 1, respectively (No in S306 and No in S308), the connection type is set to type E (S310).

Note that when arithmetic decoding is used for the entropy decoding, the context used for determining the predicted occurrence probability of information to be decoded is determined from among a plurality of contexts according to prev. When Huffman decoding is used for the entropy decoding, the codeword table used for decoding is determined from among a plurality of codeword tables according to prev. Furthermore, in the entropy decoding of the value of third bit b2, the context or codeword table may be determined according to the value of second bit b1 in addition to prev.

The tendency of the occurrence probability of each type decoded immediately after type S or E is different from the tendency of the occurrence probability of each type decoded immediately after type C, R, or L, so that as described above, the control of the entropy decoding is switched according to prev determined in the procedure in FIG. 31. This may enable efficient decoding and a reduction of the coding amount.

In addition, the content of the event indicated by the value of third bit b2 depends on the value of second bit b1 (type S or R when b1 = 0, and type L or E when b1 = 1). Therefore, if the context or codeword table is determined according to the value of second bit b1 in addition to prev in the entropy decoding of the value of third bit b2, the coding amount may be able to be further reduced.

FIG. 34 is a flowchart illustrating a second specific example of the encoding of the connection type according to this embodiment. Specifically, FIG. 34 illustrates an example of the encoding processing (S103) in FIG. 31. In this example, types C, R, E, S and L are assigned with bit patterns 0, 10, 110, 1110, and 1111, respectively, and the entropy encoding is performed starting from the most significant bit.

First, whether the connection type of the triangle to be encoded is type C is determined (S401). When the connection type is type C (Yes in S401), 0 is encoded as the value of first bit b0 by entropy encoding according to prev (S405). When the connection type is not type C (No in S401: the connection type is any of L, E, R, and S), 1 is encoded as the value of first bit b0 by entropy encoding according to prev (S402).

Then, whether the connection type of the triangle to be encoded is type R is determined (S403). When the connection type is type R (Yes in S403), 0 is encoded as the value of second bit b1 by entropy encoding according to prev (S408). When the connection type is not type R (No in S403: the connection type is any of L, E, and S), 1 is encoded as the value of second bit b1 by entropy encoding according to prev (S404).

Then, whether the connection type of the triangle to be encoded is type E is determined (S406). When the connection type is type E (Yes in S406), 0 is encoded as the value of third bit b2 by entropy encoding according to prev (S410). When the connection type is not type E (No in S406: the connection type is any of L and S), 1 is encoded as the value of third bit b2 by entropy encoding according to prev (S407).

Then, whether the connection type of the triangle to be encoded is type S is determined (S409). When the connection type is type S (Yes in S409), 0 is encoded as the value of fourth bit b3 by entropy encoding according to prev (S412). When the connection type is not type S (No in S409: the connection type is L), 1 is encoded as the value of fourth bit b3 by entropy encoding according to prev (S411).

Note that when arithmetic encoding is used for the entropy encoding, the context used for determining the predicted occurrence probability of information to be encoded is determined from among a plurality of contexts according to prev. When Huffman encoding is used for the entropy encoding, the codeword table used for encoding is determined from among a plurality of codeword tables according to prev.

The tendency of the occurrence probability of each type encoded immediately after type S or E is different from the tendency of the occurrence probability of each type encoded immediately after type C, R, or L. Therefore, as described above, the control of the entropy encoding is switched according to prev determined in the procedure in FIG. 31. In this way, the encoding efficiency of the entropy encoding may be able to be improved.

Furthermore, in the above description, types C, R, E, S, and L are assigned with bit patterns 0, 10, 110, 1110, and 1111, respectively. However, the types determined in the determination processing (S401, S403, S406, and S409) can be set according to the way of assignment of bit patterns. In this way, any assignment is possible.

Furthermore, a type whose occurrence frequency is high may be assigned with a short bit pattern. In this way, the encoding efficiency may be able to be improved. Therefore, types C and R, whose occurrence frequencies are high, may be assigned with bit patterns 0 and 10, respectively.

FIG. 35 is a flowchart illustrating a second specific example of the decoding of the connection type according to this embodiment. Specifically, FIG. 35 illustrates an example of the decoding processing (S103) in FIG. 31. In this example, entropy decoding of the bit sequence encoded in the encoding method described above with reference to FIG. 34 is performed, and the connection type of the triangle to be decoded is set to any of types C, L, E, R, and S.

First, the value of first bit b0 is decoded by entropy decoding according to prev (S501). Then, whether the value of first bit b0 is 0 is determined (S502). When the value of first bit b0 is 0 (Yes in S502), the connection type of the triangle to be decoded is set to type C (S505). When the value of first bit b0 is not 0 (No in S502), the value of second bit b1 is decoded by entropy decoding according to prev (S503).

Then, whether the value of second bit b1 is 0 is determined (S504). When the value of second bit b1 is 0 (Yes in S504), the connection type of the triangle to be decoded is set to type R (S508). When the value of second bit b1 is not 0 (No in S504), the value of third bit b2 is decoded by entropy decoding according to prev (S506).

Then, whether the value of third bit b2 is 0 is determined (S507). When the value of third bit b2 is 0 (Yes in S507), the connection type of the triangle to be decoded is set to type E (S511). When the value of third bit b2 is not 0 (No in S507), the value of fourth bit b3 is decoded by entropy decoding according to prev (S509).

Then, whether the value of fourth bit b3 is 0 is determined (S510). When the value of fourth bit b3 is 0 (Yes in S510), the connection type of the triangle to be decoded is set to type S (S513). When the value of fourth bit b3 is not 0 (No in S510), the connection type of the triangle to be decoded is set to type L (S512).

Note that when arithmetic decoding is used for the entropy decoding, the context used for determining the predicted occurrence probability of information to be decoded is determined from among a plurality of contexts according to prev. When Huffman decoding is used for the entropy decoding, the codeword table used for decoding is determined from among a plurality of codeword tables according to prev.

The tendency of the occurrence probability of each type decoded immediately after type S or E is different from the tendency of the occurrence probability of each type decoded immediately after type C, R, or L, so that as described above, the control of the entropy decoding is switched according to prev determined in the procedure in FIG. 31. This may enable efficient decoding and a reduction of the coding amount.

Furthermore, in the above description, types C, R, E, S, and L are assigned with bit patterns 0, 10, 110, 1110, and 1111, respectively. However, the types set in the setting processing (S505, S508, S511, S513, and S512) can be set according to the way of assignment of bit patterns. In this way, any assignment is possible.

Furthermore, a type whose occurrence frequency is high may be assigned with a short bit pattern. In this way, the coding amount may be able to be reduced. Therefore, types C and R, whose occurrence frequencies are high, may be assigned with bit patterns 0 and 10, respectively.

In the example described using FIGS. 31 to 35, the value of variable prev is set according to a type of the immediately previously encoded triangle. In addition, a parameter for controlling the entropy encoding of the connection type of the triangle is determined according to prev. Then, according to the parameter determined, entropy encoding of the connection type of the triangle to be encoded is performed.

FIG. 36 is a flowchart illustrating another example of encoding processing and decoding processing for a connection type according to the present embodiment. Specifically, in this example, variable c_idx may be used in place of prev. For example, in addition to the connection type of the immediately previously encoded triangle, the value of c_idx is set also according to the connection types of n-number (where n is an integer greater than or equal to 1) of triangles encoded in the past. In other words, the value of c_idx is set according to the connection types of (n+1)-number of encoded triangles.

Specific processing in FIG. 36 will be described step by step. First, each of variables c_idx and type[0] to type[n] (where n is an integer greater than or equal to 1) is set to an initial value (for example, 0) (S601).

Variable c_idx is used to determine a parameter for controlling the entropy encoding of the connection type of the triangle. Variables type[0] to type[n] hold integers corresponding to the connection types of encoded triangles. Specifically, type[x] holds an integer corresponding to an (x+1)-th previous connection type and, for example, holds 0 for Type C, 1 for Type L, 2 for Type E, 3 for Type R, 4 for Type S, and the like.

Then, entropy encoding of the connection type of the triangle is repeated (S602 to S609). Specifically, first, a parameter for controlling entropy encoding of the connection type of the triangle is determined according to c_idx, and using the determined parameter, entropy encoding of the connection type of the triangle to be encoded is performed (S603).

For example, when arithmetic encoding is used for entropy encoding, a context used for determining a predicted occurrence probability of information to be encoded may be determined from among a plurality of contexts according to c_idx. Specifically, for example, a plurality of contexts may be stored as a one-dimensional array, and an element specified by c_idx from the one-dimensional array may be used as a context.

Alternatively, when Huffman encoding is used for entropy encoding, a codeword table used for encoding may be determined from among a plurality of codeword tables according to c_idx.

Next, in loop processing (S604 to S606), each of type[1] to type[n] is updated to an integer corresponding to the connection type of the previously encoded triangle. In other words, for each k from n to 1, a value of type[k-1] is copied to type[k] (S605).

Next, type[0] is set to an integer corresponding to the connection type of the triangle encoded in the current encoding processing (S603) (S607). Then, c_idx is set according to type[0] to type[n] (S608). This c_idx is used when encoding the connection type of a next triangle.

A specific example of setting c_idx (S608) is as follows. For example, idx_x ($0 \leq x \leq n$) is determined according to type[x]. In this case, type[x] can take five possible values. On the other hand, idx_x can take five or fewer possible values. Furthermore, c_idx may be set using an (n+1)-dimensional array by c_idx = array[idx_0][idx_1] ... [idx_n]. According to this configuration, a value of c_idx may be set according to a combination of idx_0, idx_1, ..., idx_n.

FIG. 37 is a relationship diagram illustrating an example of a correspondence between an immediately previous connection type and values used to determine a context according to the present embodiment. For example, as illustrated in Table T106-01, five values of idx_0 are associated with five values of type[0]. In this case, five contexts are used according to the immediately previous connection type.

In addition, for example, as illustrated in Table T106-02, Table T106-03, and Table T106-04, four values of idx_0 are associated with the five values of type[0]. In this case, four contexts are used according to the immediately previous connection type. In addition, for example, as illustrated in Table T106-05 and Table T106-06, three values of idx_0 are associated with the five values of type[0]. In this case, three contexts are used according to the immediately previous connection type.

FIG. 38 is a relationship diagram illustrating an example of a correspondence between a second previous connection type and values used to determine a context according to the present embodiment. For example, as illustrated in Table T106-11 and Table T106-12, three values of idx_1 are associated with five values of type[1]. In this case, three contexts are used according to the second previous connection type.

In addition, for example, as illustrated in Table T106-13, two values of idx_1 are associated with the five values of type[1]. In this case, two contexts are used according to the second previous connection type.

For example, when n = 1, c_idx is determined according to the connection type of the immediately previous triangle and the connection type of the second previous triangle, and the context is determined according to c_idx. In this case, a combination of one table from Table T106-01 to Table T106-06 and one table from Table T106-11 to Table T106-13 may be used. Then, idx_0 and idx_1 are defined by the two tables, c_idx is determined by c_idx = array[idx_0][idx_1], and the context is determined by c_idx.

In addition, for example, when four contexts are used according to the connection type of the immediately previous triangle and three contexts are used according to the connection type of the second previous triangle, 12 contexts may be used by combining the four contexts and the three contexts.

Note that an example of setting c_idx according to an array has been described above. However, a method for setting a context used to encode the connection type of a triangle to be encoded according to the connection types of (n+1)-number of encoded triangles is not limited to methods based on an array. For example, c_idx may be determined by the following equation.

[Math. 1]

$$c_{idx} = idx\_0 + \sum_{k=1}^{n} \left( idx\_k \times \prod_{j=0}^{k-1} N(j) \right)$$

Here, N(k) denotes the number of elements in idx_k (k = 0, ..., n-1). For example, when Table T106-01 is used, N(0) is expressed as 5, and when Table T106-11 is used, N(1) is expressed as 3. Alternatively, the context may be stored in an (n+1)-dimensional array, and the context may be directly determined based on the combination of idx_0, idx_1, ..., idx_n.

The inventors obtained the following findings as a result of their trials. Type C occurs frequently, and type C also occurs consecutively frequently. Therefore, by making the context when type C has been immediately previously and second previously encoded independent of contexts in other cases, efficient encoding and a reduction in the coding amount may become possible.

In addition, a trend of the occurrence probability for each type encoded immediately after type S differs from a trend of the occurrence probability of each type encoded immediately after other types. Therefore, by making the context when type S has been immediately previously and second previously encoded independent of contexts in other cases, efficient encoding and a reduction of the coding amount may become possible.

Specifically, using Table T106-01 to Table T106-05, Table T106-11, and the like may make efficient encoding and reduction of the coding amount possible.

Furthermore, in order to reduce memory utilization, the context of one of type C and type S may be integrated with the context of the other of type C and type S. The inventors found that, in this case, it may be possible to reduce memory utilization while suppressing an increase in the coding amount by integrating a context of type S with contexts of other types while maintaining the independence of a context of type C. Specifically, using Table T106-06, Table T106-12, Table T106-13, and the like, it may be possible to reduce memory utilization while suppressing an increase in the coding amount.

Note that in the example in FIG. 36, a value of 0 to 4 is set to type[n] according to the connection type of the triangle. However, a different method may be used to identify the connection type of the triangle. In addition, in Table T106-01 to Table T106-06 and Table T106-11 to Table T106-13, a value of 0 to 4 is set to idx_n according to the connection type of the triangle. However, a different method may be used to uniquely determine an element of an array according to the connection type of the triangle.

In addition, an example of encoding is described above. However, by substituting "decoding" for "encoding", similar examples can be applied to decoding.

Note that a shape of a face is not limited to a triangle and other shapes may be used. For example, a polygon other than a triangle may be used. In addition, whether or not to determine a context based on the connection type of a processed polygon may be switched, and a polygon, a group of a connection type, and a correspondence of a context used as a determination criterion of the context may be switched. In this case, a parameter indicating the switching, the correspondence, and the like may be encoded.

In addition, in any of the aspects of the present disclosure, instead of setting a context for arithmetic encoding of a connection type of a polygon to be processed according to the connection type of a processed polygon, a parameter indicating the context may be derived according to the connection type of the processed polygon. For example, the parameter indicating the context may be derived through an operation using the value of prev or c_idx.

FIG. 39 is a flowchart illustrating a second specific example of the encoding of the connection type according to this embodiment. Specifically, FIG. 39 illustrates an example of the encoding processing (S603) in FIG. 36. In this example, types C, L, E, R, and S are assigned with bit patterns 0, 110, 111, 101, and 100, respectively, and the entropy encoding is performed starting from the most significant bit.

First, whether the connection type of the triangle to be encoded is type C is determined (S701). When the connection type is type C (Yes in S701), 0 is encoded as the value of first bit b0 by entropy encoding according to c_idx (S702). When the connection type is not type C (No in S701: the connection type is any of L, E, R, and S), 1 is encoded as the value of first bit b0 by entropy encoding according to c_idx (S703).

Next, whether or not the connection type of the previously (immediately previously) encoded triangle is type C is determined (S704). When the connection type of the previously encoded triangle is type C (Yes in S704), the connection type of the triangle to be encoded is determined to be neither type E nor type L. Then, whether or not the connection type is type S is determined without encoding the value of second bit b1 (S708).

When the connection type of the previously encoded triangle is not type C (No in S704), whether or not the connection type of the triangle to be encoded is either type R or type S is determined (S705). When the connection type is either type R or type S (Yes in S705), 0 is encoded as the value of second bit b1 by entropy encoding according to c_idx (S706).

Then, whether or not the connection type of the triangle to be encoded is type S is determined (S708). When the connection type is type S (Yes in S708), 0 is encoded as the value of third bit b2 by entropy encoding according to c_idx (S710). When the connection type is not type S (No in S708: the connection type is R), 1 is encoded as the value of third bit b2 by entropy encoding according to c_idx (S709).

When the connection type is neither type R nor type S (No in S705: the connection type is L or E), 1 is encoded as the value of second bit b1 by entropy encoding according to c_idx (S707).

Then, whether or not the connection type of the triangle to be encoded is type L is determined (S711). When the connection type is type L (Yes in S711), 0 is encoded as the value of third bit b2 by entropy encoding according to c_idx (S713). When the connection type is not type L (No in S711: the connection type is E), 1 is encoded as the value of third bit b2 by entropy encoding according to c_idx (S712).

Note that when arithmetic encoding is used for entropy encoding, a context used for determining a predicted occurrence probability of information to be encoded is determined from among a plurality of contexts according to c_idx. When Huffman encoding is used for entropy encoding, a codeword table used for encoding is determined from among a plurality of codeword tables according to c_idx.

In addition, in the entropy encoding of the value of third bit b2 (S709, S710, S712, and S713), the context or the codeword table may be determined according to the value of second bit b1 in addition to c_idx. Here, when the previous connection type is type C, since the connection type of the triangle to be encoded is either type R or type S, 0 is used as the value of second bit b1.

Neither type L nor type E can logically occur immediately after type C. Therefore, immediately after type C, by omitting the encoding of second bit b1 for identifying type L and type E and only encoding the two bits of first bit b0 and third bit b2, it may be possible to encode the connection type of the triangle with a smaller coding amount.

In addition, it may be possible to suppress the coding amount of the connection type of the triangle by always using the same context for encoding second bit b1 immediately after type C instead of omitting the encoding of second bit b1.

In addition, the content of the event indicated by the value of third bit b2 depends on the value of second bit b1 (type S or R when b1 = 0, and type L or E when b1 = 1). Therefore, if the context or codeword table is determined according to the value of second bit b1 in addition to c_idx in the entropy encoding of the value of third bit b2, it may be possible to further reduce the coding amount.

In addition, bit patterns 0, 011, 111, 101, and 001 may be assigned to types C, L, E, R, and S, respectively. Alternatively, unnecessary leading zeros may be omitted and bit patterns 0, 11, 111, 101, and 1 may be assigned to types C, L, E, R, and S, respectively. In addition, entropy encoding may be performed starting from the least significant bit.

Accordingly, types C, L, E, R, and S are assigned with bit patterns 0, 110, 111, 101, and 100, respectively, and an operation corresponding to the operation described above in which entropy encoding is performed starting from the most significant bit can be performed.

In the above description, encoding a bit may be inputting a bit to an encoding engine. Furthermore, in the encoding engine, a plurality of bits may be compressed into less bits.

FIG. 40 is a flowchart illustrating a third specific example of decoding of the connection type according to the present embodiment. In other words, FIG. 40 illustrates an example of the decoding processing (S603) in FIG. 36. In this example, entropy decoding of the bit sequence encoded in the encoding method described with reference to FIG. 39 is performed, and the connection type of the triangle to be decoded is set to any of types C, L, E, R, and S.

First, the value of first bit b0 is decoded by entropy decoding according to c_idx (S801). Then, whether or not the value of first bit b0 is 0 is determined (S802). When the value of first bit b0 is 0 (Yes in S802), the connection type of the triangle to be decoded is set to type C (S803). When the value of first bit b0 is not 0 (No in S802), whether or not the connection type of the previously (immediately previously) decoded triangle is type C is determined (S804).

When the connection type of the previously decoded triangle is type C (Yes in S804), the connection type of the triangle to be decoded is determined to be neither type E nor type L. Then, without decoding the value of second bit b1, the value of second bit b1 is set to 0 (S805). When the connection type of the previously decoded triangle is not type C (No in S804), the value of second bit b1 is decoded by entropy decoding according to c_idx (S806).

Next, the value of third bit b2 is decoded by entropy decoding according to c_idx (S807). Then, the bit pattern of second bit b1 and third bit b2 is determined (S808 to S810). Then, according to the determination result, the connection type of the triangle to be decoded is set to any of types L, E, R, and S (S811 to S814).

Specifically, when the value of second bit b1 and the value of third bit b2 are 0 and 0, respectively (Yes in S808 and Yes in S809), the connection type is set to type S (S812). When the value of second bit b1 and the value of third bit b2 are 0 and 1, respectively (Yes in S808 and No in S809), the connection type is set to type R (S811).

When the value of second bit b1 and the value of third bit b2 are 1 and 0, respectively (No in S808 and Yes in S810), the connection type is set to type L (S814). When the value of second bit b1 and the value of third bit b2 are 1 and 1, respectively (No in S808 and No in S810), the connection type is set to type E (S813).

Note that when arithmetic decoding is used for the entropy decoding, the context used for determining the predicted occurrence probability of information to be decoded is determined from among a plurality of contexts according to c_idx. When Huffman decoding is used for the entropy decoding, the codeword table used for decoding is determined from among a plurality of codeword tables according to c_idx. Furthermore, in the entropy decoding of the value of third bit b2 (S807), the context or codeword table may be determined according to the value of second bit b1 in addition to c_idx.

Neither type L nor type E can logically occur immediately after type C. Therefore, immediately after type C, by omitting the decoding of second bit b1 for identifying type L and type E and only decoding the two bits of first bit b0 and third bit b2, it may be possible to decode the connection type of the triangle with a smaller coding amount.

In addition, it may be possible to suppress the coding amount of the connection type of the triangle by always using the same context for decoding second bit b1 immediately after type C instead of omitting the decoding of second bit b1.

In addition, the content of the event indicated by the value of third bit b2 depends on the value of second bit b1 (type S or R when b1 = 0, and type L or E when b1 = 1). Therefore, by determining the context or codeword table according to the value of second bit b1 in addition to c_idx in the entropy decoding of the value of third bit b2, it may be possible to further reduce the coding amount.

In addition, bit patterns 0, 011, 111, 101, and 001 may be assigned to types C, L, E, R, and S, respectively. Alternatively, unnecessary leading zeros may be omitted and bit patterns 0, 11, 111, 101, and 1 may be assigned to types C, L, E, R, and S, respectively. In addition, entropy decoding may be performed starting from the least significant bit.

Accordingly, types C, L, E, R, and S are assigned with bit patterns 0, 110, 111, 101, and 100, respectively, and an operation corresponding to the operation described above in which entropy decoding is performed starting from the most significant bit can be performed.

FIG. 41 is a flowchart illustrating a fourth specific example of encoding of the connection type according to the present embodiment. In other words, FIG. 41 illustrates an example of the encoding processing (S603) in FIG. 36. In this example, types C, R, S, E, and L are assigned with bit patterns 0, 10, 110, 1110, and 1111, respectively, and the entropy encoding is performed starting from the most significant bit.

First, whether or not the connection type of the triangle to be encoded is type C is determined (S901). When the connection type is type C (Yes in S901), 0 is encoded as the value of first bit b0 by entropy encoding according to c_idx (S904). When the connection type is not type C (No in S901: the connection type is any of L, E, R, and S), 1 is encoded as the value of first bit b0 by entropy encoding according to c_idx (S902).

Next, whether or not the connection type of the triangle to be encoded is type R is determined (S903). When the connection type is type R (Yes in S903), 0 is encoded as the value of second bit b1 by entropy encoding according to c_idx (S906). When the connection type is not type R (No in S903: the connection type is any of L, E, and S), 1 is encoded as the value of second bit b1 by entropy encoding according to c_idx (S905).

Next, whether or not the connection type of the previously (immediately previously) encoded triangle is type C is determined (S907). When the connection type of the previously encoded triangle is type C (Yes in S907), the connection type of the triangle to be encoded is determined to be neither type E nor type L. Then, without encoding the value of third bit b2, the processing ends.

When the connection type of the previously encoded triangle is not type C (No in S907), whether or not the connection type of the triangle to be encoded is type S is determined (S908). When the connection type is type S (Yes in S908), 0 is encoded as the value of third bit b2 by entropy encoding according to c_idx (S913). When the connection type is not type S (No in S908: the connection type is either L or E), 1 is encoded as the value of third bit b2 by entropy encoding according to c_idx (S909).

Next, whether or not the connection type of the triangle to be encoded is type E is determined (S910). When the connection type is type E (Yes in S910), 0 is encoded as the value of fourth bit b3 by entropy encoding according to c_idx (S912). When the connection type is not type E (No in S910: the connection type is L), 1 is encoded as the value of fourth bit b3 by entropy encoding according to c_idx (S911).

Note that when arithmetic encoding is used for entropy encoding, a context used for determining a predicted occurrence probability of information to be encoded is determined from among a plurality of contexts according to c_idx. When Huffman encoding is used for entropy encoding, a codeword table used for encoding is determined from among a plurality of codeword tables according to c_idx.

Neither type L nor type E can logically occur immediately after type C. Therefore, immediately after type C, by omitting the encoding of third bit b2 for identifying type L and type E and only encoding the two bits of first bit b0 and second bit b1, it may be possible to encode the connection type of the triangle with a smaller coding amount.

In addition, it may be possible to suppress the coding amount of the connection type of the triangle by always using the same context for encoding third bit b2 immediately after type C instead of omitting the encoding of third bit b2.

In addition, in the above description, types C, R, S, E, and L are assigned with bit patterns 0, 10, 110, 1110, and 1111, respectively. However, the types to be determined in the determination processing (S901, S903, S908, and S910) may be set according to the way of assignment of bit patterns. In this way, any assignment is possible.

For example, as described above, types E and L may be assigned with bit patterns 1110 and 1111, respectively. Alternatively, types E and L may be assigned with bit patterns 1111 and 1110, respectively. Accordingly, it may be possible to omit encoding of third bit b2 immediately after type C.

Furthermore, a type whose occurrence frequency is high may be assigned with a short bit pattern. Accordingly, efficient encoding and a reduction of the coding amount may be possible. Therefore, as described above, types C and R whose occurrence frequencies are high may be assigned with bit patterns 0 and 10, respectively. Alternatively, types C and R may be assigned with bit patterns 10 and 0, respectively.

FIG. 42 is a flowchart illustrating a fourth specific example of decoding of the connection type according to the present embodiment. In other words, FIG. 42 illustrates an example of the decoding processing (S603) in FIG. 36. In this example, entropy decoding of the bit sequence encoded in the encoding method described above with reference to FIG. 41 is performed, and the connection type of the triangle to be decoded is set to any of types C, L, E, R, and S.

First, the value of first bit b0 is decoded by entropy decoding according to c_idx (S1001). Then, whether or not the value of first bit b0 is 0 is determined (S1002). When the value of first bit b0 is 0 (Yes in S1002), the connection type of the triangle to be decoded is set to type C (S1005). When the value of first bit b0 is not 0 (No in S1002), the value of second bit b1 is decoded by entropy decoding according to c_idx (S1003).

Then, whether or not the value of second bit b1 is 0 is determined (S1004). When the value of second bit b1 is 0 (Yes in S1004), the connection type of the triangle to be decoded is set to type R (S1010). When the value of second bit b1 is not 0 (No in S1004), whether or not the connection type of the previously (immediately previously) decoded triangle is type C is determined (S1006).

When the connection type of the previously decoded triangle is type C (Yes in S1006), the connection type of the triangle to be decoded is determined to be type S. Then, without decoding the value of third bit b2, the connection type of the triangle to be decoded is set to type S (S1011). When the connection type of the previously decoded triangle is not type C (No in S1006), the value of third bit b2 is decoded by entropy decoding according to c_idx (S1007).

Then, whether or not the value of third bit b2 is 0 is determined (S1008). When the value of third bit b2 is 0 (Yes in S1008), the connection type of the triangle to be decoded is set to type S (S1011). When the value of third bit b2 is not 0 (No in S1008), the value of fourth bit b3 is decoded by entropy decoding according to c_idx (S1009).

Then, whether or not the value of fourth bit b3 is 0 is determined (S1012). When the value of fourth bit b3 is 0 (Yes in S1012), the connection type of the triangle to be decoded is set to type E (S1014). When the value of fourth bit b3 is not 0 (No in S1012), the connection type of the triangle to be decoded is set to type L (S1013).

Note that when arithmetic decoding is used for the entropy decoding, the context used for determining the predicted occurrence probability of information to be decoded is determined from among a plurality of contexts according to c_idx. When Huffman decoding is used for the entropy decoding, the codeword table used for decoding is determined from among a plurality of codeword tables according to c_idx.

Neither type L nor type E can logically occur immediately after type C. Therefore, immediately after type C, by omitting the decoding of third bit b2 for identifying type L and type E and only decoding the two bits of first bit b0 and second bit b1, it may be possible to decode the connection type of the triangle with a smaller coding amount.

In addition, it may be possible to suppress the coding amount of the connection type of the triangle by always using the same context for decoding third bit b2 immediately after type C instead of omitting the decoding of third bit b2.

In addition, in the above description, types C, R, S, E, and L are assigned with bit patterns 0, 10, 110, 1110, and 1111, respectively. However, the types to be set in the setting processing (S1005, S1010, S1011, S1014, and S1013) may be set according to the way of assignment of bit patterns. In this way, any assignment is possible.

For example, as described above, types E and L may be assigned with bit patterns 1110 and 1111, respectively. Alternatively, types E and L may be assigned with bit patterns 1111 and 1110, respectively. Accordingly, it may be possible to omit decoding of third bit b2 immediately after type C.

Furthermore, a type whose occurrence frequency is high may be assigned with a short bit pattern. Accordingly, it may be possible to reduce the coding amount. Therefore, as described above, types C and R whose occurrence frequencies are high may be assigned with bit patterns 0 and 10, respectively. Alternatively, types C and R may be assigned with bit patterns 10 and 0, respectively.

FIG. 43 is a relationship diagram illustrating another example of a correspondence between a second previous connection type and values used to determine a context according to the present embodiment. For example, in the setting processing (S608) in FIG. 36, when n = 1, c_idx is set using the values illustrated in FIG. 38 according to each type of triangle. The values illustrated in FIG. 43 may be used instead of the values illustrated in FIG. 38.

For example, as illustrated in Table T107-01 to Table T107-03 and Table T107-14, three values of idx_1 are associated with five values of type[1]. In this case, three contexts are used according to the second previous connection type. In addition, for example, as illustrated in Table T107-04 and Table T107-05, two values of idx_1 are associated with the five values of type[1]. In this case, two contexts are used according to the second previous connection type.

In addition, for example, as illustrated in Table T107-06, one value of idx_1 is associated with the five values of type[1]. In this case, one context is used according to the second previous connection type.

Furthermore, the table used to determine idx_1 may be determined according to the connection type (type[0]) of the previously (immediately previously) encoded/decoded triangle. Specifically, when idx_0 is determined using Table T106-01, the table for determining idx_1 may be determined as follows.

(1) When the connection type of the previously encoded or decoded triangle is type C, then Table T107-05 or Table T107-06 may be used.

(2) When the connection type of the previously encoded or decoded triangle is type S, then Table T107-06 may be used.

(3) When the connection type of the previously encoded or decoded triangle is type L, then Table T107-01 or Table T107-06 may be used.

(4) When the connection type of the previously encoded or decoded triangle is type R, then Table T107-02, Table T107-14, or Table T106-13 may be used.

(5) When the connection type of the previously encoded or decoded triangle is type E, then Table T107-03 or Table T107-04 may be used.

The inventors obtained the following findings as a result of their trials. If the previous (immediately previous) connection type differs, a correspondence between the connection type of the triangle to be encoded and the second previous connection type differs. Therefore, by switching the second previous type to be made independent in the determination of a context according to the previous (immediately previous) type, it may be possible to improve encoding efficiency of the entropy encoding. As a result, by using the combinations described above, it may be possible to reduce memory utilization while suppressing a decline in encoding efficiency of the entropy encoding.

In addition, in any of the aspects of the present disclosure, instead of setting a context for arithmetic encoding of a connection type of a polygon to be processed according to the connection type of a processed polygon, a parameter indicating the context may be derived according to the connection type of the processed polygon. For example, the parameter indicating the context may be derived through an operation using the value of prev or c_idx.

As described above, when the connection type of the immediately previous triangle is type C, the connection type of the triangle to be processed is neither type L nor type E. Specifically, for example, as illustrated in FIG. 29, when the connection type of the triangle to be processed is type C, a triangle that is not yet processed is connected to the left side of a next triangle. On the other hand, when the connection type of the triangle is type L or type E, a triangle that is not yet processed is not connected to the left side of the triangle. Therefore, when the connection type of the triangle to be processed is type C, the connection type of the next triangle is neither type L nor type E.

As a result, when the connection type of the immediately previous triangle is type C, information for identifying the connection type of the triangle to be processed is encoded from a candidate set of types C, R, and S. Accordingly, it may be possible to reduce the coding amount as compared to encoding information for identifying the connection type from a candidate set of all types.

Here, when the connection type of the immediately previous triangle is type C, a candidate set of types C, R, and S is used as the candidate set of connection types of the triangle to be processed. However, the candidate set of connection types to be processed is not limited to this example and may be defined by a previously processed connection type.

In the above example, values as shown in Tables T106-01 to T106-06 in FIG. 37 and Tables T107-01 to T107-06 and Table T107-14 in FIG. 43 are set to idx_0 and idx_1 according to the connection types of the (n+1)-number (here n = 1) of encoded triangles. Then, c_idx is set according to idx_0 and idx_1 (S608 in FIG. 36). Additionally, c_idx may be set according to Crun indicating the number of types C consecutively encoded, in addition to the connection types of the (n+1)-number of the encoded triangles.

FIG. 44 is a flowchart illustrating yet another example of encoding processing and decoding processing for a connection type according to the embodiment. In this procedure, processes regarding the initialization, update, and use of Crun are added. The other portions are the same as those in the procedure shown in FIG. 36. Hereinafter, the added portions are described.

Specifically, setting Crun to 0 in the initialization process (S1101) is added. Moreover, adding 1 to Crun (S1109) or setting Crun to 0 (S1110) according to the connection type of a triangle in the update process (S1108 to S1110) is added. Furthermore, using Crun in a c_idx setting process (S1111) is added.

By means of these processes, the number of types C consecutively encoded is set to Crun. Then, in the c_idx setting process (S1111), c_idx is set using the number of types C consecutively encoded in addition to the connection types of the (n+1)-number of encoded triangles.

Here, the number of types C consecutively encoded specifically corresponds to the number of one or more types C consecutively encoded up to previous (immediately previous) type C, and corresponds to the number of one or more connection types that are consecutively encoded as one or more types C up to a previous connection type. Moreover, the number of types C consecutively encoded may be expressed as, for example, the number of consecutive types C, the run length of types C, the number of consecutive values equal to type C, the run length of values equal to type C, or the number of types C of triangles consecutively encoded. Furthermore, type C corresponds to the above-described corner type.

FIG. 45 is a relationship diagram illustrating an example of a correspondence between values used to determine a context and at least one of the number of consecutive second preceding connection types or the number of consecutive types C according to the embodiment. In this example, three values and three contexts are used for idx_1 according to at least one of the number of the consecutive second preceding connection types or the number of consecutive types C.

Specifically, when a connection type (type[0]) of a triangle previously (immediately previously) encoded is type C, in the c_idx setting process (S1111), idx_1 for setting c_idx may be determined using the example of Table T108-01 in FIG. 45. In the example of Table T108-01, when Crun is less than threshold value TH(0), idx_i is set to 0; when Crun is greater than or equal to threshold value TH(0) and is less than threshold value TH(1), idx_1 is set to 1; and when Crun is greater than or equal to threshold value TH(1), idx_1 is set to 2.

Here, threshold value TH(0) is less than threshold value TH(1). Threshold value TH(0) may be, as a specific set value, for example, 2 or a value greater than or equal to 2 and less than or equal to 4. Threshold value TH(1) may be, for example, 7 or a value greater than or equal to 5.

When 2 or a value close to 2 is used as threshold value TH(0), separate contexts are used between a case in which types C are not consecutive or the number of consecutive types C is low and a case in which types C are consecutive. Accordingly, it may be possible to encode the connection type of the next triangle according to an occurrence probability of the connection type of the next triangle in each of the cases. Therefore, there is a possibility of improving the encoding efficiency.

It should be noted that when threshold value TH(0) is 2, the condition of Crun < TH(0) in the example of Table T108-01 may be determined by another method that achieves the same results. For example, a condition that type[0] is a value indicating type C and type[1] is a value indicating a type other than type C may be determined.

Moreover, in a case in which types C are not consecutive, type[1] is frequently type R. For this reason, even when idx_1 is set as in the example of Table T108-02 in FIG. 45, in Table T108-01, it may be possible to achieve effects equivalent to those achieved in a case in which threshold value TH(0) is 2.

Furthermore, in a generic mesh, the number of consecutive types C is usually a value less than or equal to approximately 6 to 8. On the other hand, in a large mesh whose number of triangles forming the large mesh is high, the number of consecutive types C may exceed 100.

For this reason, when 7 or a value close to 7 is used as threshold value TH(1), separate contexts are used between a case in which a generic mesh has the number of consecutive types C that is a value less than or equal to approximately 6 to 8 and a case in which a large mesh includes an excessively large number of consecutive types C. Accordingly, it may be possible to encode the connection type of the next triangle according to an occurrence probability of the connection type of the next triangle in each of the cases. Therefore, there is a possibility of improving the encoding efficiency.

In addition, an example of encoding is described above. However, by substituting "decoding" for "encoding", similar examples can be applied to decoding.

Moreover, in the procedure in FIG. 44, the table used to determine idx_1 may be determined according to the connection type (type[0]) of the previously (immediately previously) encoded/decoded triangle. Specifically, when idx_0 is determined using Table T106-01, the table for determining idx_1 may be determined as follows.

(1) When the connection type of the previously encoded or decoded triangle is type C, then Table T108-01 may be used. In this case, c_idx may be determined to be one of 0, 1, or 2 according to the number of consecutive types C.

(2) When the connection type of the previously encoded or decoded triangle is type S, then Table T107-06 may be used. In this case, c_idx may be determined to be 3.

(3) When the connection type of the previously encoded or decoded triangle is type L, then Table T107-06 may be used. In this case, c_idx may be determined to be 4.

(4) When the connection type of the previously encoded or decoded triangle is type R, then Table T107-14 may be used. In this case, c_idx may be determined to be one of 5, 6, or 7 according to the connection type of the second preceding encoded or decoded triangle.

(5) When the connection type of the previously encoded or decoded triangle is type E, then Table T107-06 may be used. In this case, c_idx may be determined to be 8.

The inventors obtained the following findings as a result of their trials. A correlation between the connection type of a triangle to be encoded and the second preceding connection type (type[1]) or at least the third preceding connection type (type[n], $n \geq 2$) varies depending on the previous (immediately previous) connection type (type[0]). Therefore, by switching a method for determining idx_1 used to determine a context according to the previous (immediately previous) connection type, it may be possible to improve the encoding efficiency of entropy encoding.

As a result, by using the combinations described above, it may be possible to reduce memory utilization while suppressing a decline in encoding efficiency of the entropy encoding.

It should be noted that, in the combinations described above, even in the case where idx_1 is determined using Table T108-02 when the connection type of the previously encoded or decoded triangle is type C, it may be possible to achieve the same effect.

FIG. 46 is a flowchart illustrating a fifth specific example of encoding of the connection type according to the embodiment. In other words, FIG. 46 illustrates an example of the encoding process (S603) in FIG. 36 and the encoding process (S1103) in FIG. 44.

In this example, a character string of C, L, E, R, and S is encoded starting from the end to the start, that is, in reverse order. To put it another way, for triangles forming a mesh, the connection type of each of the triangles is determined according to processing order, and the connection type is encoded in reverse order of the processing order used to determine the connection type. Additionally, in the example, types C, L, E, R, and S are assigned with bit patterns 0, 110, 111, 101, and 100, respectively, and the entropy encoding is performed starting from the most significant bit of each of the bit patterns.

Specifically, first, whether the connection type of a previously (immediately previously) encoded triangle is one of types L or E is determined (S1201).

When the connection type of the previously encoded triangle is type L or type E (Yes in S1201), the connection type of a triangle to be encoded is determined not to be type C. Then, whether the connection type of the triangle to be encoded is one of types R or S is determined without encoding a value of first bit b0 (S1205).

When the connection type of the previously encoded triangle is neither type L nor type E (No in S1201), whether the connection type of the triangle to be encoded is type C is determined (S1202). When the connection type of the triangle to be encoded is type C (Yes in S1202), 0 is encoded as the value of first bit b0 by entropy encoding according to c_idx (S1203).

When the connection type of the triangle to be encoded is not type C (No in S1202: when the connection type is one of L, E, R, or S), 1 is encoded as the value of first bit b0 by entropy encoding according to c_idx (S1204). Then, whether the connection type of the triangle to be encoded is one of types R or S is determined (S1205).

When the connection type of the triangle to be encoded is type R or type S (Yes in S1205), 0 is encoded as a value of second bit b1 by entropy encoding according to c_idx (S1206). Then, whether the connection type of the triangle to be encoded is type S is determined (S1208).

When the connection type of the triangle to be encoded is type S (Yes in S1208), 0 is encoded as a value of third bit b2 by entropy encoding according to c_idx (S1210). When the connection type of the triangle to be encoded is not type S (No in S1208: when the connection type is R), 1 is encoded as the value of third bit b2 by entropy encoding according to c_idx (S1209).

When the connection type of the triangle to be encoded is neither type R nor type S (No in S1205: when the connection type is L or E), 1 is encoded as the value of second bit b1 by entropy encoding according to c_idx (S1207). Then, whether the connection type of the triangle to be encoded is type L is determined (S1211).

When the connection type of the triangle to be encoded is type L (Yes in S1211), 0 is encoded as the value of third bit b2 by entropy encoding according to c_idx (S1213). When the connection type of the triangle to be encoded is not type L (No in S1211: when the connection type is E), 1 is encoded as the value of third bit b2 by entropy encoding according to c_idx (S1212).

Note that when arithmetic encoding is used for entropy encoding, a context used for determining a predicted occurrence probability of information to be encoded is determined from among a plurality of contexts according to c_idx. When Huffman encoding is used for entropy encoding, a codeword table used for encoding is determined from among a plurality of codeword tables according to c_idx.

In addition, in the entropy encoding of the value of third bit b2 (S1209, S1210, S1212, and S1213), the context or the codeword table may be determined according to the value of second bit b1 in addition to c_idx.

Type C does not logically occur immediately after type L or type E. Therefore, immediately after type L or type E, by omitting the encoding of first bit b0 for identifying type C and only encoding the two bits of second bit b1 and third bit b2, it may be possible to encode the connection type of the triangle with a smaller coding amount.

In addition, it may be possible to suppress the coding amount of the connection type of the triangle by, for example, always using the same context for encoding first bit b0 immediately after type L or type E instead of omitting the encoding of first bit b0.

In addition, the content of the event indicated by the value of third bit b2 depends on the value of second bit b1 (type S or R when b1 = 0, and type L or E when b1 = 1). Therefore, if the context or codeword table is determined according to the value of second bit b1 in addition to c_idx in the entropy encoding of the value of third bit b2, it may be possible to further reduce the coding amount.

In addition, bit patterns 0, 011, 111, 101, and 001 may be assigned to types C, L, E, R, and S, respectively. Alternatively, unnecessary leading zeros may be omitted and bit patterns 0, 11, 111, 101, and 1 may be assigned to types C, L, E, R, and S, respectively. In addition, entropy encoding may be performed starting from the least significant bit of each of the bit patterns.

Accordingly, types C, L, E, R, and S are assigned with bit patterns 0, 110, 111, 101, and 100, respectively, and an operation corresponding to the operation described above in which entropy encoding is performed starting from the most significant bit can be performed.

In the above description, encoding a bit may be inputting a bit to an encoding engine. Furthermore, in the encoding engine, a plurality of bits may be compressed into less bits.

FIG. 47 is a flowchart illustrating a fifth specific example of decoding of the connection type according to the embodiment. In other words, FIG. 47 illustrates an example of the decoding process (S603) in FIG. 36 and the decoding process (S1103) in FIG. 44.

In this example, entropy decoding of the bit sequence encoded by the encoding method described with reference to FIG. 46 is performed. In other words, the entropy decoding of the bit sequence in which a character string of C, L, E, R, and S is encoded starting from the end to the start (i.e., reverse order) is performed in decoding order that is the same as encoding order. Then, one of types C, L, E, R or S is set to the connection type of a triangle to be decoded.

Specifically, first, whether the connection type of a previously (immediately previously) decoded triangle is one of types L or E is determined (S1301).

When the connection type of the previously decoded triangle is type L or type E (Yes in S1301), the connection type of the triangle to be decoded is determined not to be type C. Next, a value of second bit b1 is decoded by entropy decoding according to c_idx without decoding a value of first bit b0 (S1305). In this case, the value of first bit b0 may be regarded as 1.

When the connection type of the previously decoded triangle is neither type L nor type E (No in S1301), the value of first bit b0 is decoded by entropy decoding according to c_idx (S1302). Then, whether the value of first bit b0 is 0 is determined (S1303).

When the value of first bit b0 is 0 (Yes in S1303), the connection type of the triangle to be decoded is set to type C (S1304). When the value of first bit b0 is not 0 (No in S1303), the value of second bit b1 is decoded by entropy decoding according to c_idx (S1305).

Next, a value of third bit b2 is decoded by entropy decoding according to c_idx (S1306). Then, bit patterns of second bit b1 and third bit b2 are determined (S1307 to S1309). Then, according to the determination result, the connection type of the triangle to be decoded is set to one of types L, E, R, or S (S1310 to S1313).

Specifically, when the value of second bit b1 and the value of third bit b2 are 0 and 0, respectively (Yes in S1307 and Yes in S1308), the connection type is set to type S (S1311). When the value of second bit b1 and the value of third bit b2 are 0 and 1, respectively (Yes in S1307 and No in S1308), the connection type is set to type R (S1310).

When the value of second bit b1 and the value of third bit b2 are 1 and 0, respectively (No in S1307 and Yes in S1309), the connection type is set to type L (S1313). When the value of second bit b1 and the value of third bit b2 are 1 and 1, respectively (No in S1307 and No in S1309), the connection type is set to type E (S1312).

Note that when arithmetic decoding is used for the entropy decoding, the context used for determining the predicted occurrence probability of information to be decoded is determined from among a plurality of contexts according to c_idx. When Huffman decoding is used for the entropy decoding, the codeword table used for decoding is determined from among a plurality of codeword tables according to c_idx. Furthermore, in the entropy decoding of the value of third bit b2 (S1306), the context or codeword table may be determined according to the value of second bit b1 in addition to c_idx.

Type C does not logically occur immediately after type L or type E. Therefore, immediately after type L or type E, by omitting the decoding of first bit b0 for identifying type C and only decoding the two bits of second bit b1 and third bit b2, it may be possible to decode the connection type of the triangle with a smaller coding amount.

In addition, it may be possible to suppress the coding amount of the connection type of the triangle by, for example, always using the same context for decoding first bit b0 immediately after type L or type E instead of omitting the decoding of first bit b0.

In addition, the content of the event indicated by the value of third bit b2 depends on the value of second bit b1 (type S or R when b1 = 0, and type L or E when b1 = 1). Therefore, by determining the context or codeword table according to the value of second bit b1 in addition to c_idx in the entropy decoding of the value of third bit b2, it may be possible to further reduce the coding amount.

In addition, bit patterns 0, 011, 111, 101, and 001 may be assigned to types C, L, E, R, and S, respectively. Alternatively, unnecessary leading zeros may be omitted and bit patterns 0, 11, 111, 101, and 1 may be assigned to types C, L, E, R, and S, respectively. In addition, entropy decoding may be performed starting from the least significant bit of each of the bit patterns.

Accordingly, types C, L, E, R, and S are assigned with bit patterns 0, 110, 111, 101, and 100, respectively, and an operation corresponding to the operation described above in which entropy decoding is performed starting from the most significant bit can be performed.

As stated above, when the previous connection type is type C in the processing order used to determine the connection type, the connection type to be processed is neither type L nor type E. Consequently, when the previous connection type is type L or E in reverse order of the processing order used to determine the connection type, the connection type to be processed is not type C.

Therefore, in the case where encoding and decoding are performed in the reverse order of the processing order used to determine the connection type, when the previous connection type is type L or E, encoding and decoding of information for identifying the connection type to be processed among a candidate set of types L, E, R, and S are performed. Accordingly, it may be possible to reduce the coding amount as compared to performing encoding and decoding of information for identifying the connection type from a candidate set of all types.

Here, when the previous connection type is type L or E, the candidate set of types L, E, R, and S is used as a candidate set of connection types of the triangle to be processed. However, the candidate set of connection types to be processed is not limited to this example and may be defined by a previously processed connection type.

For example, here, five types are defined with respect to connection types. However, the connection types may be defined according to a different method. For example, four or less types or six or more types may be defined with respect to connection types. In addition, a shape of a face is not limited to a triangle and may be another polygon. Furthermore, connection types may be defined according to the shape.

In addition, a candidate set of connection types of a face to be processed may be defined from connection types of previously processed faces according to the shape of each face, the definition of each type, and geometric characteristics. Accordingly, it may be possible to efficiently encode the connection type and to reduce the coding amount. Note that in the above description, "decoding" may be substituted for "encoding".

<Representative Examples>

FIG. 48 is a flowchart illustrating an example of basic first encoding processing according to the embodiment. For example, in operation, circuit 151 of encoding device 100 shown in FIG. 24 performs the encoding processing shown in FIG. 48.

Specifically, circuit 151 encodes, for each of faces forming a three-dimensional mesh, a connection type regarding a connection relationship between the face to be processed and a face not yet processed, using arithmetic encoding based on a context (S1410). Here, a plurality of examples of the connection type regarding the connection relationship between the face to be processed and the face not yet processed may include a type in which the face to be processed is not connected to the face not yet processed (for example, type E described above).

FIG. 49 is a flowchart illustrating an example of a process included in the basic first encoding processing according to the embodiment. For example, in an encoding process (S1410) shown in FIG. 48, circuit 151 of encoding device 100 shown in FIG. 24 performs the process shown in FIG. 49.

Specifically, in encoding the current connection type, circuit 151 selects the context to be applied to the arithmetic encoding from a plurality of contexts, using a first previous connection type (S1411). In such a case, when the first previous connection type is a corner type, circuit 151 selects the context according to the number of one or more corner types that are consecutively encoded up to the first previous connection type.

Here, the current connection type is a connection type to be encoded. Moreover, the first previous connection type is a connection type encoded before the current connection type. Furthermore, the corner type is a type in which, along a path to a face to be processed in processing order, two faces not yet processed are connected to both a left side and a right side of the face to be processed, and all of a plurality of faces connected to a vertex of the face to be processed are not yet processed, the plurality of faces including the two faces.

As a result, it may be possible to select a context for arithmetic encoding of a current connection type that can have a probability distribution that varies depending on the number of consecutive corner types, according to the number of the consecutive corner types. Accordingly, it may be possible to improve a compression rate based on the characteristics of information about a three-dimensional mesh. Therefore, it may be possible to efficiently encode the connection type and to reduce the coding amount.

For example, circuit 151 may determine which category, among a plurality of categories, the number of the one or more corner types consecutively encoded belongs to, using the number of the one or more corner types consecutively encoded and one or more threshold values. Then, circuit 151 may select the context according to the category to which the number of the one or more corner types consecutively encoded belongs.

Consequently, it is possible to appropriately determine a category corresponding to the number of the consecutive corner types. Accordingly, it is possible to appropriately select the context according to the category appropriately determined. Therefore, it may be possible to efficiently encode the connection type and to reduce the coding amount.

Moreover, for example, the one or more threshold values may include a first threshold value and a second threshold value. In addition, the plurality of categories may include a first category, a second category, and a third category.

As a result, it is possible to appropriately determine a category corresponding to the number of the consecutive corner types from the three categories using the two threshold values. Accordingly, it is possible to appropriately select the context according to the category appropriately determined.

Furthermore, for example, when the number of the one or more corner types consecutively encoded is less than the first threshold value, circuit 151 may determine that the number of the one or more corner types consecutively encoded belongs to the first category. In addition, for example, when the number of the one or more corner types consecutively encoded is greater than or equal to the first threshold value and is less than the second threshold value, circuit 151 may determine that the number of the one or more corner types consecutively encoded belongs to the second category.

Additionally, for example, when the number of the one or more corner types consecutively encoded is greater than or equal to the second threshold value, circuit 151 may determine that the number of the one or more corner types consecutively encoded belongs to the third category.

Consequently, it is possible to appropriately determine a category corresponding to the number of the consecutive corner types from the three categories by comparing the number of the consecutive corner types and the two threshold values. Accordingly, it is possible to appropriately select the context according to the category appropriately determined.

Moreover, for example, the connection type may be one of the corner type, a split type, a right type, a left type, or an end type. Here, the split type may be a type in which, along the path to the face to be processed in the processing order, two faces not yet processed are connected to both the left side and the right side of the face to be processed, the split type being different from the corner type.

In addition, the right type may be a type in which, along the path to the face to be processed in the processing order, a face not yet processed is not connected to the right side of the face to be processed, and a face not yet processed is connected to the left side of the face to be processed. Additionally, the left type may be a type in which, along the path to the face to be processed in the processing order, a face not yet processed is not connected to the left side of the face to be processed, and a face not yet processed is connected to the right side of the face to be processed. In addition, the end type may be a type in which, along the path to the face to be processed in the processing order, a face not yet processed is connected to neither the left side nor the right side of the face to be processed.

Furthermore, when the first previous connection type is the right type, circuit 151 may select the context according to whether a second previous connection type is (i) the corner type, (ii) the right type, or (iii) neither the corner type nor the right type. Here, the second previous connection type is a connection type encoded before the first previous connection type.

Moreover, when the first previous connection type is one of the split type, the left type, or the end type, circuit 151 may select the context according to whether the first previous connection type is the split type, the left type, or the end type.

As a result, it may be possible to appropriately select a context for arithmetic encoding of a current connection type, according to whether the first previous connection type is the corner type, the split type, the right type, the left type, or the end type.

In addition, when the first previous connection type is the corner type, it may be possible to appropriately select a context according to the number of the consecutive corner types. Additionally, when the first previous connection type is the right type, it may be possible to appropriately select a context according to whether the second previous connection type is the right type or another type.

Accordingly, it may be possible to select a context for arithmetic encoding of a current connection type that can have a probability distribution that varies depending on the characteristics of one or more connection types encoded before the current connection type.

Furthermore, for example, the connection type may be a type defined by Edgebreaker. Moreover, the corner type may be type C defined by Edgebreaker.

Furthermore, the split type may be type S defined by Edgebreaker. Moreover, the right type may be type R defined by Edgebreaker. Furthermore, the left type may be type L defined by Edgebreaker. Moreover, the end type may be type E defined by Edgebreaker.

Consequently, it may be possible to efficiently encode a connection type defined by Edgebreaker. Accordingly, it may be possible to reduce the coding amount of the connection type defined by Edgebreaker.

Although circuit 151 of encoding device 100 performs each of the processes above, connection information encoder 102 or 145 of encoding device 100 may perform the process or another constituent element may perform the process.

FIG. 50 is a flowchart illustrating an example of basic first decoding processing according to the embodiment. For example, in operation, circuit 251 of decoding device 200 shown in FIG. 25 performs the decoding processing shown in FIG. 50.

Specifically, circuit 251 decodes, for each of faces forming a three-dimensional mesh, a connection type regarding a connection relationship between the face to be processed and a face not yet processed, using arithmetic decoding based on a context (S1510). Here, a plurality of examples of the connection type regarding the connection relationship between the face to be processed and the face not yet processed may include a type in which the face to be processed is not connected to the face not yet processed (for example, type E described above).

FIG. 51 is a flowchart illustrating an example of a process included in the basic first decoding processing according to the embodiment. For example, in the decoding processing (S1510) shown in FIG. 50, circuit 251 of decoding device 200 shown in FIG. 25 performs the process shown in FIG. 51.

Specifically, in decoding the current connection type, circuit 251 selects the context to be applied to the arithmetic decoding from a plurality of contexts, using a first previous connection type (S1511). In such a case, when the first previous connection type is a corner type, circuit 251 selects the context according to the number of one or more corner types that are consecutively decoded up to the first previous connection type.

Here, the current connection type is a connection type to be decoded. Moreover, the first previous connection type is a connection type decoded before the current connection type. Furthermore, the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces.

As a result, it may be possible to select a context for arithmetic decoding of a current connection type that can have a probability distribution that varies depending on the number of consecutive corner types, according to the number of the consecutive corner types. Accordingly, it may be possible to improve a compression rate based on the characteristics of information about a three-dimensional mesh. Therefore, it may be possible to efficiently decode the connection type and to reduce the coding amount.

For example, circuit 251 may determine which category, among a plurality of categories, the number of the one or more corner types consecutively decoded belongs to, using the number of the one or more corner types consecutively decoded and one or more threshold values. Then, circuit 251 may select the context according to the category to which the number of the one or more corner types consecutively decoded belongs.

Consequently, it is possible to appropriately determine a category corresponding to the number of the consecutive corner types. Accordingly, it is possible to appropriately select a context according to the category appropriately determined. Therefore, it may be possible to efficiently decode the connection type and to reduce the coding amount.

Moreover, for example, the one or more threshold values may include a first threshold value and a second threshold value. In addition, the plurality of categories may include a first category, a second category, and a third category.

As a result, it is possible to appropriately determine a category corresponding to the number of the consecutive corner types from the three categories using the two threshold values. Accordingly, it is possible to appropriately select a context according to the category appropriately determined.

Furthermore, for example, when the number of the one or more corner types consecutively decoded is less than the first threshold value, circuit 251 may determine that the number of the one or more corner types consecutively decoded belongs to the first category. Moreover, when the number of the one or more corner types consecutively decoded is greater than or equal to the first threshold value and is less than the second threshold value, circuit 251 may determine that the number of the one or more corner types consecutively decoded belongs to the second category.

Furthermore, when the number of the one or more corner types consecutively decoded is greater than or equal to the second threshold value, circuit 251 may determine that the number of the one or more corner types consecutively decoded belongs to the third category.

Consequently, it is possible to appropriately determine a category corresponding to the number of the consecutive corner types from the three categories by comparing the number of the consecutive corner types and the two threshold values. Accordingly, it is possible to appropriately select a context according to the category appropriately determined.

Moreover, for example, the connection type may be one of the corner type, a split type, a right type, a left type, or an end type. Here, the split type may be a type in which, along the path to the face to be processed in the processing order, two faces not yet processed are connected to both the left side and the right side of the face to be processed, the split type being different from the corner type.

In addition, the right type may be a type in which, along the path to the face to be processed in the processing order, a face not yet processed is not connected to the right side of the face to be processed, and a face not yet processed is connected to the left side of the face to be processed. Additionally, the left type may be a type in which, along the path to the face to be processed in the processing order, a face not yet processed is not connected to the left side of the face to be processed, and a face not yet processed is connected to the right side of the face to be processed. In addition, the end type may be a type in which, along the path to the face to be processed in the processing order, a face not yet processed is connected to neither the left side nor the right side of the face to be processed.

Furthermore, when the first previous connection type is the right type, circuit 251 may select the context according to whether a second previous connection type is (i) the corner type, (ii) the right type, or (iii) neither the corner type nor the right type. Here, the second previous connection type is a connection type decoded before the first previous connection type.

Moreover, when the first previous connection type is one of the split type, the left type, or the end type, circuit 251 may select the context according to whether the first previous connection type is the split type, the left type, or the end type.

As a result, it may be possible to appropriately select a context for arithmetic decoding of a current connection type, according to whether the first previous connection type is the corner type, the split type, the right type, the left type, or the end type.

In addition, when the first previous connection type is the corner type, it may be possible to appropriately select a context according to the number of the consecutive corner types. Additionally, when the first previous connection type is the right type, it may be possible to appropriately select a context according to whether the second previous connection type is the right type or another type.

Accordingly, it may be possible to select a context for arithmetic decoding of a current connection type that can have a probability distribution that varies depending on the characteristics of one or more connection types decoded before the current connection type.

Furthermore, for example, the connection type may be a type defined by Edgebreaker. Moreover, the corner type may be type C defined by Edgebreaker. Furthermore, the split type may be type S defined by Edgebreaker. Moreover, the right type may be type R defined by Edgebreaker. Furthermore, the left type may be type L defined by Edgebreaker. Moreover, the end type may be type E defined by Edgebreaker.

Consequently, it may be possible to efficiently decode a connection type defined by Edgebreaker. Accordingly, it may be possible to reduce the coding amount of the connection type defined by Edgebreaker.

Although circuit 251 of decoding device 200 performs each of the processes above, connection information decoder 202 or 245 of decoding device 200 may perform the process or another constituent element may perform the process.

FIG. 52 is a flowchart illustrating an example of basic second encoding processing according to the embodiment. For example, in operation, circuit 151 of encoding device 100 shown in FIG. 24 performs the encoding processing shown in FIG. 52.

Specifically, circuit 151 encodes, for each of faces forming a three-dimensional mesh, a connection type regarding a connection relationship between the face to be processed and a face not yet processed, in reverse order of processing order in which the connection type is defined (S1610). Here, a plurality of examples of the connection type regarding the connection relationship between the face to be processed and the face not yet processed may include a type in which the face to be processed is not connected to the face not yet processed (for example, type E described above).

FIG. 53 is a flowchart illustrating an example of a process included in the basic second encoding processing according to the embodiment. For example, in the encoding processing (S1610) shown in FIG. 52, circuit 151 of encoding device 100 shown in FIG. 24 performs the process shown in FIG. 53.

Specifically, in encoding a current connection type, circuit 151 encodes, as the current connection type, information for identifying the current connection type among a candidate set defined according to a previous connection type (S1611). More specifically, when the previous connection type is a left type or an end type, the candidate set does not include a corner type. On the other hand, when the previous connection type is neither the left type nor the end type, the candidate set includes the corner type.

Here, the current connection type is a connection type to be encoded. In addition, the previous connection type is a connection type encoded before the current connection type. Additionally, the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces.

In addition, the left type may be a type in which, along the path to the face to be processed in the processing order, a face not yet processed is not connected to the left side of the face to be processed, and a face not yet processed is connected to the right side of the face to be processed. The end type may be a type in which, along the path to the face to be processed in the processing order, a face not yet processed is connected to neither the left side nor the right side of the face to be processed.

As a result, it may be possible to control whether to include the corner type in the candidate set of the current connection type, according to whether the previous connection type is one of the left type or the end type. Accordingly, it may be possible to narrow down the candidate set of the current connection type according to the previous connection type. For this reason, it may be possible to reduce the amount of information for identifying the current connection type. Therefore, it may be possible to efficiently encode the connection type and to reduce the coding amount.

For example, the connection type may be a type defined by Edgebreaker. Moreover, the corner type may be type C defined by Edgebreaker. Furthermore, the left type may be type L defined by Edgebreaker. Moreover, the end type may be type E defined by Edgebreaker.

Consequently, it may be possible to efficiently encode the connection type defined by Edgebreaker. Accordingly, it may be possible to reduce the coding amount of the connection type defined by Edgebreaker.

Although circuit 151 of encoding device 100 performs each of the processes above, connection information encoder 102 or 145 of encoding device 100 may perform the process or another constituent element may perform the process.

FIG. 54 is a flowchart illustrating an example of basic second decoding processing according to the embodiment. For example, in operation, circuit 251 of decoding device 200 shown in FIG. 25 performs the decoding processing shown in FIG. 54.

Specifically, circuit 251 decodes, for each of faces forming a three-dimensional mesh, a connection type regarding a connection relationship between the face to be processed and a face not yet processed, in reverse order of processing order in which the connection type is defined (S1710). Here, a plurality of examples of the connection type regarding the connection relationship between the face to be processed and the face not yet processed may include a type in which the face to be processed is not connected to the face not yet processed (for example, type E described above).

FIG. 55 is a flowchart illustrating an example of a process included in the basic second decoding processing according to the embodiment. For example, in the decoding processing (S1710) shown in FIG. 54, circuit 251 of decoding device 200 shown in FIG. 25 performs the process shown in FIG. 55.

Specifically, in decoding a current connection type, circuit 251 decodes, as the current connection type, information for identifying the current connection type among a candidate set defined according to a previous connection type (S1711). More specifically, when the previous connection type is a left type or an end type, the candidate set does not include a corner type. On the other hand, when the previous connection type is neither the left type nor the end type, the candidate set includes the corner type.

Here, the current connection type is a connection type to be decoded. In addition, the previous connection type is a connection type decoded before the current connection type. Additionally, the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces.

In addition, the left type may be a type in which, along the path to the face to be processed in the processing order, a face not yet processed is not connected to the left side of the face to be processed, and a face not yet processed is connected to the right side of the face to be processed. The end type may be a type in which, along the path to the face to be processed in the processing order, a face not yet processed is connected to neither the left side nor the right side of the face to be processed.

As a result, it may be possible to control whether to include the corner type in the candidate set of the current connection type, according to whether the previous connection type is one of the left type or the end type. Accordingly, it may be possible to narrow down the candidate set of the current connection type according to the previous connection type. For this reason, it may be possible to reduce the amount of information for identifying the current connection type. Therefore, it may be possible to efficiently decode the connection type and to reduce the coding amount.

For example, the connection type may be a type defined by Edgebreaker. Moreover, the corner type may be type C defined by Edgebreaker. Furthermore, the left type may be type L defined by Edgebreaker. Moreover, the end type may be type E defined by Edgebreaker.

Accordingly, it may be possible to efficiently decode the connection type defined by Edgebreaker. Accordingly, it may be possible to reduce the coding amount of the connection type defined by Edgebreaker.

Although circuit 251 of decoding device 200 performs each of the processes above, connection information decoder 202 or 245 of decoding device 200 may perform the process or another constituent element may perform the process.

In the plurality of above examples, in the split type, a face not yet processed may be connected to each of the left side and the right side of the face to be processed, and a face processed may be connected to a vertex (v in FIG. 29) of the face to be processed. Alternatively, in the split type, a face not yet processed may be connected to each of the left side and the right side of the face to be processed, and the boundary of a mesh may be connected to a vertex (v in FIG. 29) of the face to be processed.

In other words, in the split type, a plurality of faces not yet processed may be connected to the vertex of the face to be processed, in a split manner. In contrast, in the corner type, a plurality of faces not yet processed may be connected to the vertex of the face to be processed, in a non-split manner.

To put it another way, the split type may be a type in which, along the path to the face to be processed in the processing order, two faces not yet processed are connected to both the left side and the right side of the face to be processed, and a plurality of faces including the two faces are connected to a vertex of the face to be processed, in a split manner. Additionally, the corner type may be a type in which, along the path to the face to be processed in the processing order, two faces not yet processed are connected to both the left side and the right side of the face to be processed, and a plurality of faces including the two faces are connected to a vertex of the face to be processed, in a non-split manner.

In the above description, "connection" may be expressed as "link". Furthermore, "connection type" may be expressed as "connection information" or "link information".

<Other Examples>

Although the aspects of encoding device 100 and decoding device 200 have thus far been described according to the embodiment, the aspects of encoding device 100 and decoding device 200 are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing decoding device 200 to perform decoding may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

Moreover, for example, the expression "at least one (or one or more) of a first element, a second element, or a third element" corresponds to the first element, the second element, and the third element or any combination of these elements.

Furthermore, in the present disclosure, setting the first element to a first value can mean setting a value of an element to the first value. Additionally, the expression "setting the first element to the first value" may be replaced with the expression "setting the first value to the first element".

[Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

[Reference Signs List]

100 encoding device
101, 121, 144 vertex information encoder
102, 145 connection information encoder
103, 122 attribute information encoder
104, 204, 521 preprocessor
105, 205, 623 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface

223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
300 network
310 external connector
522 encoding processor
622 decoding processor

**Claims**

1. An encoding device comprising:

   memory; and
   a circuit having access to the memory,
   wherein in operation, the circuit:

      for each of faces forming a three-dimensional mesh, encodes a connection type regarding a connection relationship between the face to be processed and a face not yet processed, using arithmetic encoding based on a context;
      in encoding a current connection type that is the connection type to be encoded, selects the context to be applied to the arithmetic encoding from a plurality of contexts, using a first previous connection type, the first previous connection type being the connection type encoded before the current connection type; and
      selects the context according to a total number of one or more corner types when the first previous connection type is a corner type, the one or more corner types being each the corner type and being consecutively encoded up to the first previous connection type, and

   the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

2. The encoding device according to claim 1, wherein the circuit:

determines which category, among a plurality of categories, the total number of the one or more corner types belongs to, using the total number of the one or more corner types and one or more threshold values; and
selects the context according to the category to which the total number of the one or more corner types belongs.

3. The encoding device according to claim 2,

wherein the one or more threshold values include a first threshold value and a second threshold value, and
the plurality of categories include a first category, a second category, and a third category.

4. The encoding device according to claim 3, wherein the circuit:

determines that the total number of the one or more corner types belongs to the first category when the total number of the one or more corner types is less than the first threshold value;
determines that the total number of the one or more corner types belongs to the second category when the total number of the one or more corner types is greater than or equal to the first threshold value and is less than the second threshold value; and
determines that the total number of the one or more corner types belongs to the third category when the total number of the one or more corner types is greater than or equal to the second threshold value.

5. The encoding device according to any one of claim 1 to claim 4,

wherein the connection type is one of the corner type, a split type, a right type, a left type, or an end type,
the split type is a type in which, along the path to the face to be processed in the processing order, two faces not yet processed are connected to both the left side and the right side of the face to be processed, the split type being different from the corner type,
the right type is a type in which, along the path to the face to be processed in the processing order, a face not yet processed is not connected to the right side of the face to be processed, and a face not yet processed is connected to the left side of the face to be processed,
the left type is a type in which, along the path to the face to be processed in the processing order, a face not yet processed is not connected to the left side of the face to be processed, and a face not yet processed is connected to the right side of the face to be processed,
the end type is a type in which, along the path to the face to be processed in the processing order, a face not yet processed is connected to neither the left side nor the right side of the face to be processed, and
the circuit:

when the first previous connection type is the right type, selects the context according to whether a second previous connection type is (i) the corner type, (ii) the right type, or (iii) neither the corner type nor the right type, the second previous connection type being the connection type encoded before the first previous connection type; and
when the first previous connection type is one of the split type, the left type, or the end type, selects the context according to whether the first previous connection type is the split type, the left type, or the end type.

6. The encoding device according to claim 5,

wherein the connection type is a type defined by Edgebreaker,
the corner type is type C defined by Edgebreaker,
the split type is type S defined by Edgebreaker,
the right type is type R defined by Edgebreaker,
the left type is type L defined by Edgebreaker, and
the end type is type E defined by Edgebreaker.

7. An encoding device comprising:

memory; and
a circuit having access to the memory,
wherein in operation, the circuit:

for each of faces forming a three-dimensional mesh, encodes a connection type regarding a connection relationship between the face to be processed and a face not yet processed, in reverse order of processing order in which the connection type is defined; and
in encoding a current connection type that is the connection type to be encoded, encodes, as the current connection type, information for identifying the current connection type among a candidate set defined according to a previous connection type, the previous connection type being the connection type encoded before the current connection type,

when the previous connection type is a left type or an end type, the candidate set does not include a corner type,

when the previous connection type is neither the left type nor the end type, the candidate set includes the corner type,

the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed,

the left type is a type in which, along the path to the face to be processed in the processing order, a face not yet processed is not connected to the left side of the face to be processed, and a face not yet processed is connected to the right side of the face to be processed, and

the end type is a type in which, along the path to the face to be processed in the processing order, a face not yet processed is connected to neither the left side nor the right side of the face to be processed.

8. The encoding device according to claim 7,

wherein the connection type is a type defined by Edgebreaker,

the corner type is type C defined by Edgebreaker,

the left type is type L defined by Edgebreaker, and

the end type is type E defined by Edgebreaker.

9. A decoding device comprising:

memory; and
a circuit having access to the memory,
wherein in operation, the circuit:

for each of faces forming a three-dimensional mesh, decodes a connection type regarding a connection relationship between the face to be processed and a face not yet processed, using arithmetic decoding based on a context;

in decoding a current connection type that is the connection type to be decoded, selects the context to be applied to the arithmetic decoding from a plurality of contexts, using a first previous connection type, the first previous connection type being the connection type decoded before the current connection type; and

selects the context according to a total number of one or more corner types when the first previous connection type is a corner type, the one or more corner types being each the corner type and being consecutively decoded up to the first previous connection type, and

the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

10. The decoding device according to claim 9, wherein the circuit:

determines which category, among a plurality of categories, the total number of the one or more corner types belongs to, using the total number of the one or more corner types and one or more threshold values; and
selects the context according to the category to which the total number of the one or more corner types belongs.

11. The decoding device according to claim 10,

wherein the one or more threshold values include a first threshold value and a second threshold value, and
the plurality of categories include a first category, a second category, and a third category.

12. The decoding device according to claim 11, wherein the circuit:

determines that the total number of the one or more corner types belongs to the first category when the total number of the one or more corner types is less than the first threshold value;
determines that the total number of the one or more corner types belongs to the second category when the total number of the one or more corner types is greater than or equal to the first threshold value and is less than the second threshold value; and
determines that the total number of the one or more corner types belongs to the third category when the total number of the one or more corner types is greater than or equal to the second threshold value.

13. The decoding device according to any one of claim 9 to claim 12,

wherein the connection type is one of the corner type, a split type, a right type, a left type, or an end type,

the split type is a type in which, along the path to the face to be processed in the processing order, two faces not yet processed are connected to both the left side and the right side of the face to be processed, the split type being different from the corner type,

the right type is a type in which, along the path to the face to be processed in the processing order, a face not yet processed is not connected to the right side of the face to be processed, and a face not yet processed is connected to the left side of the face to be processed,

the left type is a type in which, along the path to the face to be processed in the processing order, a face not yet processed is not connected to the left side of the face to be processed, and a face not yet processed is connected to the right side of the face to be processed,

the end type is a type in which, along the path to the face to be processed in the processing order, a face not yet processed is connected to neither the left side nor the right side of the face to be processed, and

the circuit:

> when the first previous connection type is the right type, selects the context according to whether a second previous connection type is (i) the corner type, (ii) the right type, or (iii) neither the corner type nor the right type, the second previous connection type being the connection type decoded before the first previous connection type; and
> when the first previous connection type is one of the split type, the left type, or the end type, selects the context according to whether the first previous connection type is the split type, the left type, or the end type.

14. The decoding device according to claim 13,

> wherein the connection type is a type defined by Edgebreaker,
> the corner type is type C defined by Edgebreaker,
> the split type is type S defined by Edgebreaker,
> the right type is type R defined by Edgebreaker,
> the left type is type L defined by Edgebreaker, and
> the end type is type E defined by Edgebreaker.

15. A decoding device comprising:

> memory; and
> a circuit having access to the memory,
> wherein in operation, the circuit:

for each of faces forming a three-dimensional mesh, decodes a connection type regarding a connection relationship between the face to be processed and a face not yet processed, in reverse order of processing order in which the connection type is defined; and

in decoding a current connection type that is the connection type to be decoded, decodes, as the current connection type, information for identifying the current connection type among a candidate set defined according to a previous connection type, the previous connection type being the connection type decoded before the current connection type,

when the previous connection type is a left type or an end type, the candidate set does not include a corner type,

when the previous connection type is neither the left type nor the end type, the candidate set includes the corner type,

the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed,

the left type is a type in which, along the path to the face to be processed in the processing order, a face not yet processed is not connected to the left side of the face to be processed, and a face not yet processed is connected to the right side of the face to be processed, and

the end type is a type in which, along the path to the face to be processed in the processing order, a face not yet processed is connected to neither the left side nor the right side of the face to be processed.

16. The decoding device according to claim 15,

> wherein the connection type is a type defined by Edgebreaker,
> the corner type is type C defined by Edgebreaker,
> the left type is type L defined by Edgebreaker, and
> the end type is type E defined by Edgebreaker.

17. An encoding method comprising:

> for each of faces forming a three-dimensional mesh, encoding a connection type regarding a connection relationship between the face to be processed and a face not yet processed, using arithmetic encoding based on a context;

in encoding a current connection type that is the connection type to be encoded, selecting the context to be applied to the arithmetic encoding from a plurality of contexts, using a first previous connection type, the first previous connection type being the connection type encoded before the current connection type; and

selecting the context according to a total number of one or more corner types when the first previous connection type is a corner type, the one or more corner types being each the corner type and being consecutively encoded up to the first previous connection type,

wherein the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

18. An encoding method comprising:

for each of faces forming a three-dimensional mesh, encoding a connection type regarding a connection relationship between the face to be processed and a face not yet processed, in reverse order of processing order in which the connection type is defined; and

in encoding a current connection type that is the connection type to be encoded, encoding, as the current connection type, information for identifying the current connection type among a candidate set defined according to a previous connection type, the previous connection type being the connection type encoded before the current connection type,

wherein when the previous connection type is a left type or an end type, the candidate set does not include a corner type,

when the previous connection type is neither the left type nor the end type, the candidate set includes the corner type,

the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed,

the left type is a type in which, along the path to the face to be processed in the processing order, a face not yet processed is not connected to the left side of the face to be processed, and a face not yet processed is connected to the right side of the face to be processed, and

the end type is a type in which, along the path to the face to be processed in the processing order, a face not yet processed is connected to neither the left side nor the right side of the face to be processed.

19. A decoding method comprising:

for each of faces forming a three-dimensional mesh, decoding a connection type regarding a connection relationship between the face to be processed and a face not yet processed, using arithmetic decoding based on a context;

in decoding a current connection type that is the connection type to be decoded, selecting the context to be applied to the arithmetic decoding from a plurality of contexts, using a first previous connection type, the first previous connection type being the connection type decoded before the current connection type; and

selecting the context according to a total number of one or more corner types when the first previous connection type is a corner type, the one or more corner types being each the corner type and being consecutively decoded up to the first previous connection type,

wherein the corner type is a type in which, along a path to the face to be processed in processing order, two faces not yet processed are connected to both a left side and a right side of the face to be processed, and all of a plurality of faces connected to a vertex of the face to be processed are not yet processed, the plurality of faces including the two faces not yet processed.

20. A decoding method comprising:

for each of faces forming a three-dimensional mesh, decoding a connection type regarding a connection relationship between the face to be processed and a face not yet processed, in reverse order of processing order in which the connection type is defined; and

in decoding a current connection type that is the connection type to be decoded, decoding, as the current connection type, information for identifying the current connection type among a candidate set defined according to a previous connection type, the previous connection type being the connection type decoded before the current connection type,

wherein when the previous connection type is a left type or an end type, the candidate set does not include a corner type,

when the previous connection type is neither the left type nor the end type, the candidate set includes the corner type,

the corner type is a type in which, along a path to the face to be processed in the processing order, two faces not yet processed are connected to both a left side and a right side of the face to be processed, and all of a plurality of faces connected to a vertex of the face to be processed are not yet processed, the plurality of faces including the two faces not yet processed,

the left type is a type in which, along the path to the face to be processed in the processing order, a face not yet processed is not connected to the left side of the face to be processed, and a face not yet processed is connected to the right side of the face to be processed, and

the end type is a type in which, along the path to the face to be processed in the processing order, a face not yet processed is connected to neither the left side nor the right side of the face to be processed.

# FIG. 1

Three-dimensional mesh

# FIG. 2

# FIG. 3

Three-dimensional mesh

Mapping
information

Two-dimensional image

## FIG. 4

Three-dimensional mesh → **Encoding device** 100 → Bitstream → (300) → Bitstream → **Decoding device** 200 → Three-dimensional mesh

# FIG. 5

## FIG. 6

Encoding device (100)

Three-dimensional mesh → Preprocessor (104) → Vertex information encoder (101), Connection information encoder (102), Attribute information encoder (103) → Postprocessor (105) → Bitstream

FIG. 7

200

Decoding device

201

Vertex
information
decoder

202

Bitstream     Connection
information
decoder     Three-dimensional mesh

203

Attribute
information
decoder

FIG. 8

# FIG. 9

| Bitstream | | |
|---|---|---|
| Connection information | Vertex information | Attribute information |

# FIG. 10

| Bitstream | | |
|---|---|---|
| File | File | File |
| Connection information | Vertex information | Attribute information |

# FIG. 11

Bitstream

| Sub-bitstream | Sub-bitstream | Sub-bitstream |
|---|---|---|
| Connection information | Vertex information | Attribute information |

FIG. 12

# FIG. 13

# FIG. 14

| | Position information | Attribute information |
|---|---|---|
| n = 1 | $G(1) = (x_1, y_1, z_1)$ | $A(1) = (R_1, G_1, B_1)$ |
| n = 2 | $G(2) = (x_2, y_2, z_2)$ | $A(2) = (R_2, G_2, B_2)$ |
| ⋮ | ⋮ | ⋮ |
| n = N | $G(N) = (x_N, y_N, z_N)$ | $A(N) = (R_N, G_N, B_N)$ |

# FIG. 15

# FIG. 16

|  | Position information | Attribute information |
|---|---|---|
| $n = 1$ | $G(1) = (x_1, y_1, z_1)$ | $A1(1) = (R_1, G_1, B_1)$ |
| $n = 2$ | $G(2) = (x_2, y_2, z_2)$ | $A1(2) = (R_2, G_2, B_2)$ |
| $\vdots$ | $\vdots$ | $\vdots$ |
| $n = N$ | $G(N) = (x_N, y_N, z_N)$ | $A1(N) = (R_N, G_N, B_N)$ |

Vertex information

| $m = 1$ | $A2(1) = (U_1, V_1)$ |
|---|---|
| $\vdots$ | $\vdots$ |
| $m = M$ | $A2(M) = (U_M, V_M)$ |

Attribute information

| $k = 1$ | $n[1, 3, 4]$ | $m[2, 4, 6]$ |
|---|---|---|
| $\vdots$ | $\vdots$ | $\vdots$ |
| $k = K$ | $n[1, N-1, N]$ | $m[10, 20, M]$ |

Connection information

## FIG. 17

Static object

Frame #1

Dynamic object

Frame #1    Frame #2    Frame #3

Time

EP 4 783 116 A1

FIG. 18

113

Three-dimensional data encoder

121

Vertex information →

Vertex information encoder

Compressed vertex information →

Metadata →

122

Attribute information →

Attribute information encoder

Compressed attribute information →

Metadata →

123

Metadata →

Metadata encoder

Compressed metadata →

124

Multiplexer

→ Bitstream

## FIG. 19

Three-dimensional data decoder — 213

Bitstream → Demultiplexer (224)

Compressed vertex information → Vertex information decoder (221) → Vertex information
Metadata →

Compressed attribute information → Attribute information decoder (222) → Attribute information
Metadata →

Compressed metadata → Metadata decoder (223) → Metadata

EP 4 783 116 A1

FIG. 20

EP 4 783 116 A1

## FIG. 21

EP 4 783 116 A1

# FIG. 22

Three-dimensional data encoder — 113

Two-dimensional data encoder — 141

Texture encoder — 143

Mesh data encoder — 142

Vertex information encoder — 144

Connection information encoder — 145

Description encoder — 148

Bitstream

Texture file

Mesh file

Description file

Texture

Vertex information

Connection information

Description

EP 4 783 116 A1

# FIG. 23

Three-dimensional data decoder 213

Two-dimensional data decoder 241

Texture decoder 243

Mesh data decoder 242

Vertex information decoder 244

Connection information decoder 245

Mesh reconstructor 246

Presenter 247

Description decoder 248

Bitstream

Texture file

Mesh file

Description file

EP 4 783 116 A1

## FIG. 24

100

Encoding device

151

Circuit

152

Memory

## FIG. 25

200

Decoding device

251

Circuit

252

Memory

# FIG. 26

Three-dimensional mesh → **100** Encoding device → Bitstream → **200** Decoding device → Three-dimensional mesh

# FIG. 27

**100**

Encoding device

Three-dimensional mesh → **521** Preprocessor

- Base mesh
- Displacement vector
- Texture data
- Attribute map

→ **522** Encoding processor → Bitstream

# FIG. 28

**200**

Decoding device

Bitstream → **622** Decoding processor

- Base mesh
- Displacement vector
- Texture data
- Attribute map

→ **623** Postprocessor → Three-dimensional mesh

# FIG. 29

## FIG. 30

## FIG. 31

FIG. 32

```
                          ┌─────────┐
                          │  Start  │
                          └────┬────┘
                               │
                           S201│
                          ◇────┴────◇
         Yes (C)  ┌──────<  Type C?  >──────┐  No (L, E, R, S)
                  │       ◇─────────◇       │
          ┌───────┴────S202              S203┴───────┐
          │ Encode b0 = 0 │            │ Encode b0 = 1 │
          │according to prev│          │according to prev│
          └───────┬────────┘          └───────┬────────┘
                  │                            │
                  │                        S204│
                  │                      ◇─────┴──────◇
                  │       Yes (R, S)    / One of types \   No (L, E)
                  │      ┌────────────<  R and S?        >────────────┐
                  │      │              ◇──────────────◇              │
                  │   ┌──┴───S205                            S206──┴──┐
                  │   │ Encode b1 = 0 │                    │ Encode b1 = 1 │
                  │   │according to prev│                  │according to prev│
                  │   └──┬────────────┘                    └──┬────────────┘
                  │      │                                    │
                  │  S207│                                S208│
                  │ ◇────┴────◇  No (R)                  ◇────┴────◇  No (E)
                  │<  Type S?  >──────┐                 <  Type L?  >──────┐
                  │ ◇────┬────◇       │                  ◇────┬────◇       │
                  │ Yes(S)│           │                  Yes(L)│           │
                  │   S211│       S209│                  S212│        S210│
                  │ ┌─────┴──┐   ┌────┴───┐            ┌──────┴─┐   ┌──────┴─┐
                  │ │Encode  │   │Encode  │            │Encode  │   │Encode  │
                  │ │b2 = 0  │   │b2 = 1  │            │b2 = 0  │   │b2 = 1  │
                  │ │acc.prev│   │acc.prev│            │acc.prev│   │acc.prev│
                  │ └─────┬──┘   └────┬───┘            └──────┬─┘   └──────┬─┘
                  └───────┼──────┐    │                      │            │
                          │      ×    │                      │            │
                     ┌────┴────┐
                     │   End   │
                     └─────────┘
```

EP 4 783 116 A1

## FIG. 33

```
                    ( Start )
                        |
                        | ⌒S301
                        v
              ┌─────────────────────┐
              │ Decode b0 according │
              │ to prev             │
              └─────────────────────┘
                        |
                        | ⌒S302
                        v
   Yes (0)          ◇ b0 = 0? ◇          No (1)
  ┌───────────────◇         ◇───────────────┐
  |                                          |
  | ⌒S303                                    | ⌒S304
  v                                          v
┌──────────────┐                   ┌─────────────────────┐
│ Set type to C│                   │ Decode b1 according │
└──────────────┘                   │ to prev             │
  |                                └─────────────────────┘
  |                                          |
  |                                          | ⌒S305
  |                                          v
  |                                ┌─────────────────────┐
  |                                │ Decode b2 according │
  |                                │ to prev             │
  |                                └─────────────────────┘
  |                                          |
  |                                          | ⌒S306
  |                                          v
  |                      Yes (10)        ◇ b1 = 0? ◇        No (11)
  |                   ┌────────────────◇           ◇────────────────┐
  |                   |                                              |
  |                   | ⌒S307                                       | ⌒S308
  |                   v                                              v
  |        ◇ b2 = 0? ◇   No (101)                   ◇ b2 = 0? ◇   No (111)
  |       ◇          ◇──────────┐               ◇          ◇──────────┐
  |         |Yes (100)          |                 |Yes (110)          |
  |         | ⌒S311             | ⌒S309           | ⌒S312             | ⌒S310
  |         v                   v                 v                   v
  |  ┌──────────────┐   ┌──────────────┐  ┌──────────────┐   ┌──────────────┐
  |  │ Set type to S│   │ Set type to R│  │ Set type to L│   │ Set type to E│
  |  └──────────────┘   └──────────────┘  └──────────────┘   └──────────────┘
  |         |
  └─────────┤
            v
         ( End )
```

EP 4 783 116 A1

EP 4 783 116 A1

# FIG. 34

```
Start
  │
  ▼
S401
Type C? ── No (L, E, R, S) ──┐
  │                           │
Yes (C)                       ▼
  │                          S402
  ▼                          Encode b0 = 1
S405                         according to prev
Encode b0 = 0                 │
according to prev             ▼
  │                          S403
  │                          Type R? ── No (L, E, S) ──┐
  │                           │                         │
  │                          Yes (R)                    ▼
  │                           │                        S404
  │                           ▼                        Encode b1 = 1
  │                          S408                      according to prev
  │                          Encode b1 = 0              │
  │                          according to prev          ▼
  │                           │                        S406
  │                           │                        Type E? ── No (L, S) ──┐
  │                           │                         │                      │
  │                           │                        Yes (E)                 ▼
  │                           │                         │                     S407
  │                           │                         ▼                     Encode b2 = 1
  │                           │                        S410                   according to prev
  │                           │                        Encode b2 = 0           │
  │                           │                        according to prev       ▼
  │                           │                         │                     S409
  │                           │                         │                     Type S? ── No (L) ──┐
  │                           │                         │                      │                   │
  │                           │                         │                     Yes (S)              ▼
  │                           │                         │                      │                  S411
  │                           │                         │                      ▼                  Encode b3 = 1
  │                           │                         │                     S412                according to prev
  │                           │                         │                     Encode b3 = 0        │
  │                           │                         │                     according to prev    │
  │                           │                         │                      │                   │
  └───────────┬───────────────┘                         └──────────────────────┴───────────────────┘
              ▼
             End
```

EP 4 783 116 A1

FIG. 35

```
                    ┌──────────┐
                    │  Start   │
                    └────┬─────┘
                         │      S501
              ┌──────────▼──────────┐
              │ Decode b0 according │
              │ to prev             │
              └──────────┬──────────┘
                         │    S502
   Yes (0)          ◇ b0 = 0? ◇        No(1)
        ◄────────────────────────────────►
     S505                              S503
┌──────────────┐        ┌─────────────────────┐
│ Set type to C│        │ Decode b1 according │
└──────┬───────┘        │ to prev             │
       │                └──────────┬──────────┘
       │                           │   S504
       │              Yes (10)  ◇ b1 = 0? ◇   No(11)
       │                   ◄──────────────────────►
       │                S508                   S506
       │        ┌──────────────┐    ┌─────────────────────┐
       │        │ Set type to R│    │ Decode b2 according │
       │        └──────┬───────┘    │ to prev             │
       │               │            └──────────┬──────────┘
       │               │                       │   S507
       │               │         Yes (110)  ◇ b2 = 0? ◇   No(111)
       │               │              ◄──────────────────────►
       │               │           S511                   S509
       │               │   ┌──────────────┐    ┌─────────────────────┐
       │               │   │ Set type to E│    │ Decode b3 according │
       │               │   └──────┬───────┘    │ to prev             │
       │               │          │            └──────────┬──────────┘
       │               │          │                       │  S510
       │               │          │      Yes (1110) ◇ b3 = 0? ◇  No(1111)
       │               │          │           ◄──────────────────────►
       │               │          │        S513                   S512
       │               │          │ ┌──────────────┐    ┌──────────────┐
       │               │          │ │ Set type to S│    │ Set type to L│
       │               │          │ └──────┬───────┘    └──────┬───────┘
       │               │          │        │                   │
       └───────────────┴──────────┴────────┴───────────────────┘
                         │
                    ┌────▼─────┐
                    │   End    │
                    └──────────┘
```

## FIG. 36

```
                    Start

                                        S601
    Set c_idx and each of type[0]
        to type[n] to 0

                                        S602
            (Start)
    Loop processing of each triangle

                                        S603
    Determine parameter according to c_idx
      and encode/decode type of triangle

                                        S604
            start for loop
      for (k = n; k > 0; k--)

                                        S605
        Copy type[k-1] to type[k]

                                        S606
            End for loop

                                        S607
        Set type[0] according
          to type of triangle

                                        S608
        Set c_idx according
          to type[0] to type[n]

                                        S609
    (End) Loop processing of each triangle

                    End
```

# FIG. 37

When 5 contexts are used according to immediately previous connection type

Table T106-01

| type[0] | C | L | E | R | S |
|---------|---|---|---|---|---|
| idx_0 | 0 | 1 | 2 | 3 | 4 |

When 4 contexts are used according to immediately previous connection type

Table T106-02

| type[0] | C | S | E | L, R |
|---------|---|---|---|------|
| idx_0 | 0 | 1 | 2 | 3 |

Table T106-03

| type[0] | C | S | L | E, R |
|---------|---|---|---|------|
| idx_0 | 0 | 1 | 2 | 3 |

Table T106-04

| type[0] | C | S | R | L, E |
|---------|---|---|---|------|
| idx_0 | 0 | 1 | 2 | 3 |

When 3 contexts are used according to immediately previous connection type

Table T106-05

| type[0] | C | S | L, E, R |
|---------|---|---|---------|
| idx_0 | 0 | 1 | 2 |

Table T106-06

| type[0] | C | S, L | E, R |
|---------|---|------|------|
| idx_0 | 0 | 1 | 2 |

EP 4 783 116 A1

FIG. 38

When 3 contexts are used according to second preceding connection type

Table T106-11

| type[1] | C | S | L, E, R |
|---------|---|---|---------|
| idx_1 | 0 | 1 | 2 |

Table T106-12

| type[1] | C | S, L | E, R |
|---------|---|------|------|
| idx_1 | 0 | 1 | 2 |

When 2 contexts are used according to second preceding connection type

Table T106-13

| type[1] | C | S, L, E, R |
|---------|---|------------|
| idx_1 | 0 | 1 |

EP 4 783 116 A1

EP 4 783 116 A1

FIG. 39

```
                          ┌──────────┐
                          │  Start   │
                          └────┬─────┘
                               │      ┌─S701
                               ▼
         Yes (C)          ◇─────────◇    No (L, E, R, S)
    ┌─────────────────────   C?    ───────────────────┐
    │                     ◇─────────◇                  │
    ▼                                                  ▼
S702─┐                                            S703─┐
┌──────────────────┐                        ┌──────────────────┐
│  Encode b0 = 0   │                        │  Encode b0 = 1   │
│ according to c_idx│                       │ according to c_idx│
└──────────────────┘                        └────────┬─────────┘
```

S701

**Start**

S701 — **C?**

Yes (C) → S702: **Encode b0 = 0 according to c_idx**

No (L, E, R, S) → S703: **Encode b0 = 1 according to c_idx**

S704 — **Is immediately previous C?**

Yes (R, S) →

No (L, E, R, S) → S705 — **Either R or S?**

No (L, E) → S707: **Encode b1 = 1 according to c_idx**

Yes (R, S) → S706: **Encode b1 = 0 according to c_idx**

S708 — **S?**

Yes (S) → S710: **Encode b2 = 0 according to c_idx**

No (R) → S709: **Encode b2 = 1 according to c_idx**

S711 — **L?**

Yes (L) → S713: **Encode b2 = 0 according to c_idx**

No (E) → S712: **Encode b2 = 1 according to c_idx**

**End**

EP 4 783 116 A1

# FIG. 40

```
                          Start

                          │  S801
                 ┌─────────────────────┐
                 │     Decode b0        │
                 │  according to c_idx  │
                 └─────────────────────┘
                          │  S802
          Yes (0)    ◇ b0 = 0? ◇    No (1)
    S803  ┌────────────┐              ◇ Is                    No (1)
          │Set type to C│        immediately previous ◇──────────┐
          └────────────┘              C?  S804                   │
                                       │ Yes (1)  S805           │ S806
                              ┌──────────────┐          ┌─────────────────────┐
                              │  Set b1 to 0 │          │     Decode b1        │
                              └──────────────┘          │  according to c_idx  │
                                       │                └─────────────────────┘
                                       │◄───────────────────────┘
                                       │  S807
                              ┌─────────────────────┐
                              │     Decode b2        │
                              │  according to c_idx  │
                              └─────────────────────┘
                                       │  S808
                   Yes (10)    ◇  b1 = 0?  ◇    No (11)
            ◇ b2 = 0? ◇  No (101)          ◇ b2 = 0? ◇  No (111)
              S809                            S810
               │ Yes (100)                     │ Yes (110)
    S812 ┌────────────┐  S811┌────────────┐ S814┌────────────┐ S813┌────────────┐
         │Set type to S│    │Set type to R│    │Set type to L│    │Set type to E│
         └────────────┘     └────────────┘     └────────────┘     └────────────┘

                          End
```

FIG. 41

FIG. 42

Start

S1001
Decode b0 according to c_idx

S1002
b0 = 0?
Yes (0) / No (1)

S1005
Set type to C

S1003
Decode b1 according to c_idx

S1004
b1 = 0?
Yes (10) / No (11)

S1010
Set type to R

S1006
Is immediately previous C?
Yes (11) / No (11)

S1007
Decode b2 according to c_idx

S1008
b2 = 0?
Yes (110) / No (111)

S1011
Set type to S

S1009
Decode b3 according to c_idx

S1012
b3 = 0?
Yes (1110) / No (1111)

S1014
type to E

S1013
type to L

End

FIG. 43

When 3 contexts are used according to second preceding connection type

Table T107-01

| type[1] | R | S | C, L, E |
|---------|---|---|---------|
| idx_1 | 0 | 1 | 2 |

Table T107-02

| type[1] | L | S | C, R, E |
|---------|---|---|---------|
| idx_1 | 0 | 1 | 2 |

Table T107-03

| type[1] | E | S | C, R, L |
|---------|---|---|---------|
| idx_1 | 0 | 1 | 2 |

Table T107-14

| type[1] | C | R | S, L, E |
|---------|---|---|---------|
| idx_1 | 0 | 1 | 2 |

When 2 contexts are used according to second preceding connection type

Table T107-04

| type[1] | S | C, L, E, R |
|---------|---|------------|
| idx_1 | 0 | 1 |

Table T107-05

| type[1] | R | C, S, L, E |
|---------|---|------------|
| idx_1 | 0 | 1 |

When 1 context is used according to second preceding connection type

Table T107-06

| type[1] | C, L, E, R, S |
|---------|---------------|
| idx_1 | 0 |

EP 4 783 116 A1

# FIG. 44

Start

S1101

Set c_idx, each of type[0]
to type[n], and Crun to 0

S1102

(Start)
Loop processing of each triangle

S1103

Determine parameter according to c_idx
and encode/decode type of triangle

S1104

start for loop
for (k = n; k > 0; k--)

S1105

Copy type[k-1] to type[k]

S1106

End for loop

S1107

Set type[0] according
to type of triangle

S1108

Is type of triangle C?

No

Yes

S1109

Add 1 to Crun

S1110

Set Crun to 0

S1111

Set c_idx according to type[0] to
type[n] and Crun

S1112

(End) Loop processing
of each triangle

End

# FIG. 45

When 3 contexts are used according to at least one of the number of consecutive second preceding connection types or the number of consecutive types C

Table T108-01

|  | Crun < TH(0) | TH(0) ≦ Crun < TH(1) | TH(1) ≦ Crun |
|---|---|---|---|
| idx_1 | 0 | 1 | 2 |

Table T108-02

|  | type[1] = R | type[1] ≠ R, and, Crun < TH(1) | TH(1) ≦ Crun |
|---|---|---|---|
| idx_1 | 0 | 1 | 2 |

EP 4 783 116 A1

# FIG. 46

```
                              ┌─────────┐
                              │  Start  │
                              └────┬────┘
                                   │
                                   ▼
                              ╱────────────╲  ─── S1201
                            ╱       Is        ╲
   No (C, L, E, R, S)     ╱    immediately      ╲
   ◄────────────────────  ╲  previous type one of ╱
        │                   ╲     L or E?        ╱
        │ S1202              ╲──────────────────╱
        ▼                          │ Yes (L, E, R, S)
      ╱────╲   No (L, E, R, S)     │
Yes(C)│ C? ├───────────────┐       │
◄─────╲────╱               │       │
  │                        │       │
  ▼ S1203                  ▼ S1204 │
┌──────────────┐   ┌──────────────┐│
│ Encode b0 = 0 │   │ Encode b0 = 1 ││
│ according to  │   │ according to  ││
│    c_idx      │   │    c_idx      ││
└──────┬───────┘   └───────┬──────┘│
       │                   └────────┼──┐
       │                            ▼  ▼
       │                        ╱────────────╲  ─── S1205
       │         Yes (R, S)    ╱              ╲   No (L, E)
       │      ◄───────────────╲  One of R or S? ╱──────────────┐
       │        │              ╲──────────────╱                │
       │        ▼ S1206                                        ▼ S1207
       │  ┌──────────────┐                              ┌──────────────┐
       │  │ Encode b1 = 0 │                              │ Encode b1 = 1 │
       │  │ according to  │                              │ according to  │
       │  │    c_idx      │                              │    c_idx      │
       │  └──────┬───────┘                              └───────┬──────┘
       │         ▼ S1208    No (R)                              ▼ S1211   No (E)
       │       ╱────╲                                         ╱────╲
       │      ╱  S? ╲──────────────┐                         ╱  L? ╲──────────────┐
       │      ╲────╱               │                         ╲────╱               │
       │   Yes(S)│                 │                      Yes(L)│                 │
       │         ▼ S1210           ▼ S1209                      ▼ S1213           ▼ S1212
       │  ┌──────────────┐  ┌──────────────┐            ┌──────────────┐  ┌──────────────┐
       │  │ Encode b2 = 0 │  │ Encode b2 = 1 │            │ Encode b2 = 0 │  │ Encode b2 = 1 │
       │  │ according to  │  │ according to  │            │ according to  │  │ according to  │
       │  │    c_idx      │  │    c_idx      │            │    c_idx      │  │    c_idx      │
       │  └──────┬───────┘  └───────┬──────┘            └───────┬──────┘  └───────┬──────┘
       │         │                  │                           │                 │
       └─────────┴──┐               │                           │                 │
                    ▼               │                           │                 │
              ┌─────────┐           │                           │                 │
              │   End   │◄──────────┴───────────────────────────┴─────────────────┘
              └─────────┘
```

EP 4 783 116 A1

# FIG. 47

## FIG. 48

Start

S1410

For each face, encode connection
type using arithmetic encoding

End

## FIG. 49

Start

S1411

Select context using first
previous connection type

End

## FIG. 50

Start

S1510

For each face, decode connection
type using arithmetic decoding

End

## FIG. 51

Start

S1511

Select context using first
previous connection type

End

## FIG. 52

Start

↓

S1610

For each face, encode connection
type in reverse order

↓

End

## FIG. 53

Start

↓

S1611

Encode information for identifying current
connection type among candidate set
defined according to previous connection type

↓

End

## FIG. 54

Start

↓

S1710

For each face, decode connection
type in reverse order

↓

End

## FIG. 55

Start

↓

S1711

Decode information for identifying current
connection type among candidate set
defined according to previous connection type

↓

End

## INTERNATIONAL SEARCH REPORT

| International application No. |
| --- |
| **PCT/JP2024/032796** |

**A. CLASSIFICATION OF SUBJECT MATTER**

*G06T 9/00*(2006.01)i
FI: G06T9/00

According to International Patent Classification (IPC) or to both national classification and IPC

**B. FIELDS SEARCHED**

Minimum documentation searched (classification system followed by classification symbols)

G06T9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-523602 A (THOMSON LICENSING) 04 October 2012 (2012-10-04) paragraphs [0002]-[0008] | 1-20 |
| A | WO 2004/040517 A1 (FRAUNHOFER GESELLSCHAFT ZUR FORDERUNG DER ANGEWANDTEN FORSCHUNG E.V.) 13 May 2004 (2004-05-13) P. 3, line 17 to p. 6, line 7 | 1-20 |
| A | WO 2023/023411 A1 (INNOPEAK TECH INC.) 23 February 2023 (2023-02-23) paragraphs [0055]-[0059], fig. 1A, 1B | 1-20 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 October 2024** | **29 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

International application No.

**PCT/JP2024/032796**

| Patent document cited in search report | | | Publication date (day/month/year) | Patent family member(s) | | | Publication date (day/month/year) |
|---|---|---|---|---|---|---|---|
| JP | 2012-523602 | A | 04 October 2012 | US | 2012/0019403 | A1 | |
| | | | | paragraphs [0002]-[0009] | | | |
| | | | | WO | 2010/115789 | A1 | |
| | | | | CN | 102388404 | A | |
| | | | | KR | 10-2012-0013945 | A | |
| WO | 2004/040517 | A1 | 13 May 2004 | (Family: none) | | | |
| WO | 2023/023411 | A1 | 23 February 2023 | WO | 2023/039184 | A1 | |
| | | | | WO | 2023/039188 | A1 | |
| | | | | CN | 117897729 | A | |
| | | | | CN | 117897727 | A | |
| | | | | CN | 117897728 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006187015 A

**Non-patent literature cited in the description**

- **JAREK ROSSIGNAC et al.** *3D Compression Made Simple: Edgebreaker on a Corner-Table*, 27 January 2024, https://www.cs.cmu.edu/~alla/edgebreaker_-simple.pdf